(19) Europäisches Patentamt
European Patent Office
Office européen des brevets

(11) EP 0 448 367 B1

(12) **EUROPEAN PATENT SPECIFICATION**

(45) Date of publication and mention of the grant of the patent:
**23.12.1998 Bulletin 1998/52**

(51) Int Cl.$^6$: **G06F 7/52**

(21) Application number: **91302392.5**

(22) Date of filing: **20.03.1991**

# (54) High speed digital parallel multiplier

Digitaler paralleler Hochgeschwindigkeitsmultiplizierer

Multiplicateur numérique parallèle à grande vitesse

(84) Designated Contracting States:
**DE FR GB**

(30) Priority: **20.03.1990 JP 72384/90**
**05.02.1991 JP 13629/91**

(43) Date of publication of application:
**25.09.1991 Bulletin 1991/39**

(73) Proprietor: **FUJITSU LIMITED**
**Kawasaki-shi, Kanagawa 211 (JP)**

(72) Inventor: **Goto, Gensuke**
**Ebina-shi, Kanagawa 243-04 (JP)**

(74) Representative: **Billington, Lawrence Emlyn et al**
**Haseltine Lake & Co.,**
**Imperial House,**
**15-19 Kingsway**
**London WC2B 6UD (GB)**

(56) References cited:
**EP-A- 0 206 762**
**WO-A-90/00773**
**US-A- 4 752 905**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 448 367 B1

## Description

The present invention relates to a multiplier, and more particularly, to a high speed digital parallel multiplier, which is, for example, used as a multiplier block in an integer calculating unit (IU) or a floating-point calculating unit (FPU) incorporated into a microprocessor or a digital signal processor (DSP).

In general, in order to carry out multiplication of an M-bit operand (multiplicand) and an N-bit operand (multiplier) both in a binary form, each of the multiplicand bits is multiplied by each bit of the multiplier to generate a partial product bit at each logical bit position. As a result, a plurality of partial product bits appear at the same logical bit positions, so they are compressed to a final pair of sum and carry bits by way of multi-stage multi-input adders at each logical bit position. Finally, the final pair is input to a carry-propagate adder (CPA) to obtain a product bit at each logical bit position. For this purpose, multi-input adders and partial product (bit) generators are arranged in a two-dimensional plane.

As methods of arrangement of adders, there are two methods; a carry save adder array (CSA) method and a Wallace tree method.

The CSA method processes bits one by one to supply three signals to a v-th stage three-input adder (a one-bit full adder):- one partial product bit, a carry signal from a (v-1)-th stage adder located at a one-bit lower bit position, and a sum signal from a (v-1)-th stage adder located at the same bit position as the v-th stage adder. This is similar to a manual calculation method, where the layout thereof corresponds to the logic and is regular, and therefore, the design of layouts is easy. However, in the CSA method, since the execution time depends upon the number of bits of the multiplier, it is difficult to achieve high speed operation.

On the other hand, in the Wallace tree method, three partial product bit signals are supplied to a first stage one-bit full adder which is called a three-input Wallace tree circuit "3W", the sum signal generated is input to a second stage full adder at the same bit position, and the carry signal is input to a second stage full adder at one-bit higher bit position. Thus each of a second or a higher stage multi-input adder accepts a plurality of sum and carry signals from the lower stage multi-input adders, to compress them to a pair of sum and carry signals at that stage. In the Wallace tree method, although the speed of operation is high, the input-output relationships between the v-th stage adder and the (v-1)-th one are different at each logical bit position.

WO-A-9000773 discloses an M x N-bit multiplier comprising: M multiplicand bit transmission lines arranged obliquely (or step-wise linearly) to a first direction; N multiplier bit transmission lines arranged along a second direction perpendicular to the first direction; and (M+N) x N partial product generators, each provided at one intersection (i,j) between i-th virtual lines along said first direction, i-th column, and j-th multiplier bit transmission lines, j-th row, to generate a partial product bit Pr,j at the (r+j)-th logical bit position.

R(=2) rows of (M+N) first stage S-input adders are provided, where N/S ≤ R ≤ N/S+2, each of the adder rows being arranged between every S partial product generator rows, as well as additional rows of v-th stage multi-input adders, each adder being arranged adjacently to a (v-1)-th adder in a column and compressing pairs of sum and carry signals from (v-1)-th stage multi-input adders all located in the i-th and (i-1)-th columns, no sum signal coming from a (v-1)-th adder located in a different column from the v-th stage multi-input adders. Each of the highest stage multi-input adders produces a final pair of sum and carry signals for generating a product bit at each bit position, the highest stage number geing dependent on the number of R.

The second to the highest stage multi-input adders in addition to sets of S partial product generators and the first stage S-input adders are all located in the i-th column forming one basic cell, and each first stage adder in the cell compresses S partial product bits from generators inside the cell, to generate a pair of a sum signal Si,j and a carry signal Ci,j at the (i+j)-th logical bit position. All the highest stage multi-input adders in the same cell also generate sum and carry signal pairs at each stage at the (i+j)-th logical bit position.

M+N basic cells are arranged in a matrix to form a full array of partial product generators and Wallace tree adders in accordance with the (M+N) x N partial product generator array and the multi-input adder rows, each set of S generators in a basic cell in the i-th column processing a different set of multiplicand bit signals, to make a layout configuration of said array of said multiplier approximately rectangular by inserting dummy sets of S generators and a first stage multi-input adder.

Finally, a carry propagate adder CPA is provided to generate product bits from final pairs of sum and carry signals at each bit position.

In the layout of another prior art high-speed multiplier, the arrangement of the adder is a parallelogram similar to a lozenge which creates empty areas, i.e., useless areas, thus reducing the integration density of the multiplier. In the layout approach described in WO-A-9000773, the empty area is filled by dummy partial product generators and multi-input adders to make the shape of the multiplier rectangular. Although this approach removes empty areas, it requires a large amount of dummy circuits and the area thus laid out remains large. In order to save this kind of dummy area in a high-speed multiplier layout, a new layout scheme is necessary, which will be described later with reference to the present invention. A multiplier whose arrangement is rectangular with no dummy circuits has already been suggested (see: JP-A-55-105732), which will be later explained. This multiplier, however, is based on the carry save adder array, so the speed of operation is far slower than those multipliers based on the Wallace tree method, if N is large. Therefore, it is not suitable for a high speed multiplier with a wide bit width, which is increasingly in demand.

An object of the present invention is to provide a multiplier which is easy to lay out with a high degree of integration and high speed operation without introducing a large amount of dummy circuit units.

According to a first embodiment of the present invention, there is provided an MxN-bit multiplier comprising: M multiplicand bit transmission lines arranged along a first direction; N multiplier bit transmission lines arranged along a second direction perpendicular to the first direction; MxN partial product generators, each provided at an intersection (i,j) between said i-th multiplicand bit transmission line, i-th column, and said j-th multiplier bit transmission line, j-th row, to generate a partial product bit $P_{r,j}$ at the r+j'+th logical bit position; R rows of M first stage S-input multi-input adders, where N/S ≤ R ≤ N/S+2, each of said adder rows being arranged between every S partial product generator rows; said S partial product generators and said first stage S-input adders being located adjacently in the i-th column forming one basic cell and at least one partial product generator in the cell processing the i-th multiplicand bit, and said adder in the cell compressing S partial product bits from generators inside or outside the cell, to generate a pair of sum signal $S_{p,q}$ and a carry signal $C_{p,q}$ at the p+q'th logical bit position; at least one row of higher stage multi-input adders, each v-th stage adder, v ≥ 2, being arranged adjacently to a v-1'+th stage adder in a column and compressing pairs of sum and carry signals from v-1'+th stage multi-input adders, at least one input sum signal coming from a v-1'+th stage adder located in a different column from said v-th stage adder, each of the highest ($v_{mx}$-th) stage multi-input adders producing a final pair of sum and carry signals for generating a product bit at each bit, the number of said stages ($v_{mx}$) being dependent on the number R; MxR basic cells arranged in a matrix to form a main array of partial product generators and divided Wallace tree adders in accordance with said MxN partial product generator array and said multi-input adder rows, each set of S generators in a basic cell in the i-th column processing the same set of multiplicand bit signals including the i-th signal, to make a layout configuration of said array of said multiplier approximately rectangular, said matrix including all the necessary partial product generators in said expanded matrix for obtaining the complete set of product bits; and a carry-propagate adder to generate the product bits from said final pairs of sum and carry signals at each bit.

According to a second embodiment of the present invention, there is provided an MxN bit multiplier comprising: M multiplicand bit transmission lines arranged along a first direction; N1 sets of transmission lines for the k-th order modified Booth decoding signals corresponding to N multiplier bits, arranged along a second direction perpendicular to the first direction, where N/k ≤ N1 ≤ N/k + 1; MxN1 partial product generators, each provided at one intersection (i,j) between said i-th multiplicand bit transmission line, i-th column, and said j-th set of transmission lines, j-th row, to generate a partial product bit $P_{r,j}$ at the r+j-th logical bit position; R rows of M first stage S-input multi-input adders, where N1/S ≤ R ≤ N1/S+2, each of said adder rows being arranged between every S partial product generator rows; said S partial product generators and said first stage S-input adders being located adjacently in the i-th column forming one basic cell and at least one partial product generator in the cell processing the i-th multiplicand bit, and said adder in the cell compressing S partial product bits from generators inside or outside the cell, to generate a pair of a sum signal $S_{p,q}$ and a carry signal $C_{p,q}$ at the p+q-th logical bit position; at least one row of higher stage multi-input adders, each v-th stage adder, v ≥ 2, being arranged adjacently to a v-1+th stage adder in a column and compressing pairs of sum and carry signals from v-1'+th stage multi-input adders, at least one input sum signal coming from a v-1'th stage adder located in a different column from said v-th stage adder, each of the highest ($V_{mx}$-th) stage multi-input adders producing a final pair of sum and carry signals for generating a product bit at each bit, the number of said stages ($V_{mx}$) being dependent on the number R; MxR basic cells arranged in a matrix to form a main array of partial product generators and divided Wallace tree adders in accordance with said MxN1 partial product generator array and said multi-input adder rows, each set of S generators in a basic cell in the i-th column processing the same set of multiplicand bit signals including the i-th signal, to make a layout configuration of said array of said multiplier approximately rectangular, said matrix including all the necessary partial product generators in said expanded matrix for obtaining the complete set of product bits; and a carry-propagate adder to generate the product bits from said final pairs of sum and carry signals at each bit.

In both of the above embodiments of the present invention, the laid out configuration of the main array of the multiplier is rectangular and there is no empty area or extra dummy circuit area in spite of implementing a high-speed multiplier based on the Wallace tree method. This means a compact high-speed multiplier with a high integration density can be realized, based on the present invention. Furthermore, the main array is constructed by repetitive placement of basic cells of the same kind.

For a better understanding of the invention, and to show how the same may be carried into effect, reference will now be made, purely by way of example, to the accompanying drawings in which:

Fig. 1 is a diagram illustrating a prior art multiplication process;

Fig. 2 is a block circuit diagram of an 8-input Wallace tree circuit;

Fig. 3 is a logic circuit diagram of a 3-input Wallace tree circuit (a full adder);

Fig. 4 is a block circuit diagram of an example of 4-input Wallace tree circuit;

Fig. 5 is a logic circuit diagram of another example of 4-input Wallace tree circuit;

Fig. 6 is a schematic block circuit diagram illustrating a prior art multiplier using a 2nd-order modified Booth algorithm;

Fig. 7 is a block circuit diagram illustrating a prior art 22 x 22 bit multiplier using a 2nd-order modified Booth algorithm;

Fig. 8 is a partial detailed block circuit diagram of the circuit of Fig. 7;

Figs. 9A and 9B are block circuit diagrams of the block 3D of Fig. 7;

Fig. 10 is a block circuit diagram of the partial product generator P of Figs. 8, and 9B;

Fig. 11A is a block circuit diagram of the 2nd-order modified Booth decoder;

Fig. 11B is a logic circuit diagram of the 2nd-order modified Booth decoder;

Fig. 12A is a block circuit diagram illustrating another prior art multiplier using a 2nd-order modified Booth algorithm;

Fig. 12B is a logic circuit diagram of the partial product generator P with a full adder of Fig. 12A;

Fig. 13A is a diagram illustrating 8 x 8 bit multiplication using a 2nd-order modified Booth algorithm;

Fig. 13B is a block circuit diagram illustrating a Wallace tree configuration realizing an adder array for the multiplication of Fig. 13A;

Fig. 14 is a block circuit diagram of an 18-input Wallace tree circuit;

Figs. 15A and 15B are block circuit diagrams for explaining the principle of the present invention;

Fig. 16 is a block circuit diagram illustrating an embodiment of the multiplier according to the present invention;

Fig. 17 is a detailed block circuit diagram of the block $6D_3$ of Fig. 16;

Fig. 18 is a diagram of the symbols of the block $6D_3$ of Fig. 16;

Fig. 19 is a block circuit diagram of the block $6D_{3L}$ of Fig. 16;

Fig. 20 is a block circuit diagram of the block $6D_{4H}$ of Fig. 16;

Fig. 21A is a diagram of the symbols of the block $P_h$ of Fig.16;

Fig. 21B is a logic circuit diagram of the block $P_h$ of Fig. 16;

Fig. 22A is a diagram of the symbols of the 2-input Wallace tree circuit 2W of Fig. 16;

Fig. 22B is a logic circuit diagram of the 2-input Wallace Tree circuit 2W of Fig. 16.

Fig. 23 is a block circuit diagram of the block $6E_{3A}$ of Fig. 16;

Fig. 24 is a block circuit diagram of the block $4W_3$ of Fig. 16;

Fig. 25 is a block circuit diagram of the block $4W_{4H}$ of Fig. 16;

Fig. 26 is a block circuit diagram of the block 12G of Fig. 16;

Fig. 27 is a block circuit diagram of the block 12F of Fig. 16;

Fig. 28 is a block circuit diagram of the block $7D_3$.

Figs. 29 and 30 are block circuit diagrams of modifications of the block 3D of Fig. 17;

Fig. 31 is a block circuit diagram of a modification of the block 3D' or 3D" of Fig. 29 or 30;

Figs. 32 and 33 are block circuit diagrams of multipliers combining a plurality of the blocks of Figs. 29 and 30;

Fig. 34 is a block circuit diagram of a pipeline vector processing unit to which the present invention is applied; and

Fig. 35 is a block circuit diagram of the multiplier circuit of Fig. 34.

In Fig. 1, which illustrates a previously tried 8 x 8 bit multiplication process, a multiplicand X is designated by $a_0$ to $a_7$, and a multiplier Y is designated by $b_0$ to $b_7$. Here, X and Y are represented by a complement based on 2, and their most significant bits (MSB) $a_7$ and $b_7$ are sign bits.

First, a partial product $PP_j$ (j = 0 - 7) is obtained multiplying X ($a_7$, $a_6$, ..., $a_0$) by $b_j$ (j = 0 - 7). Then, a final product X·Y is obtained by accumulating partial products $PP_0$, $PP_1$, ..., and $PP_7$. In this case, each sum $Z_i$ (i = 0 - 14) for one bit is calculated, and the sums $Z_i$ (i = 0 - 14) are accumulated.

As illustrated in Fig. 1, in order to calculate sum $Z_i$, an 8-bit input adder, i.e., an 8-input Wallace tree circuit "8W" as illustrated in Fig. 2 is required. This 8-input Wallace tree circuit 8W has six full adder circuits "3W" as illustrated in Fig. 3. Therefore, if the processing time of the full adder (3-input Wallace tree circuit) 3W is $\tau$, the processing time of 8-input Wallace tree circuit 8W is $4\tau$. In Fig. 2, note that references $C_{IN}$ (1, 1), $C_{IN}$ (1, 2), ... designate carry-in signals from the lower bit position, and references $C_{OUT}$ (1, 1), $C_{OUT}$ (1, 2), ... designate carry-out signals to the higher bit position.

Contrary to the above, recently a multi-input adder circuit is divided into units of 4 inputs, so as to repeat the operation of a 4-input Wallace tree circuit "4W" as illustrated in Fig. 4, thus constituting a digital parallel multiplier. In this case, when the multiplier is made of a large scale integrated circuit (LSI), a complex circuit such as an 8-input Wallace tree circuit 8W or other multi-input Wallace tree circuit with more inputs is unnecessary, and the logic and layout of the multiplier is carried out by a relatively simple configuration, thereby reducing the number of design steps. Note that, if the 4-input Wallace tree circuit 4W is constructed as illustrated in Fig. 5, an 8-input adding process can be $3\tau$, thereby increasing the speed of the operation of the entire multiplier.

In order to increase the operation speed of the entire multiplier, a modified Booth algorithm has been suggested as illustrated in Fig. 6, which uses a 2nd-order modified Booth algorithm. In Fig. 6, references $PP_0$, $PP_1$ , $PP_2$ , and $PP_3$ designate partial product generators; $B_0$ , $B_1$ , $B_2$ , and $B_3$ designate 2nd-order Booth (Y) decoders; and AA designates an adder array. Each of the partial product generators $PP_0$ , $PP_1$, $PP_2$ , and $PP_3$ generate 0, ±X, ±2X in response to the outputs of the Y decoders $B_0$ , $B_1$ , $B_2$, and $B_3$, respectively. The resultant outputs of the partial product generators $PP_0$ , $PP_1$ , $PP_2$ , and $PP_3$ are added together at the adder array AA.

According to the Modified Booth algorithm, the number of partial product generators is reduced (see Fig. 1), thereby increasing the speed of the addition operation.

An actual 22 x 22 bit multiplier using a 2nd-order modified Booth algorithm is illustrated in Fig. 7. In Fig. 7, references REGX and REGY designate a multiplicand register for storing a multiplicand X defined by bits $a_0$ to $a_{21}$, and a multiplier register for storing a multiplier Y defined by bits $b_0$ to $b_{21}$. Reference "3D" designates a block formed by three partial product generators P and a 3-input Wallace tree circuit 3W as illustrated in Fig. 8, and "5D" designates a block formed by three partial product generators P, 3-input Wallace tree circuit 3W and a 4-input Wallace tree circuit 4W, as illustrated in Fig. 8. Note that the 3-input Wallace tree circuit 3W and the 4-input Wallace tree circuit 4W of the block 5D serve as a 5-input adder. Also, the block 3D is illustrated in Figs. 9A and 9B, and the partial product generator P is illustrated in Fig. 10.

Also, the Y decoder $B_j$ of Fig. 7, which is called a 2nd-order Booth decoder, is illustrated in Figs. 11A and 11B.

Returning to Fig. 7, CPA designates a carry propagation adder.

As illustrated in Fig. 7, the entire multiplier is parallelogrammic, not rectangular, to create an empty area $E_1$ on the right bottom and an empty area $E_2$ on the left top, i.e., useless areas where circuit elements cannot be arranged are generated, thereby reducing the integration density of the entire multiplier.

In order to avoid this, a convolution method is usually carried out, i.e., the circuit located at the bottom of the empty area $E_2$ is inserted into the empty area $E_1$ , to make the entire multiplier rectangular.

Another method to remove the empty areas like $E_1$ and $E_2$ in Fig. 7 is described in WO-A-9000773, where the empty areas are filled with dummy partial product generators and multi-input adders. The layout of such a multiplier is easy since all the rows consist of a basic cell comprised of two 3D and 5D pairs and a 4W in a case corresponding to that shown in Fig. 7. However, about double the number of 3D and 5D blocks are necessary as compared with the layout in Fig. 7, and the occupied area of such a multiplier remains large.

Another approach to achieve high density of the multiplier blocks is illustrated in Figure 12A as a modification of Fig. 6 (see: Japanese Unexamined Patent Publication (Kokai) No. 55-105732).

In Fig. 12A, partial product generators P are connected by the carry save method. Correction terms are inputted as $V_{DD}$ to some basic cells, so that partial product generators for sign transmission are unnecessary to simplify the multiplier. Note that Fig. 12 illustrates one basic cell (P) composed of the partial product generators and a full adder in Fig. 12B.

In Fig. 12A, although the integration density of the entire multiplier can be improved by using iterative array of basic cells, the speed of the operation is low because of its CSA array structure. Note that the number of adders through which signals pass between the multiplicand register and the adder CPA is 4 at maximum.

On the other hand, if the adder array AA of Fig. 6 is constructed by a Wallace tree configuration, the Wallace tree configuration carries out an addition operation as illustrated in Fig. 13A where an 8 x 8 bit multiplication using a 2nd-order modified Booth algorithm is shown. In Fig. 13A, references $Z_0$ to $Z_8$ designate partial products, $S_0$ to $S_3$ designate correction terms for negative numbers, and "1" designates a correction term for signs. A final product X·Y is represented by $Z_0$ to $Z_{14}$ , and the maximum significant bit $Z_{14}$ designates a sign. In this case, the number of inputs to a Wallace tree circuit is 5 at maximum, and therefore, a Wallace tree configuration as illustrated in Fig. 13B is adopted. That is, a 5-input adder is realized by a 6-input Wallace tree circuit 6W where one input is fixed at "0". By using such a Wallace tree configuration, the number of adders through which signals pass between the multiplicand register and the adder CPA is 3 at maximum, thereby improving the speed of the operation, as compared with the multiplier of Fig. 12A.

In the above-mentioned Wallace tree configuration, however, the circuit is not regular, and therefore, it is difficult to design. Particularly, when designing a multiplier for multi-bit data of 8 x 8 bits or more, the impact of the above-mentioned problem is large. For example, as illustrated in Fig. 14, an 18-input Wallace tree circuit 18W has a large number of connections between full adders (3-input Wallace tree circuit 3W) and partial product generators which generate input signals to the 18A in addition to other connections $C_{IN}$ (1, 1), $C_{IN}$ (1, 2), ..., $C_{OUT}$ (1, 1), $C_{OUT}$ (1, 2), .... between the 18-input Wallace tree circuits 18W. Note that $C_{IN}$ (1, 1), $C_{IN}$ (1, 2), ... designate carry-in signals from the lower bit position, and $C_{OUT}$ (1, 1), $C_{OUT}$ (1, 2), ... designate carry-out signals for the higher bit position.

In the prior art described in US-A-4752905, Wallace tree adder stages, which may be either based on the Booth algorithm or not, are replaced by a combination of the carry save adder array type and the Wallace tree type. By introducing the carry save adder type in the Wallace tree stages, the complexity of the input-output relationships between the v-th stage adders and the (v-1)-th stage ones is reduced, which leads to a simpler wiring among the adders. However, the speed becomes slower, and this approach is not feasible for multipliers of a pure Wallace tree type to which the present invention relates.

In an embodiment of the present invention, instead of a multi-input Wallace tree circuit such as the 18-input Wallace tree circuit 18W of Fig. 14, partial product generators including the 18-input Wallace tree circuit 18W of Fig. 14 are replaced by a block 18D formed by two blocks 9D and a 4-input Wallace tree circuit 4W, as illustrated in Fig. 15A. Note that the block 9D is formed by three blocks 3D and a 6-input Wallace tree circuit 6W, as illustrated in Fig. 15B, and that in the present invention, use is made of the repetition of small scale circuits, to simplify the layout of the multiplier, and also to increase the speed of operation.

The first embodiment of the multiplier according to the present invention, is an M-bit X N-bit multiplier utilizing a bit-by-bit multiplication method without Booth decoding, the divided Wallace tree configuration, and no sign bit expansion to the most significant bit of the product in positive binary numbers. The detail is omitted and only the conditions to realize this kind of multiplier are described in detail.

Fig. 16 illustrates the second embodiment of the multiplier according to the present invention, that is, a 22-bit X 22-bit multiplier utilizing the modified second order Booth algorithm, and the divided Wallace tree configuration. The multiplier is formed by blocks $6D_3$, $6D_{3L}$, $6D_{4H}$, $6E_{3B}$, $6E_{3C}$, $6E_{3L}$, $6E_{4H}$, $4W_3$, 12G, 12F, and a carry propagate adder (CPA). Note that references $B_0$ to $B_{20}$ designate the decoding signal sets from the second order Booth decoders corresponding to the multiplier bits $b_0 \sim b_{21}$. Hereinafter, the details of the multiplier of Fig. 16 will be explained with reference to Figs. 17 through 27.

In Fig. 17, which is a detailed block circuit diagram of the block $6D_3$ in Fig. 16, 6D blocks in three columns, i.e., three bits of the multiplicand, are illustrated. Two rows of basic cells 3D's and a row of a 4W block are arranged in this block 6D. The basic cell 3D consists of three partial product generators and a first stage 3-input adder 3W located in the same column as referred to in the figure. The 4W in the lowest row is a second stage 4-input adder. The 3D(i,j) in an upper row in the i-th column generates a sum signal $S_{i,j}$ and a carry signal $C_{i,j}$ at the (i+j)-th logical bit position as output signals of a first stage adder 3W. All the three output signals, i.e. partial product bit signals, from the partial product generators in 3D(i,j) are input to the first stage adder 3W in the same basic cell as the generators. The 3D(i,j+6) in a lower row in the i-th column generates a sum signal $S_{i,j+6}$ and a carry signal $C_{i,j+6}$ at the (i+j+6)-th logical bit position as output signals of a first stage adder 3W. As the two basic cells, 3D(i,j) and 3D(i,j+6) in the i-th column, generate signals at different logical bit positions, the sum signals thus generated are input to the second stage 4-input adders in different columns from each other. The sum signal $S_{i,j}$ generated in 3D(i,j) is input to a second stage adder 4W in the (i-3)-th column, and the sum signal $S_{i,j+6}$ generated in 3D(i,j+6) is input to a second stage adder in the (i+3)-th column. The same is true for the carry signals.

The above-mentioned layout scheme of the divided Wallace tree method is quite different from the layout in the prior art. For instance, in Fig. 8, the sum signal $S_{i,j}$ generated in 3D(i,j) in the upper row of the i-th column is input to a second stage adder 4W in the same column, and the sum signal $S_{i-6,j+6}$ generated in 3D(i-6,j+6) in the lower row of the i-th column is input to a second stage adder also in the same column. Thus all the basic cells in the i-th column generate such signals which are input to the second stage adder in the i-th column. The same is true for the carry signals.

In the layout scheme embodying the present invention, at least one partial product generator in each basic cell in the i-th column processes the i-th multiplicated bit signal to generate a partial product bit $P_{i,j}$ if the generator is in the j-th column. As the two basic cells in the same column cannot occupy the same row, this means that the partial product generators in the i-th column which process the i-th multiplicand bit, generate product bits mutually different at the logical bit position, and this results in generating sum and carry signal pairs in mutually different logical bit positions by the first stage adders in the basic cells in the same column. Thus the wiring scheme is a little complicated, but the layout rule that at least one partial product generator in the basic cell in the i-th column processes the i-th multiplicand bit (this is the reason why the multiplicand bit transmission lines have to be arranged along a first direction, i.e. a column direction), ensures that the main array of basic cells does not expand up to (M+N) columns, but is limited to M plus a few columns.

On the contrary, in the prior art shown in Fig. 7 and in WO-A-9000773, rows of cell arrays of (M+N) columns are required, though the wiring scheme between the v-th and (v-1)-th stage adders is simpler than that of the present invention. In these cases, the multiplicand bit transmission lines do not have to be arranged along a first direction (in a column direction), because only one partial product generator in the i-th column (in the uppermost row) processes the i-th multiplicand bit, and no other partial product generators in the i-th column process the i-th multiplicand bit, as is seen from Fig. 7 and Fig. 8. The simplicity of the connections between different stage adders is obtained at the cost of larger area associated with a cell array, almost double the area compared with the present invention in the case of M=N.

The wiring scheme based on the present invention is not too complex, because the basic cells are arranged regularly based on a simple rule in a two-dimensional plane. A repetitive set of wiring patterns will suffice for connections between the v-th multi-input adders and the (v-1)-th ones. For instance, the wiring of a sum signal from the first stage 3-input adder 3W in a basic cell 3D in the uppermost row is done by lengthening the signal line by 3 bit positions horizontally toward a lower multiplicand bit position, and then it is drawn vertically to the input terminal of a second stage 4-input adder 4W located in the lowest row in Fig. 17. The carry signal line from the same basic cell is lengthened horizontally by 2 bit positions toward a lower multiplicand bit position and then it is drawn vertically to connect to an input terminal of a 4W located at one bit higher position. The sum signal line from a basic cell in the middle row in the figure is lengthened horizontally by 3 bit positions toward a higher multiplicand bit position and then it is drawn vertically to the input terminal of a second stage 4-input adder 4W located in the lowest row in Fig. 17. The carry signal line from the same basic cell is lengthened horizontally by 3 bit positions toward a higher multiplicand bit position and then it is drawn vertically to connect to an input terminal of a 4W located at one bit higher position. Thus the sum and carry signal lines of two basic cells located adjacently in the same column are extended in mutually opposite horizontal directions to minimize wiring area and length, which may make it possible to draw the lines over the basic cells and to save extra wiring space. The wiring in this case can be done with repetitive wiring patterns in every 3-bit column unit.

A similar wiring scheme is adopted for connecting other stage adders. The wiring in this case can be done with repetitive wiring patterns in units of 6-bit columns. A compact layout, therefore, may be possible even in the presence of wiring lines to connect between different stage adders.

The block $6D_3$* is a modification of the block $6D_3$. That is, in the block $6D_3$*, two signals $a_{i-6}$ and $a_{i-7}$ supplied to the partial product generators P located on the right side of the block $6D_3$ are fixed at "0".

In Fig. 19, which is a detailed block circuit diagram of the block $6D_{3L}$ of Fig. 16, this block $6D_{3L}$ is used for processing the least significant bit. In Fig. 19, a modification is added to the block $6D_3$ of Fig. 17, to add +1 to the addition result when a decoding result by a 2nd-order Booth decoder is negative.

In Fig. 20, which is a detailed block circuit diagram of the block $6D_{4H}$ of Fig. 16, this block $6D_{4H}$ is used for processing the most significant bit. In Fig. 20, a modification is added to the block $6D_3$ of Fig. 17, to process a sign in accordance with a decoding result by a 2nd-order Booth decoder. Note that a block $P_h$ is represented by Fig. 21A and is constructed as shown in Fig. 21B. Also, a 2-input Wallace tree circuit 2W is represented by Fig. 22A and is constructed as shown in Fig. 22B.

Note that there are a few basic cells whose number S is smaller than that of other basic cells in the same row. It depends on the number of partial product bits to be processed in the basic cell, as seen in the two leftmost columns in Fig. 20. That is to say, in the 23rd and the 24th columns, only two partial product generators have to be processed, so the first stage adders are two-input adders 2W, and not 3-input adders. In these columns, there are spaces where no partial product generator is assigned at the intersection of the row and the column, and so these spaces are filled with partial product generators moved from the higher bit column. In the basic cells located in the uppermost row in Fig. 20, such generators are those which produce $P_{21,j+4}$ and $P_{22,j+4}$. BY adopting this scheme, the necessary number of columns to include all the partial product generators for producing the full product bits is reduced, and the occupied area of the multiplier becomes smaller by the reduced number. The number of inputs to the second stage adder 3W in the 24th column is reduced from four to three, as only one first stage adder exists at this logical bit position.

In Fig. 23, which is a detailed block circuit diagram of the block $6E_{3A}$ of Fig. 16, one of the inputs of the lower side Wallace tree circuit 3W of this block is "0" or "1", not the output signal of a partial product generator. That is, because, when adding a decoding result of Booth decoder, a correction process is carried out without extending each decoding output bit to the most significant bit (i.e., 42-th bit) of the product, and therefore, this correction is carried out for the addition of bits higher than the second bit.

In order to carry out a correction calculation, block $6E_{3A}$ , is modified to obtain the block $6E_{3B}$. That is, one input of the lower side Wallace tree circuit 3W located between $a_i$ and $a_{i-2}$ is "0", and one input of the lower side Wallace tree circuit 3W located at the bit $a_{i-1}$ is "1". Also, the $6E_{3A}$ block, is modified to obtain the block $6E_{3C}$. That is, one input of the lower side Wallace tree circuit 3W located between $a_i$ and $a_{i-2}$ is "1", and one input of the lower side Wallace tree circuit 3W located at the bit $a_{i-1}$ is "0". The $6E_{3B}$ and $6E_{3C}$ blocks are alternately arranged. Note that, although one of the inputs of the right upper side Wallace tree circuit 3W is "0", in the block $6E_{3A}$ , output signals from partial product generators are allocated to the Wallace tree circuits 3W in the blocks $6E_{3B}$ and $6E_{3C}$.

The block $6E_{3L}$ is obtained by modifying the block $6E_{3A}$ in the same way as in the modification of the block $6D_3$ to the $6D_{3L}$ block. Also, the block $6E_{4H}$ is obtained by modifying the block $6E_{3A}$ in the same way as in the modification of the block $6D_3$ to the block $6D_{4H}$.

In Fig. 24, which is a detailed circuit diagram of the block $4W_3$ of Fig. 16, the block $4W_3$ is constructed by three 4-input Wallace tree circuits 4W as illustrated in Fig. 4 or 5.

In Fig. 25, which is a detailed circuit diagram of the block $4W_{4H}$ of Fig. 16, the block $4W_{4H}$ is constructed by three 4-input Wallace tree circuits 4W as illustrated in Fig. 4 or 5, and one 3-input Wallace tree circuit 3W as illustrated in Fig. 3.

In Fig. 26, which is a detailed circuit diagram of the block 12G of Fig. 16, the block 12G is constructed by 2-input Wallace tree circuits 2W as illustrated in Figs. 22A and 22B, and 3-input Wallace tree circuit 3W as illustrated in Fig. 3.

In Fig. 27, which is a detailed circuit diagram of the block 12F of Fig. 16, the block 12F is constructed by only connections between the blocks.

In Fig. 16, CPA designates an adder of the carry propagation type which carries out an addition operation for sum signals and carry signals from the Wallace tree circuits such as $4W_3$ in each bit, and obtains a final output.

Note that all the partial product generators are arranged in a 25(=M+3) x 11(=N1=N/k with k=2) basic cell array and 4(=R=N1/S+1 with S=3) rows of first stage 3-input adders, two rows of second stage 4-input adders and a row of third stage 4-input adders are arranged in a matrix of the 22(=M)-bit x 22(=N)-bit multiplier. Furthermore, one partial product generator, the one in the uppermost row, in the basic cell in the i-th column processes the i-th multiplicand bit, at least one sum signal to the v-th stage adder comes from a (v-1)-th stage adder located in a different column from the v-th one, where v=2 and 3, and each set of 3(=S) generators in a basic cell in the i-th column processes the same set of multiplicand bit signals including the i-th, as can be seen in 6D and 6E blocks in the i-th column.

Thus, in the above-mentioned embodiment, most of a multiplier can be laid out only by arranging the blocks $6D_3$ , $6E_{3A}$ , and $4W_3$ and their modified blocks with superpositioned connections, and a correspondence between a logic and a layout is set up in each block. As a result, the design is remarkably easy, as compared with the prior art. Therefore, the layout result does not include redundant areas, so as to increase the integrated density.

Also, since a multi-input adder is divided into 4-input Wallace tree circuits 4W having a high speed, it thereby increases the speed of the operation.

Note that, in the above-mentioned embodiment, although the multi-input adder processes every three bits, the present invention is not limited thereto. For example, in the case of addition for 28 bits, as illustrated in Fig. 28, the inputs are first divided into 3-input and 4-input groups in a $7D_3$ block, and then output signals from these groups are added in the blocks 4W. Then, 28-bit addition by a Wallace tree configuration is carried out for each bit by using four $7D_3$ blocks and three 4W blocks. In case of 32 inputs, 4-input addition blocks are repetitively used.

In Figs. 29 and 30, which are modifications of the block 3D of Fig. 17 and the like, each block 3D' or 3D" is also formed by three partial product generators P and a 3-input Wallace tree circuit 3W. Although the 3-input Wallace tree circuit 3W of the block 3D of Fig. 17 or the like receives three product signals from the three partial product generators P within the same block 3D, the 3-input Wallace tree circuit 3W of the block 3D' or 3D" of Fig. 29 or 30 receives two product signals from the other blocks 3D' or 3D" as well as one product signal from the same block. For this purpose, the same multiplicand bit is supplied to inputs of all the partial product generators P of one block 3D' or 3D". The circuits of Figs. 29 and 30 will be explained in detail below.

In the block 3D' of Fig. 29, a product signal of the upper located partial product generator P is supplied to the 3-input adder 3W of a block separated by two bits (= $2^{k-1}$ where k is the order of the modified Booth algorithm,) in the right direction from the block 3D'. Also, a product signal of the middle located partial product generator P is supplied to the 3-input adder 3W of the same block 3D'. Further, a product signal of the lower located partial product generator P is supplied to the 3-input adder 3W of a block separated by two bits (= $2^{k-1}$) in the left direction from the block 3D'. In other words, a product signal of a block separated by two bits in the left direction and a product signal of a block separated by two bits in the right direction as well as a product signal of the same block 3D' are supplied to the 3-input adder 3W of the block 3D'.

Similarly, in the block 3D" of Fig. 30, a product signal of the upper located partial product generator P is supplied to the 3-input adder 3W of a block separated by four bits (= $2^k$) in the right direction from the block 3D". Also, a product signal of the middle located partial product generator P is supplied to the 3-input adder 3W of a block separated by two bits ($2^{k-1}$) in the right direction from the block 3D". Further, a product signal of the lower located partial product generator P is supplied to the 3-input adder 3W of the same block 3D". In other words, a product signal of a block separated by four bits (= $2^k$) in the left direction and a product signal of a block separated by two bits (= $2^{k-1}$) in the left direction as well as a product signal of the same block 3D" are supplied to the 3-input adder 3W of the block 3D".

Similarly, in a block 3D"' (not shown), a product signal of the lower located partial product generator P is supplied to the 3-input adder 3W of a block separated by four bits (= $2^k$) in the left direction from the block 3D"'. Also, a product signal of the middle located partial product generator P is supplied to the 3-input adder 3W of a block separated by two bits (= $2^{k-1}$) in the direction from the block 3D"'. Further, a product signal of the lower located partial product generator P is supplied to the 3-input adder 3W of the same block 3D"'. In other words, a product signal of a block separated by four bits (= $2^k$) in the right direction and a product signal of a block separated by two bits in the right direction as well as a product signal of the same block 3D"' are supplied to the 3-input adder of the block 3D"'.

The blocks 3D' and 3D" of Figs. 29 and 30 are applied to a block formed by four partial product generators and a 4-input Wallace tree circuit (adder) as illustrated in Fig. 31.

In a block 4D of Fig. 31, a product signal of the first partial product generator P is supplied to the 4-input adder 4W of a block separated by three bits (= 3 x $2^{k-2}$) in the right direction from the block 4D. Also, a product signal of the second partial product generator P is supplied to the 4-input adder 4W of a block separated by one bit ($2^{k-2}$) in the right direction from the block 4D. Further, a product signal of the third partial product generator P is supplied to the 4-input adder 4W of a block separated by one bit (= $2^{k-1}$) in the left direction from the block 4D. Further, a product signal of the fourth partial product generator P is supplied to the 4-input adder 4W of a block separated by three bits (= 3 x $2^{k-2}$) in the left direction from the block 4D. In other words, a product signal of a block separated by three bits in the left direction, a product signal of a block separated by one bit in the left direction a product signal of a block separated by one bit in the right direction, and a product signal of a block separated by three bits in the right direction are supplied to the 4-input adder 4W of the block 4D. Fig. 32 shows a multiplier formed by three rows of the blocks 3D' of Fig. 29. A sum signal of the upper block 3D' is shifted by 6 bits in the right direction, and is supplied to the corresponding 6-input Wallace tree circuit 6W, and a carry-out signal of the upper block 3D' is shifted by 5 bits in the right direction, and is supplied to the corresponding 6-input Wallace tree circuit 6W. Also, a sum signal of the middle block 3D' is not shifted, and is supplied to the corresponding 6-input Wallace tree circuit 6W, and a carry-out signal of the middle block 3D' is shifted by 1 bit in the left direction, and is supplied to the corresponding 6-input Wallace tree circuit 6W. Further, a sum signal of the lower block 3D' is shifted by 6 bits in the left direction, and is supplied to the corresponding 6-input Wallace tree circuit 6W, and a carry-out signal of the lower block 3D' is shifted by 7 bits in the left direction, and is supplied to the corresponding 6-input Wallace tree circuit 6W.

Similarly, three rows of the blocks 3D" of Fig. 30 are combined to form a multiplier as illustrated in Fig. 33. That is, in Fig. 33, a sum signal of the upper block 3D" is shifted by 12 bits in the right direction, and is supplied to the corresponding 6-input Wallace tree circuit 6W, and a carry-out signal of the upper block 3D' is shifted by 11 bits in the right direction, and is supplied to the corresponding 6-input Wallace tree circuit 6W. Also, a sum signal of the middle block 3D" is shifted by 6 bits in the right direction, and is supplied to the corresponding 6-input Wallace tree circuit 6W, and a carry-out signal of the middle block 3D" is shifted by 5 bits in the right direction, and is supplied to the corresponding 6-input Wallace tree circuit 6W. Further, a sum signal of the lower block 3D" is not shifted, and is supplied to the corresponding 6-input Wallace tree circuit 6W, and a carry-out signal of the lower block 3D" is shifted by 1 bit in the left direction, and is supplied to the corresponding 6-input Wallace tree circuit 6W.

In Figs. 32 and 33, all the blocks are the same, but it is possible to combine different types of blocks. For example, the block 3D" of Fig. 33 can be replaced with the block 3D' of Fig. 29. In this case, the sum signals of the upper, middle, and lower blocks 3D' are shifted by 10, 4, and 0 bits, respectively in the right direction, and the carry-out signals of the upper, middle, and lower blocks 3D' are 9, 3 bits in the right direction, and 1 bit in the left direction, respectively.

Also, in Figs. 32 and 33, if the block 4D of Fig. 31 is used, a sum signal of an upper block is shifted by 16 bits in the right direction, and is supplied to the corresponding 6-input adder 6W. Also, a carry-out signal is shifted by 15 bits in the right direction and is supplied to the corresponding 6-input adder 6W. The same thing applies to the other blocks.

In the above-mentioned embodiment, although the use of a 2nd order modified Booth algorithm is a premise, a higher-order modified Booth algorithm such as a three-bit Booth algorithm, or a method for directly multiplying a multiplier with a multiplicand can be applied.

As explained above, according to the present invention, the layout of the entire multiplier can be a rectangle to increase the density of integration and to increase the speed of operation. Also, since the correspondence between logic and layout is easy, the design of multipliers can be easily made.

Note that the multiplier according to the present invention can be manufactured by one integrated circuit (IC) chip.

The multiplier according to the present invention can be used advantageously in a multiplication block of an integer calculating unit (IU) or a floating-point calculating unit (FPU) incorporated in a microprocessor or a digital signal processing unit (DSP). If a multiplier is large due to the small integration density, it is impossible to incorporate all of such a multiplier into the above-mentioned units. For example, in order to carry out a 54 x 54 bit multiplication, a 54 x 27 bit multiplier for a multiplication of a mantissa is incorporated into the unit, to repeat the operation of the multiplier twice. As a result, the multiplication time is twice as long as addition time or subtraction time. In this regard, since the multiplier according to the present invention is of a rectangular configuration having a regular arrangement including connections, to have a high density of integration. The multiplier according to the present invention can be optimized for such a 54 x 54 bit multiplier so that the multiplication time is the same as the addition time or the subtraction time.

For example, the multiplier according to the present invention is applied to a pipeline vector processor unit as illustrated in Fig. 34. In Fig. 34, the pipeline vector processor unit is connected between an external memory 3401 and a central processing unit (CPU) or the integer calculation unit (IU) 3409. The pipeline vector processor includes a pipeline load unit 3402, a pipeline store unit 3403, a bus 3404, a vector register/scalar register 3405, addition calculation blocks 3406 and 3407, and a control unit 3408. The calculation block 3406 includes an addition/subtraction circuit (ADD) and a shift circuit (SFT), and the calculation block 3407 includes a multiplier circuit (MPY) and a division circuit (DIV).

When a multiplication is carried out, a vector multiplication instruction is supplied from the CPU 3409 to the control unit 3408. In this case, operand data (multiplicands and multipliers) required for such a multiplication is fetched by a load instruction of the CPU 3409 from the external memory 3401 and is stored via the pipeline load unit 3402 in the vector register of the vector unit/scalar unit 3405. Upon detection of such data being stored in the vector register, the control unit 3408 operates the multiplier circuit (MPY) via multiplexers MUX, so that a multiplication result is again stored in the vector register. In this state, upon receipt of a store instruction of the CPU 3409, the control unit 3408 moves the multiplication result from the vector register via the pipeline store unit 3403 to the external memory 3401. Note that, if the capacity of the vector register is large, a calculation such as multiplication can be carried out without fetching from the external memory 3401, to increase the speed of operation.

The multiplier circuit of Fig. 34 is illustrated in more detail in Fig. 35. In Fig. 35, 3501 and 3502 designate registers for receiving operand 1 and operand 2, respectively, 3503 a sign/exponent alignment, 3504 an adder, 35 a subtracter, 3506 an incrementer, 3507 an overflow detector, 3508 a mantissa alignment, 3509 a Booth decoder, 3510 a Booth selector and Wallace tree circuit, 3511 a carry propagation adder (CPA), 3512 a normalizing/rounding circuit, 3513 a sign register, and 3514 a register. The present invention relates to the Booth selector and Wallace tree configuration 3510.

## Claims

**1.** An MxN-bit multiplier comprising:

M multiplicand bit transmission lines arranged ($a_0$,$a_1$,...) along a first direction (X);
N multiplier bit transmission lines ($b_0$,$b_1$,...) arranged along a second direction (Y)) perpendicular to the first direction;
MxN partial product generators (P), each provided at an intersection (i,j) between said i-th multiplicand bit transmission line, i-th column, and said j-th multiplier bit transmission line, j-th row, to generate a partial product bit $P_{r,j}$ at the r+j'+th logical bit position;
R rows of M first stage S-input multi-input adders (4W), where $N/S \leq R \leq N/S+2$, each of said adder rows being arranged between every S partial product generator rows;
said S partial product generators and said first stage S-input adders being located adjacently in the i-th column forming one basic cell and at least one partial product generator in the cell processing the i-th multiplicand bit, and said adder in the cell compressing S partial product bits from generators inside or outside the cell, to generate a pair of sum signal $S_{p,q}$ and a carry signal $C_{p,q}$ at the p+q'+th logical bit position;
at least one row of higher stage multi-input adders (4W,6W), each v-th stage adder, $v \geq 2$, being arranged adjacently to a v-1'+th stage adder in a column and compressing pairs of sum and carry signals from v-1'+th stage multi-input adders, at least one input sum signal coming from a v-1'+th stage adder located in a different column from said v-th stage adder, each of the highest ($v_{mx}$-th) stage multi-input adders producing a final pair of sum and carry signals for generating a product bit at each bit, the number of said stages ($v_{mx}$) being dependent on the number R;
MxR basic cells arranged in a matrix to form a main array of partial product generators (P) and divided Wallace tree adders (2W,3W,4W) in accordance with said MxN partial product generator array and said multi-input adder rows, each set of S generators in a basic cell in the i-th column processing the same set of multiplicand bit signals including the i-th signal, to make a layout configuration of said array of said multiplier approximately rectangular, said matrix including all the necessary partial product generators (P) in said expanded matrix for obtaining the complete set of product bits;
and a carry-propagate adder (CPA) to generate the product bits from said final pairs of sum and carry signals at each bit.

**2.** An MxN bit multiplier comprising:

M multiplicand bit transmission lines ($a_0$,$a_1$,...) arranged along a first direction (X);
N1 sets of transmission lines (Bj) for the k-th order modified Booth decoding signals corresponding to N multiplier bits, arranged along a second direction (Y) perpendicular to the first direction, where $N/k \leq N1 \leq N/k + 1$;
MxN1 partial product generators (P), each provided at one intersection (i,j) between said i-th multiplicand bit transmission line, i-th column, and said j-th set of transmission lines, j-th row, to generate a partial product bit $P_{r,j}$ at the r+j'+th logical bit position;
R rows of M first stage S-input multi-input adders (4W), where $N1/S \leq R \leq N1/S+2$, each of said adder rows being arranged between every S partial product generator rows;
said S partial product generators (P) and said first stage S-input adders (4W) being located adjacently in the i-th column forming one basic cell and at least one partial product generator in the cell processing the i-th multiplicand bit, and said adder in the cell compressing S partial product bits from generators inside or outside the cell, to generate a pair of a sum signal $S_{p,q}$ and a carry signal $C_{p,q}$ at the p+q'+th logical bit position;

at least one row of higher stage multi-input adders (4W,6W), each v-th stage adder, v ≥ 2, being arranged adjacently to a v-1'+th stage adder in a column and compressing pairs of sum and carry signals from v-1+th stage multi-input adders, at least one input sum signal coming from a v-1'th stage adder located in a different column from said v-th stage adder, each of the highest ($V_{mx}$-th) stage multi-input adders producing a final pair of sum and carry signals for generating a product bit at each bit, the number of said stages ($V_{mx}$) being dependent on the number R;

MxR basic cells arranged in a matrix to form a main array of partial product generators (P) and divided Wallace tree adders (2W,3W,4W) in accordance with said MxN1 partial product generator array and said multi-input adder rows, each set of S generators in a basic cell in the i-th column processing the same set of multiplicand bit signals including the i-th signal, to make a layout configuration of said array of said multiplier approximately rectangular, said matrix including all the necessary partial product generators (P) in said expanded matrix for obtaining the complete set of product bits;

and a carry-propagate adder (CPA) to generate the product bits from said final pairs of sum and carry signals at each bit.

**3.** A multiplier as set forth in claim 1 or 2, wherein at least one basic cell has a number S smaller than that of other basic cells in the same row, depending on the number of partial product bits to be processed in the basic cell.

**4.** A multiplier as set forth in any of claims 1 to 3, wherein all the S partial product generators (P) in each basic cell in the i-th column process the i-th multiplicand bit signal, and S partial product bit signals thus generated, $P_{i,j1}$, $P_{i,j2}$ ..., $P_{i,js}$, are input to respectively different first stage S-input adders in the same row.

**5.** A multiplier as set forth in any of claims 1 to 4, wherein only one partial product bit signal, $P_{i,j}$ in the j-th row, is input to the first stage S-input adder (4W) in the same basic cell, to generate a signal pair of $S_{i,j}$ and $C_{i,j}$ at the i+j'-th logical bit position.

**6.** A multiplier as set forth in claim 1 or 2, wherein only one of the S partial product generators (P) in each basic cell in the i-th column processes the i-th multiplicand bit signal to generate $P_{i,j}$ when said one partial product generator is in the j-th row, and the other S-1 partial product generators process the i-1'+th, the i-2'+th, the i-3'+th ..., and the i-(S-1)'th signals, respectively, whereby all S partial product bit signals thus generated, $P_{i,j1}$, $P_{i-1,j+1}$, ..., $P_{i-S+1,j+S-1}$, are input to the first stage S-input adders (4W) in the same basic cell, to generate a signal pair of $S_{i,j}$ and $C_{i,j}$ at the i+j'th logical bit position.

**7.** A multiplier as set forth in claim 2, wherein only one of the S partial product generators (P) in each basic cell in the i-th column processes the i-th multiplicand bit signal to generate $P_{i,j}$ when said one partial product generator is in the j-th row and the other S-1 partial product generators process the i-k'+ th, the i-2k'+th, the i-3k'+th, ..., and the i-(S-1)k'+th signals, respectively, whereby all S partial product bit signals thus generated, $P_{i,j}$, $P_{i-k,j+k}$, ..., $P_{i-k\cdot S+k,j+k\cdot S-k}$, are input to the first stage S-input adders in the same basic cell, to generate a signal pair of $S_{i,j}$ and $C_{i,j}$ at the i+j'+th logical bit position.

**8.** A multiplier as set forth in any preceding claim, wherein one sum signal to the v-th stage multi-input adder (4W) in the il-th column comes from the v-i'+th stage multi-input adder in the i2-th column, and another input signal to the same v-th stage adder comes from the v-1'+th stage adder in the i3-th column, where i1 ≥ 0,i2>i1+1 and i3<i1-1.

**9.** A multiplier as set forth in claim 8, wherein the following relationships among i1, i2 and i3 hold for the v-th and the v-1'-th stage multi-input adders (4W, 6W) in said array;

$$i2 = i1 + i0,$$

$$i3 = i1 - i0,$$

and

$$i0>1.$$

**10.** A multiplier as set forth in claim 9, wherein said value of i0 is dependent on v and i0 is larger for a larger v value.

**11.** A multiplier as set forth in claim 1 or 2, modified in that some of said basic cells comprise less than S partial product generators and a corresponding multi-input adder so as to reduce the necessary number of columns to include all the partial product generators for producing the complete set of product bits, output signals of the two types of basic cells being input to one of said v-th stage multi-input adders (4W,6W) to thereby generate signals of the corresponding bit position.

**Patentansprüche**

1. M×N-Bit-Multiplizierer, der umfaßt:

M Multiplikandenbitübertragungsleitungen ($a_0$, $a_1$, ...), die längs einer ersten Richtung (X) angeordnet sind;
N Multiplikatorbitübertragungsleitungen ($b_0$, $b_1$, ...), die längs einer zweiten Richtung (Y) angeordnet sind, die zu der ersten Richtung rechtwinklig ist;
MxN Teilproduktgeneratoren (P), die jeweils an einem Schnittpunkt (i,j) zwischen der i-ten Multiplikandenbitübertragungsleitung, der i-ten Spalte, und der j-ten Multiplikatorbitübertragungsleitung, der j-ten Reihe, vorgesehen sind, um ein Teilproduktbit $P_{r,j}$ an der r+j-ten logischen Bitposition zu erzeugen;
R Reihen von M Multieingangsaddierern mit S Eingängen der ersten Stufe (4W), wobei $N/S \leq R \leq N/S+2$ ist und jede der Addiererreihen immer zwischen S Teilproduktgeneratorreihen angeordnet ist;
wobei die S Teilproduktgeneratoren und die Addierer mit S Eingängen der ersten Stufe, die in der i-ten Spalte aneinandergrenzend angeordnet sind, eine Basiszelle bilden und wenigstens ein Teilproduktgenerator in der Zelle das i-te Multiplikandenbit verarbeitet und der Addierer in der Zelle S Teilproduktbits von Generatoren innerhalb oder außerhalb der Zelle komprimiert, um ein Paar von einem Summensignal $S_{p,q}$ und einem Übertragssignal $C_{p,q}$ an der p+q-ten logischen Bitposition zu erzeugen;
wenigstens eine Reihe von Multieingangsaddierern einer höheren Stufe (4W, 6W), wobei jeder Addierer der v-ten Stufe, $v \geq 2$, angrenzend an einen Addierer der v-1-ten Stufe in einer Spalte angeordnet ist und Paare von Summen- und Übertragssignalen von Multieingangsaddierern der v-1-ten Stufe komprimiert, wobei wenigstens ein Eingangssummensignal von einem Addierer der v-1-ten Stufe kommt, der in einer anderen Spalte als der genannte Addierer der v-ten Stufe angeordnet ist, jeder der Multieingangsaddierer der höchsten ($v_{mx}$-ten) Stufe ein Endpaar von Summen- und Übertragssignalen bildet, zum Erzeugen eines Produktbits bei jedem Bit, wobei die Anzahl der Stufen ($v_{mx}$) von der Anzahl R abhängt;
M×R-Basiszellen, die in einer Matrix angeordnet sind, um ein Hauptarray aus Teilproduktgeneratoren (P) und geteilten Wallace-Baumaddierern (2W, 3W, 4W) gemäß dem M×N-Teilproduktgeneratorarray und den Reihen von Multieingangsaddierern zu bilden, wobei jeder Satz von S Generatoren in einer Basiszelle in der i-ten Spalte denselben Satz von Multiplikandenbitsignalen verarbeitet, die das i-te Signal enthalten, um eine Layoutkonfiguration des Arrays des Multiplizierers etwa rechteckig zu machen, wobei die Matrix all die erforderlichen Teilproduktgeneratoren (P) in der erweiterten Matrix zum Erhalten des kompletten Satzes von Produktbits enthält;
und einen Übertragsausbreitungsaddierer (CPA), um die Produktbits aus den Endpaaren von Summen- und Übertragssignalen bei jedem Bit zu erzeugen.

2. M×N-Bit-Multiplizierer, der umfaßt:

M Multiplikandenbitübertragungsleitungen ($a_0$, $a_1$, ...), die längs einer ersten Richtung (X) angeordnet sind;
N1 Sätze von Übertragungsleitungen (Bj) für die abgewandelten Booth-Decodiersignale k-ter Ordnung, die N Multiplikatorbits entsprechen, die längs einer zweiten Richtung (Y) angeordnet sind, die zu der ersten Richtung rechtwinklig ist, wobei $N/k \leq N1 \leq N/k + 1$ ist;
MxNl Teilproduktgeneratoren (P), die jeweils an einem Schnittpunkt (i,j) zwischen der i-ten Multiplikandenbitübertragungsleitung, der i-ten Spalte, und dem j-ten Satz von Übertragungsleitungen, der j-ten Reihe, vorgesehen sind, um ein Teilproduktbit $P_{r,j}$ an der r+j-ten logischen Bitposition zu erzeugen;
R Reihen von M Multieingangsaddierern mit S Eingängen der ersten Stufe (4W), wobei $N1/S \leq R \leq N1/S+2$ ist und jede der Addiererreihen immer zwischen S Teilproduktgeneratorreihen angeordnet ist;
wobei die S Teilproduktgeneratoren (P) und die Addierer mit S Eingängen der ersten Stufe (4W), die in der i-ten Spalte aneinandergrenzend angeordnet sind, eine Basiszelle bilden und wenigstens ein Teilproduktgenerator in der Zelle das i-te Multiplikandenbit verarbeitet und der Addierer in der Zelle S Teilproduktbits von Generatoren innerhalb oder außerhalb der Zelle komprimiert, um ein Paar von einem Summensignal $S_{p,q}$ und einem Übertragssignal $C_{p,q}$ an der p+q-ten logischen Bitposition zu erzeugen;
wenigstens eine Reihe von Multieingangsaddierern einer höheren Stufe (4W, 6W), wobei jeder Addierer der v-ten Stufe, $v \geq 2$, angrenzend an einen Addierer der v-1-ten Stufe in einer Spalte angeordnet ist und Paare von Summen- und Übertragssignalen von Multieingangsaddierern der v-1-ten Stufe komprimiert, wobei wenigstens ein Eingangssummensignal von einem Addierer der v-1-ten Stufe kommt, der in einer anderen Spalte als der genannte Addierer der v-ten Stufe angeordnet ist, jeder der Multieingangsaddierer der höchsten ($v_{mx}$-ten) Stufe ein Endpaar von Summen- und Übertragssignalen bildet, zum Erzeugen eines Produktbits bei jedem Bit, wobei die Anzahl der Stufen ($v_{mx}$) von der Anzahl R abhängt;

MxR-Basiszellen, die in einer Matrix angeordnet sind, um ein Hauptarray aus Teilproduktgeneratoren (P) und geteilten Wallace-Baumaddierern (2W, 3W, 4W) gemäß dem M×N1-Teilproduktgeneratorarray und den Reihen von Multieingangsaddierern zu bilden, wobei jeder Satz von S Generatoren in einer Basiszelle in der i-ten Spalte denselben Satz von Multiplikandenbitsignalen verarbeitet, die das i-te Signal enthalten, um eine Layoutkonfiguration des Arrays des Multiplizierers etwa rechteckig zu machen, wobei die Matrix all die erforderlichen Teilproduktgeneratoren in der erweiterten Matrix zum Erhalten des kompletten Satzes von Produktbits enthält;

und einen Übertragsausbreitungsaddierer (CPA), um die Produktbits aus den Endpaaren von Summen- und Übertragssignalen bei jedem Bit zu erzeugen.

**3.** Multiplizierer nach Anspruch 1 oder 2, bei dem wenigstens eine Basiszelle eine Anzahl S hat, die kleiner als jene von anderen Basiszellen in derselben Reihe ist, in Abhängigkeit von der Anzahl von Teilproduktbits, die in der Basiszelle zu verarbeiten sind.

**4.** Multiplizierer nach irgendeinem der Ansprüche 1 bis 3, bei dem alle S Teilproduktgeneratoren (P) in jeder Basiszelle in der i-ten Spalte das i-te Multiplikandenbitsignal verarbeiten und so erzeugte S Teilproduktbitsignale $P_{i,j1}$, $P_{i,j2}$ ..., $P_{i,js}$ jeweilig verschiedenen Addierern mit S Eingängen der ersten Stufe in derselben Reihe eingegeben werden.

**5.** Multiplizierer nach irgendeinem der Ansprüche 1 bis 4, bei dem nur ein Teilproduktbitsignal, $P_{i,j}$ in der j-ten Reihe, dem Addierer mit S Eingängen der ersten Stufe (4W) in derselben Basiszelle eingegeben wird, um ein Signalpaar von $S_{i,j}$ und $C_{i,j}$ an der i+j-ten logischen Bitposition zu erzeugen.

**6.** Multiplizierer nach Anspruch 1 oder 2, bei dem nur einer der S Teilproduktgeneratoren (P) in jeder Basiszelle in der i-ten Spalte das i-te Multiplikandenbitsignal verarbeitet, um $P_{i,j}$ zu erzeugen, wenn der eine Teilproduktgenerator in der j-ten Reihe ist, und die anderen S-1 Teilproduktgeneratoren die i-1-ten, die i-2-ten, die i-3-ten ... bzw. die i-(S-1)-ten Signale verarbeiten, wodurch alle so erzeugten S Teilproduktbitsignale $P_{i,j1}$, $P_{i-1,j+1}$, ..., $P_{i-s+1,j+s-1}$ den Addierern mit S Eingängen der ersten Stufe (4W) in derselben Basiszelle eingegeben werden, um ein Signalpaar von $S_{i,j}$ und $C_{i,j}$ an der i+j-ten logischen Bitposition zu erzeugen.

**7.** Multiplizierer nach Anspruch 2, bei dem nur einer der S Teilproduktgeneratoren (P) in jeder Basiszelle in der i-ten Spalte das i-te Multiplikandenbitsignal verarbeitet, um $P_{i,j}$ zu erzeugen, wenn der eine Teilproduktgenerator in der j-ten Reihe ist, und die anderen S-1 Teilproduktgeneratoren die i-k-ten, die i-2k-ten, die i-3k-ten, ... bzw. die i-(S-1)k-ten Signale verarbeiten, wodurch alle so erzeugten S Teilproduktbitsignale $P_{i,j}$, $P_{i-k,j+k}$, ..., $P_{i-k-S+k,j+k-S-k}$ den Addierern mit S Eingängen der ersten Stufe in derselben Basiszelle eingegeben werden, um ein Signalpaar von $S_{i,j}$ und $C_{i,j}$ an der i+j-ten logischen Bitposition zu erzeugen.

**8.** Multiplizierer nach irgendeinem vorhergehenden Anspruch, bei dem ein Summensignal für den Multieingangsaddierer der v-ten Stufe (4W) in der i1-ten Spalte von dem Multieingangsaddierer der v-1-ten Stufe in der i2-ten Spalte kommt und ein anderes Eingangssignal für denselben Addierer der v-ten Stufe von dem Addierer der v-1-ten Stufe in der i3-ten Spalte kommt, wobei $i1 \geq 0$, $i2 > i1+1$ und $i3 < i1-1$ ist.

**9.** Multiplizierer nach Anspruch 8, bei dem die folgenden Beziehungen zwischen i1, i2 und i3 für die Multieingangsaddierer der v-ten und der v-1-ten Stufe (4W, 6W) in dem Array gelten:

$$i2 = i1 + i0,$$

$$i3 = i1 - i0$$

und

$$i0 > 1.$$

**10.** Multiplizierer nach Anspruch 9, bei dem der Wert von i0 von v abhängig ist und i0 bei einem größeren v-Wert größer ist.

**11.** Multiplizierer nach Anspruch 1 oder 2, der dahingehend abgewandelt ist, daß einige der Basiszellen weniger als S Teilproduktgeneratoren und einen entsprechenden Multieingangsaddierer umfassen, um die erforderliche Anzahl von Spalten zum Aufnehmen aller Teilproduktgeneratoren zum Erzeugen des kompletten Satzes von Produktbits zu reduzieren, wobei Ausgangssignale der zwei Typen von Basiszellen einem der Multieingangsaddierer der v-ten Stufe (4W, 6W) eingegeben werden, um dadurch Signale der entsprechenden Bitposition zu erzeugen.

**Revendications**

**1.** Un multiplieur de M × N bits comprenant :

M conducteurs de transmission de bit de multiplicande ($a_0$, $a_1$, ...) disposés selon une première direction (X);
N conducteurs de transmission de bit de multiplicateur ($b_0$, $b_1$, ...) disposés selon une seconde direction (Y) perpendiculaire à la première direction;
M × N générateurs de produit partiel (P), chacun d'eux étant placé à une intersection (i, j) entre le conducteur de transmission de bit de multiplicande de rang i, c'est-à-dire une colonne de rang i, et le conducteur de transmission de bit de multiplicateur de rang j, c'est-à-dire une ligne de rang j, pour générer un bit de produit partiel $P_{r,j}$ à la position de bit logique de rang r+j;
R lignes de M additionneurs à entrées multiples à S entrées du premier étage (4W), avec $N/S \leq R \leq N/S+2$, chacune de ces lignes d'additionneurs étant disposée entre chacune des S lignes de générateurs de produit partiel;
les S générateurs de produit partiel et les additionneurs à S entrées du premier étage qui sont placés de façon adjacente dans la colonne de rang i formant une cellule de base et au moins un générateur de produit partiel dans la cellule traitant le bit de multiplicande de rang i, et l'additionneur dans la cellule compressant S bits de produit partiel provenant de générateurs à l'intérieur ou à l'extérieur de la cellule, pour générer une paire d'un signal de somme $S_{p,q}$ et d'un signal de retenue $C_{p,q}$ à la position de bit logique de rang p+q;
au moins une ligne d'additionneurs à entrées multiples d'un étage supérieur (4W, 6W), chaque additionneur d'étage de rang v, avec $v \geq 2$, étant disposé de façon adjacente à un additionneur d'un étage de rang v-1 dans une colonne, et compressant des paires de signaux de somme et de retenue provenant d'additionneurs à entrées multiples d'un étage de rang v-1, au moins un signal de somme d'entrée provenant d'un additionneur d'un étage de rang v-1 qui est placé dans une colonne différente par rapport à l'additionneur de l'étage de rang v, chacun des additionneurs à entrées multiples de l'étage le plus élevé (de rang $v_{mx}$) produisant une paire finale de signaux de somme et de retenue, pour générer un bit de produit à chaque bit, le nombre des étages ($v_{mx}$) dépendant du nombre R;
M × R cellules de base disposées en une matrice pour former un réseau principal de générateurs de produit partiel (P) et d'additionneurs à arbre de Wallace divisés (2W, 3W, 4W), conformément au réseau de M × N générateurs de produit partiel et aux lignes d'additionneurs à entrées multiples, chaque jeu de S générateurs dans une cellule de base dans la colonne de rang i traitant le même jeu de signaux de bit de multiplicande comprenant le signal de rang i, pour faire en sorte qu'une configuration d'implantation du réseau du multiplieur soit approximativement rectangulaire, la matrice comprenant tous les générateurs de produit partiel (P) qui sont nécessaires dans la matrice développée pour obtenir le jeu complet de bits de produit;
et un additionneur à propagation de retenue (CPA) pour générer les bits de produit à partir des paires finales précitées des signaux de somme et de retenue à chaque bit.

**2.** Un multiplieur de M × N bits comprenant :

M conducteurs de transmission de bit de multiplicande ($a_0$, $a_1$, ...) disposés selon une première direction (X);
N1 jeu de conducteurs de transmission (Bj) pour les signaux de décodage de Booth modifiés du k-ième ordre correspondant à N bits de multiplicateur, disposés selon une seconde direction (Y) perpendiculaire à la première direction, avec $N/k \leq N1 \leq N/k + 1$;
M × N1 générateurs de produit partiel (P), chacun d'eux étant placé à une intersection (i, j) entre le conducteur de transmission de bit de multiplicande de rang i, c'est-à-dire une colonne de rang i, et le jeu de conducteurs de transmission de rang j, c'est-à-dire une ligne de rang j, pour générer un bit de produit partiel $P_{r,j}$ à la position de bit logique de rang r+j;
R lignes de M additionneurs à entrées multiples à S entrées du premier étage (4W), avec $N1/S \leq R \leq N1/S+2$, chacune de ces lignes d'additionneurs étant disposée entre chacune des S lignes de générateurs de produit partiel;
les S générateurs de produit partiel (P) et les additionneurs à S entrées du premier étage (4W) qui sont placés de façon adjacente dans la colonne de rang i formant une cellule de base, et au moins un générateur de produit partiel dans la cellule traitant le bit de multiplicande de rang i, et l'additionneur dans la cellule compressant S bits de produit partiel provenant de générateurs à l'intérieur ou à l'extérieur de la cellule, pour générer une paire d'un signal de somme $S_{p,q}$ et d'un signal de retenue $C_{p,q}$ à la position de bit logique de rang p+q;

au moins une ligne d'additionneurs à entrées multiples d'étage supérieur (4W, 6W), chaque additionneur de l'étage de rang v, avec $v \geq 2$, étant disposé de façon adjacente à un additionneur de l'étage de rang v-1 dans une colonne, et compressant des paires de signaux de somme et de retenue provenant d'additionneurs à entrées multiples de l'étage de rang v-1, au moins un signal de somme provenant d'un additionneur de l'étage de rang v-1 qui est placé dans une colonne différente de celle de l'additionneur de l'étage de rang v, chacun des additionneurs à entrées multiples de l'étage le plus élevé (de rang $V_{mx}$) produisant une paire finale de signaux de somme et de retenue pour générer un bit de produit à chaque bit, le nombre des étages ($V_{mx}$) dépendant du nombre R;

M × R cellules de base disposées en une matrice pour former un réseau principal de générateurs de produit partiel (P) et d'additionneurs à arbre de Wallace divisés (2W, 3W, 4W), conformément au réseau de M × N1 générateurs de produit partiel et aux lignes d'additionneurs à entrées multiples, chaque jeu de S générateurs dans une cellule de base dans la colonne de rang i traitant le même jeu de signaux de bit de multiplicande comprenant le signal de rang i, pour faire en sorte qu'une configuration d'implantation du réseau du multiplieur soit approximativement rectangulaire, la matrice comprenant tous les générateurs de produit partiel (P) qui sont nécessaires dans la matrice développée pour obtenir le jeu complet de bits de produit;

et un additionneur à propagation de retenue (CPA) pour générer les bits de produit à partir des paires finales précitées de signaux de somme et de retenue à chaque bit.

**3.** Un multiplieur selon la revendication 1 ou 2, dans lequel au moins une cellule de base a un nombre S inférieur à celui d'autres cellules de base dans la même ligne, sous la dépendance du nombre de bits de produit partiel à traiter dans la cellule de base.

**4.** Un multiplieur selon l'une quelconque des revendications 1 à 3, dans lequel les S générateurs de produit partiel (P) dans chaque cellule de base dans la colonne de rang i traitent tous le signal de bit de multiplicande de rang i, et S signaux de bit de produit partiel qui sont ainsi générés, $P_{i,j1}$, $P_{i,j2}$, ..., $P_{i,jS}$ sont appliqués à des additionneurs à S entrées du premier étage, respectivement différents, dans la même ligne.

**5.** Un multiplieur selon l'une quelconque des revendications 1 à 4, dans lequel un seul signal de bit de produit partiel, $P_{i,j}$ dans la ligne de rang j, est appliqué à l'additionneur à S entrées du premier étage (4W) dans la même cellule de base, pour générer une paire de signaux de $S_{i,j}$ et $C_{i,j}$ à la position de bit logique de rang i+j.

**6.** Un multiplieur selon la revendication 1 ou 2, dans lequel un seul des S générateurs de produit partiel (P) dans chaque cellule de base dans la colonne de rang i traite le signal de bit de multiplicande de rang i pour générer $P_{i,j}$, lorsque le générateur de produit partiel précité est dans la ligne de rang j, et les S-1 autres générateurs de produit partiel traitent respectivement les signaux de rangs i-1, i-2, i-3, ... et i-(S-1), grâce à quoi les S signaux de bit de produit partiel qui sont ainsi générés, $P_{i,j1}$, $P_{i-1,j+1}$, ..., $P_{i-S+1,j+S-1}$, sont tous appliqués aux additionneurs à S entrées du premier étage (4W) dans la même cellule de base, pour générer une paire de signaux de $S_{i,j}$ et $C_{i,j}$ à la position de bit logique de rang i+j.

**7.** Un multiplieur selon la revendication 2, dans lequel un seul des S générateurs de produit partiel (P) dans chaque cellule de base dans la colonne de rang i traite le signal de bit de multiplicande de rang i pour générer $P_{i,j}$, lorsque ce générateur de produit partiel est dans la ligne de rang j, et les S-1 autres générateurs de produit partiel traitent respectivement les signaux de rangs i-k, i-2k, i-3k, ... et i-(S-1)k, grâce à quoi les S signaux de bit de produit partiel qui sont ainsi générés, $P_{i,j}$, $P_{i-k,j+k}$, ..., $P_{i-k.S+k,j+k.S-k}$, sont tous appliqués aux additionneurs à S entrées du premier étage dans la même cellule de base, pour générer une paire de signaux de $S_{i,j}$ et $C_{i,j}$ à la position de bit logique de rang i+j.

**8.** Un multiplieur selon l'une quelconque des revendications précédentes, dans lequel un signal de somme appliqué à l'additionneur à entrées multiples de l'étage de rang v (4W) dans la colonne de rang i1 provient de l'additionneur à entrées multiples de l'étage de rang v-1 dans la colonne de rang i2, et un autre signal d'entrée appliqué au même additionneur de l'étage de rang v provient de l'additionneur de l'étage de rang v-1 dans la colonne de rang i3, avec $i1 \geq 0$, $i2 > i1+1$ et $i3 < i1-1$.

**9.** Un multiplieur selon la revendication 8, dans lequel les relations suivantes sont établies entre i1, i2 et i3 pour les additionneurs à entrées multiples de l'étage de rang v et de l'étage de rang v-1 (4W, 6W) dans le réseau :

$$i2 = i1 + i0,$$

$$i3 = i1 - i0,$$

et

$$i0 > 1.$$

**10.** Un multiplieur selon la revendication 9, dans lequel la valeur de i0 dépend de v et i0 est plus élevé pour une valeur de v plus élevée.

**11.** Un multiplieur selon la revendication 1 ou 2, modifié de façon que certaines des cellules de base comprennent moins de S générateurs de produit partiel et un additionneur à entrées multiples correspondant, de façon à réduire le nombre nécessaire de colonnes pour inclure tous les générateurs de produit partiel pour produire le jeu complet de bits de produit, des signaux de sortie des deux types de cellules de base étant appliqués à l'un des additionneurs à entrées multiples de l'étage de rang v (4W, 6W) pour générer ainsi des signaux de la position de bit correspondante.

Fig. 1

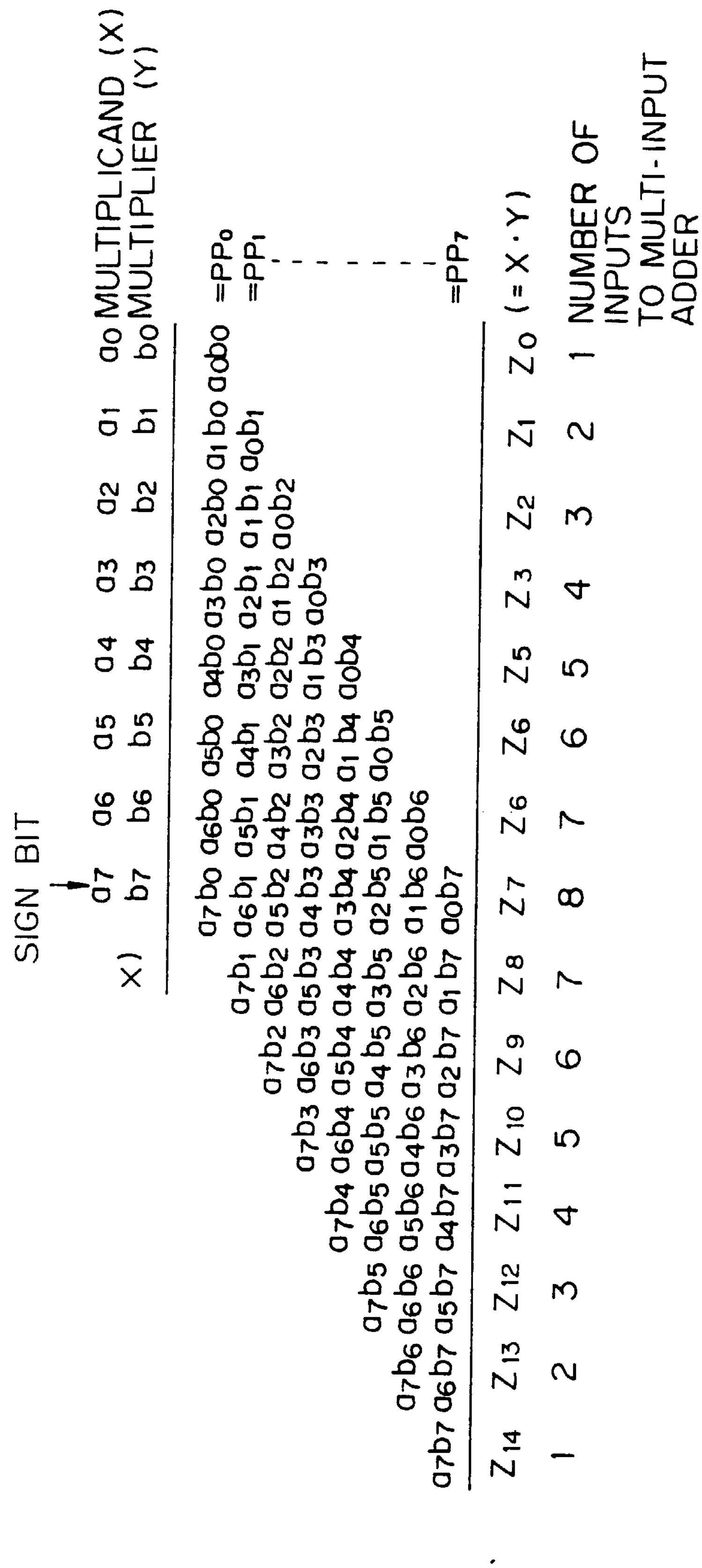
SIGN BIT
MULTIPLICAND (X)
MULTIPLIER (Y)
NUMBER OF INPUTS TO MULTI-INPUT ADDER

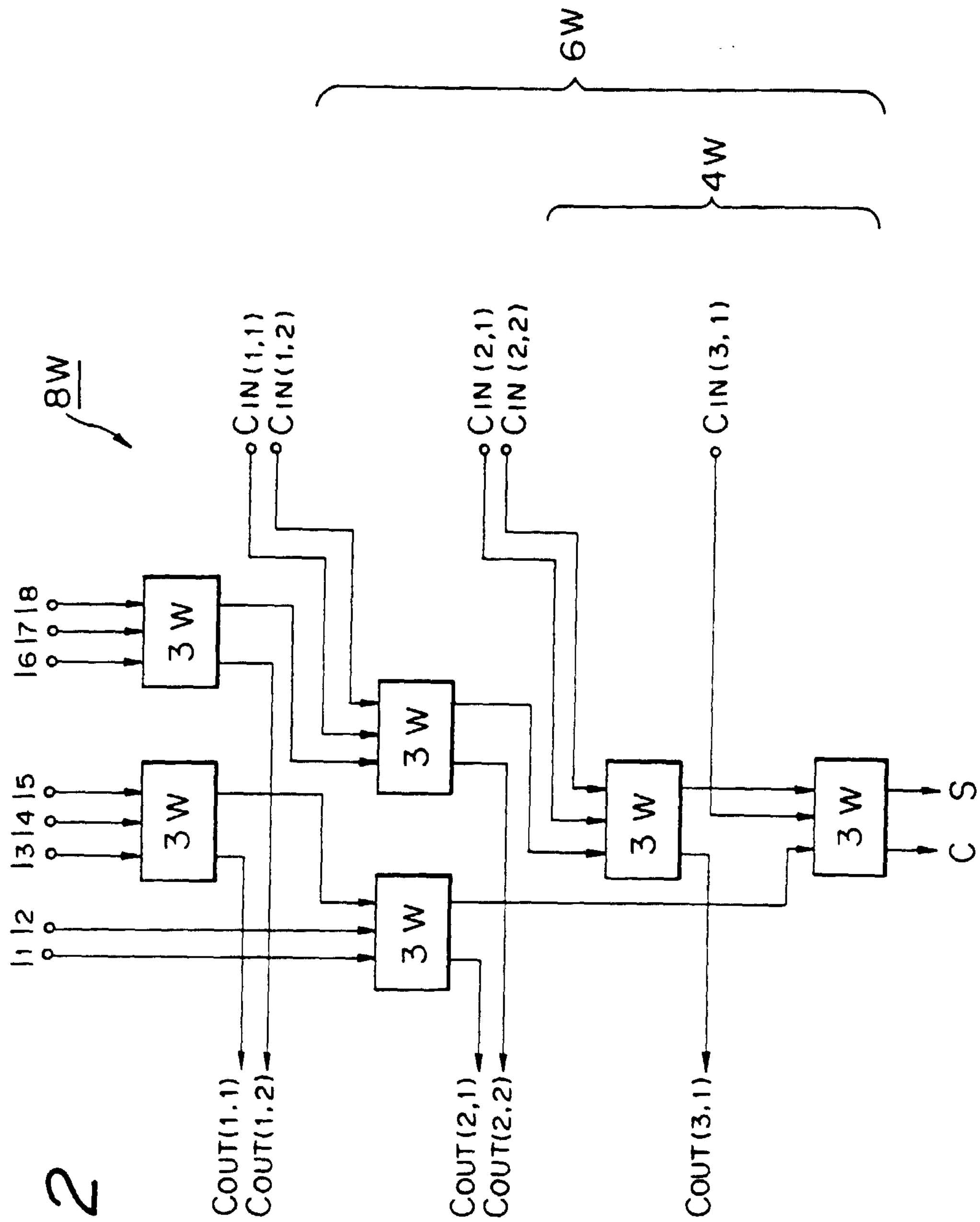
6W
4W
8W
I1 I2
I3 I4 I5
I6 I7 I8
3W
CIN(1,1)
CIN(1,2)
CIN(2,1)
CIN(2,2)
CIN(3,1)
COUT(1,1)
COUT(1,2)
COUT(2,1)
COUT(2,2)
COUT(3,1)
S
C

Fig. 2

Fig. 3

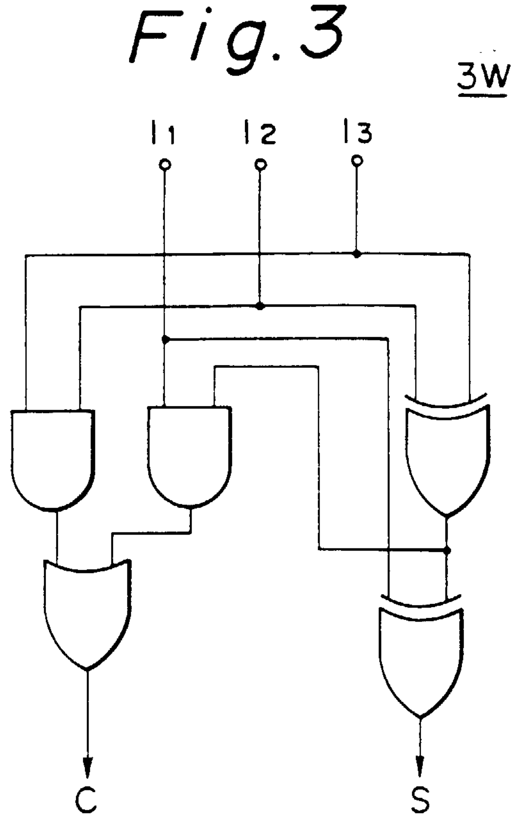


Fig. 4

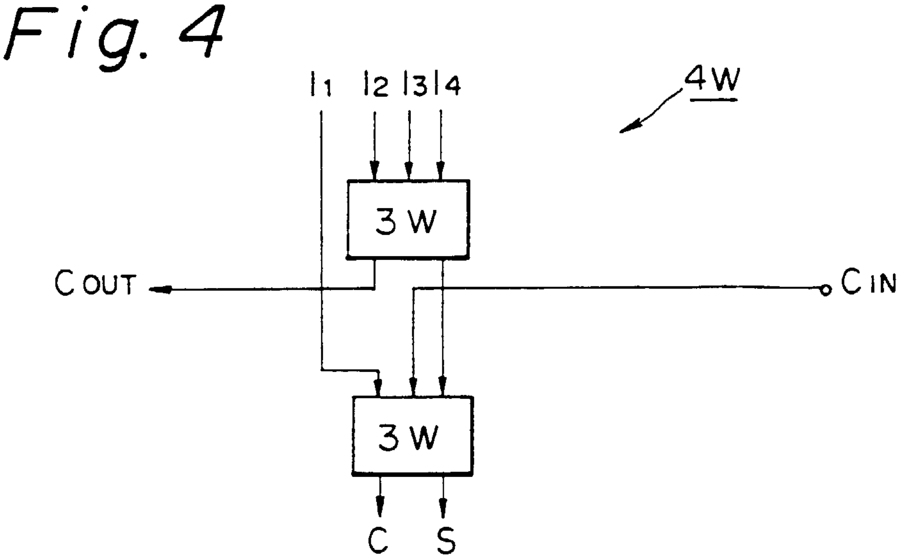

Fig. 5

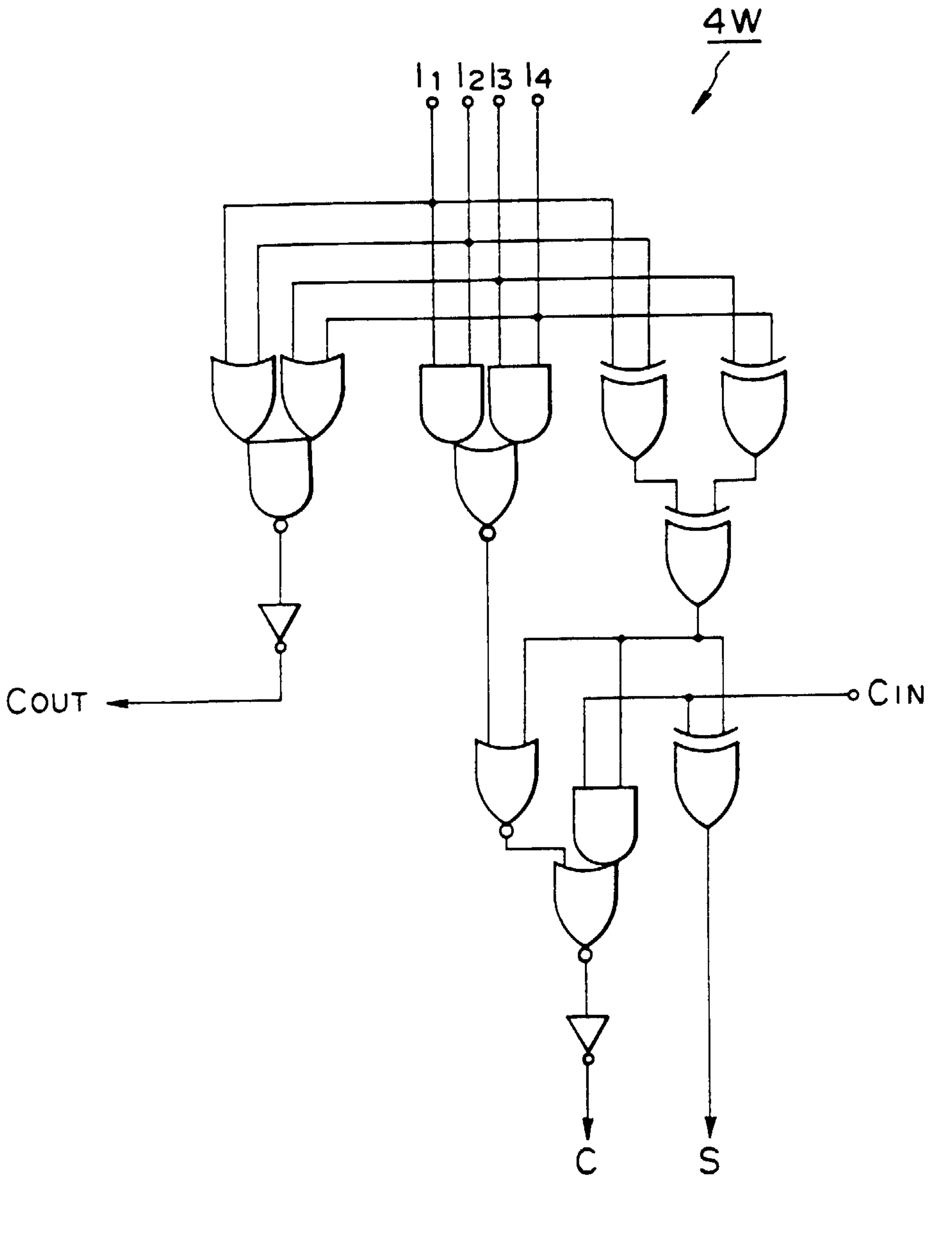

Fig. 6

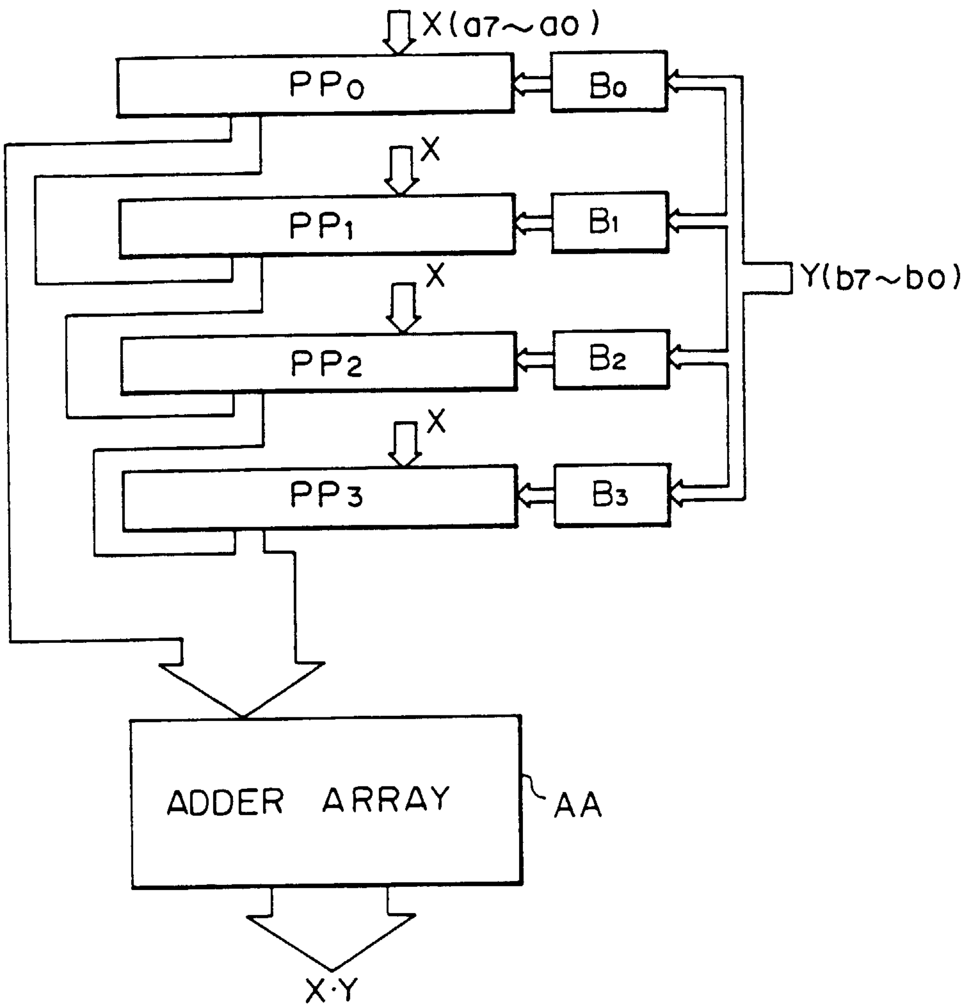

Fig. 7

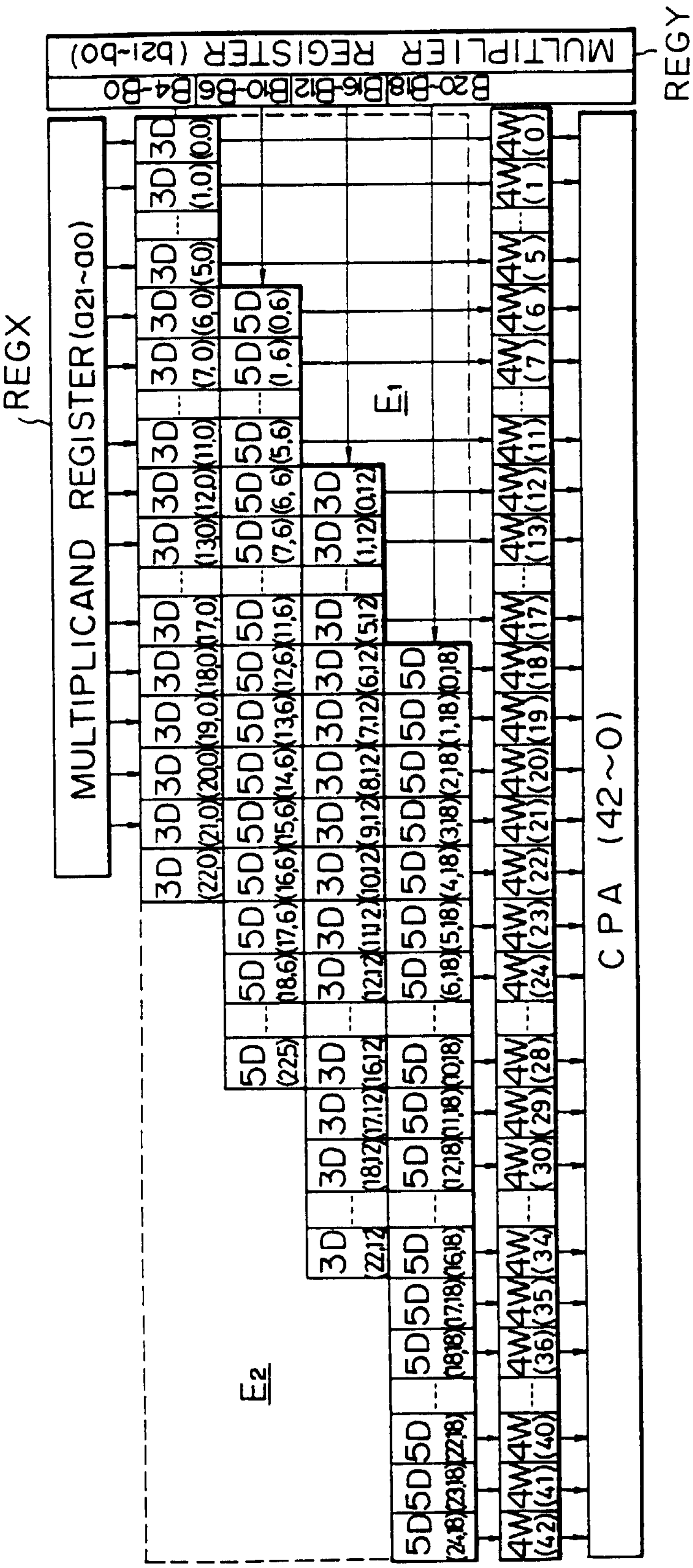
REGX
MULTIPLICAND REGISTER (a21~a0)
REGY
MULTIPLIER REGISTER (b21~b0)
B20-B18
B16-B12
B10-B6
B4-B0
E1
E2
CPA (42~0)

| Fig.8 |
| --- |
| Fig.8A |
| Fig.8B |

Fig. 8A

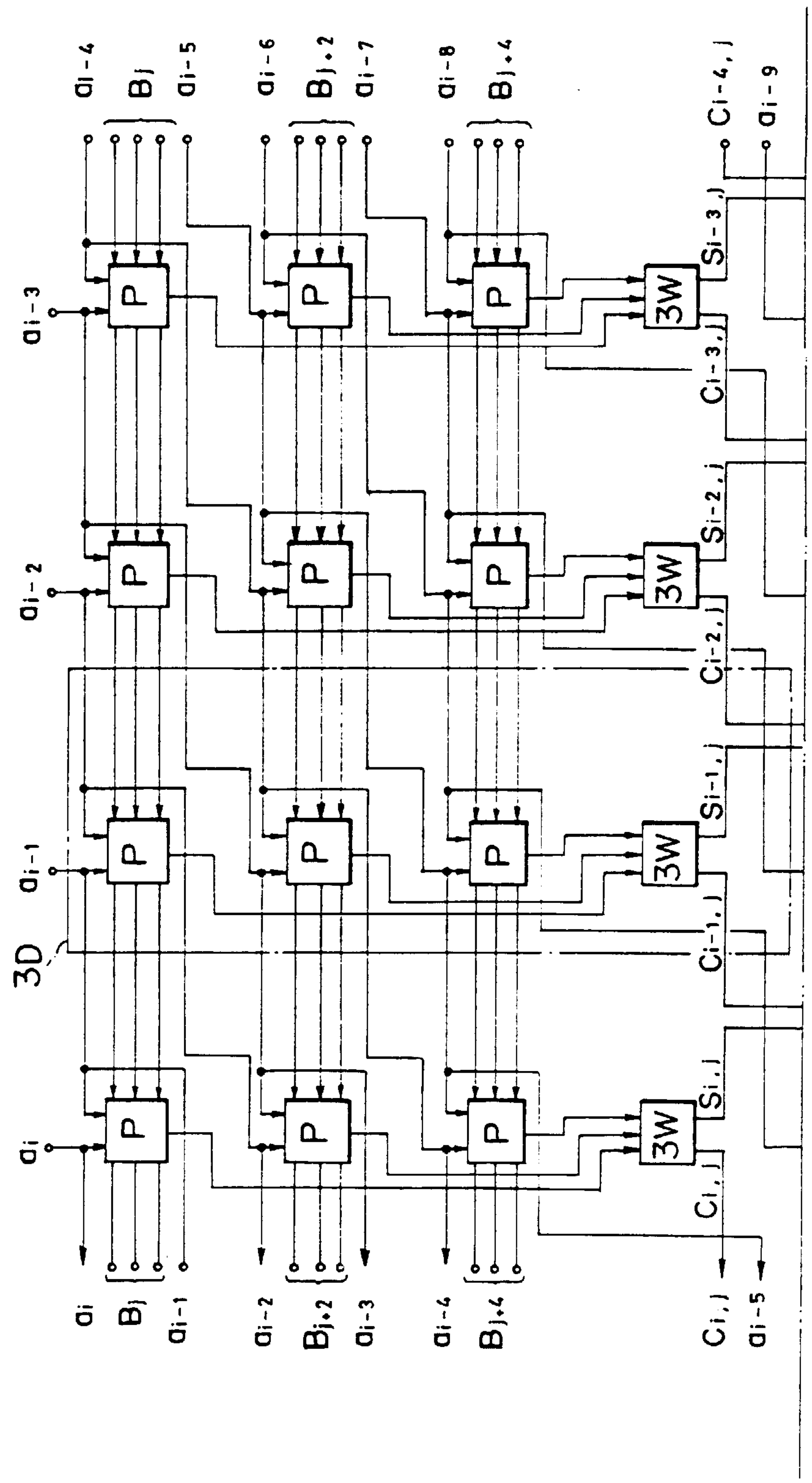

Fig. 8B

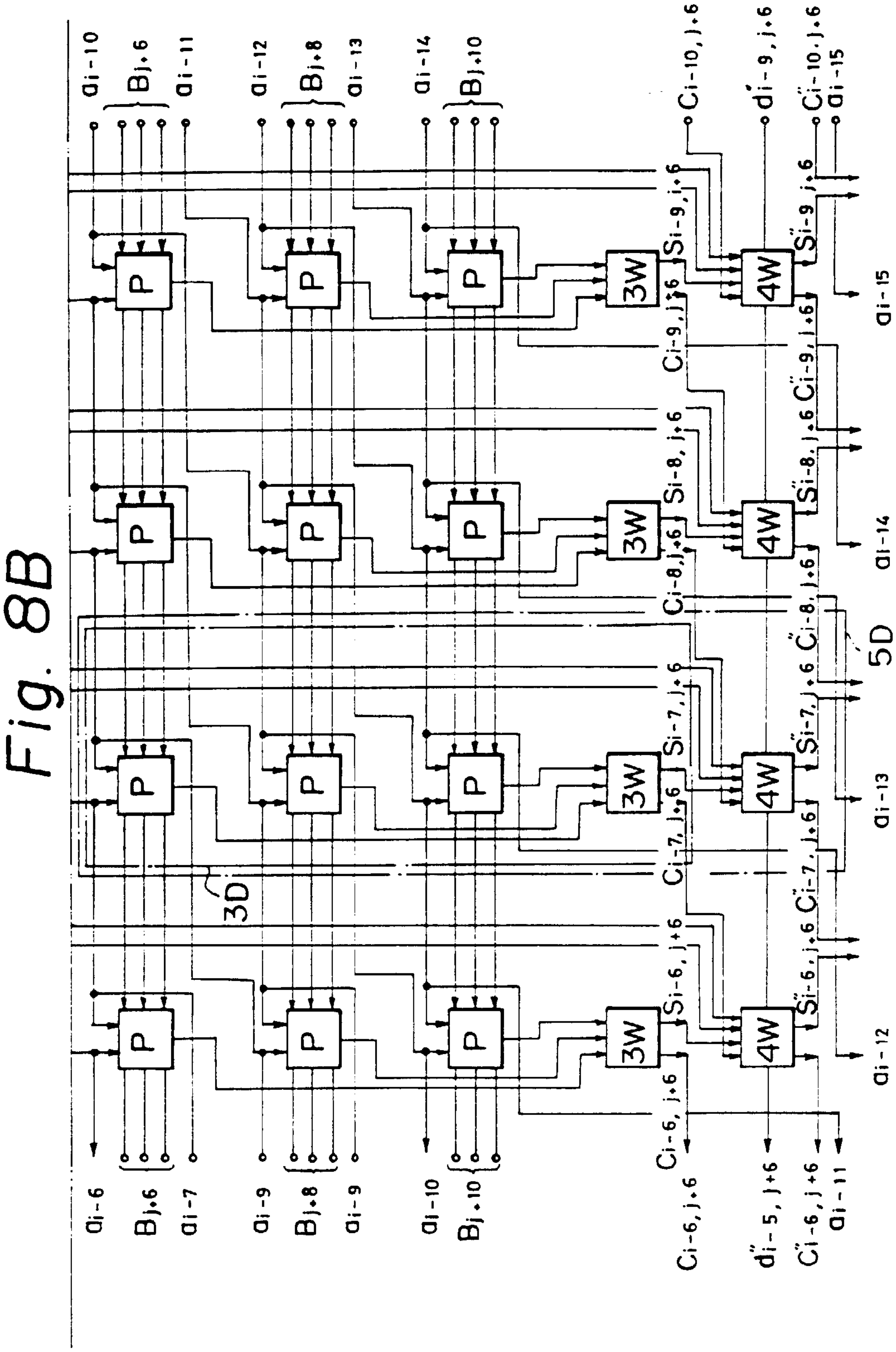
P
3W
4W
3D
5D
ai-6
Bj+6
ai-7
ai-9
Bj+8
ai-10
Bj+10
ai-10
ai-11
ai-12
ai-13
ai-14
ai-15
Ci-6, j+6
d''i-5, j+6
C''i-6, j+6
ai-11
Ci-10, j+6
d'i-9, j+6
C''i-10, j+6
Si-6, j+6
S''i-6, j+6
Ci-7, j+6
C''i-7, j+6
Si-7, j+6
S''i-7, j+6
Ci-8, j+6
C''i-8, j+6
Si-8, j+6
S''i-8, j+6
Ci-9, j+6
C''i-9, j+6
Si-9, j+6
S''i-9, j+6

Fig. 9A

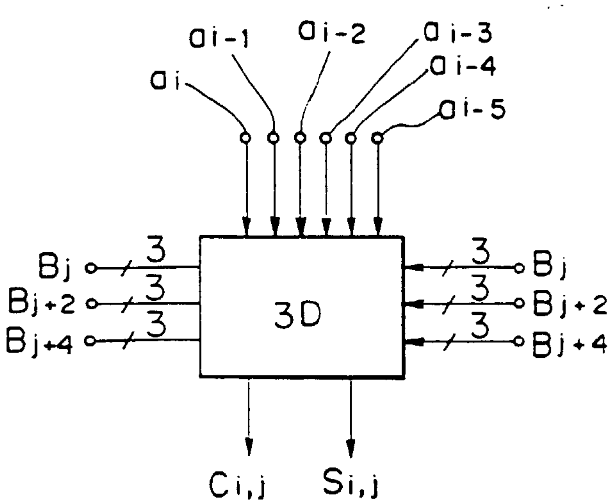
ai
ai-1
ai-2
ai-3
ai-4
ai-5
Bj
Bj+2
Bj+4
3
3D
Ci,j
Si,j

Fig. 9B

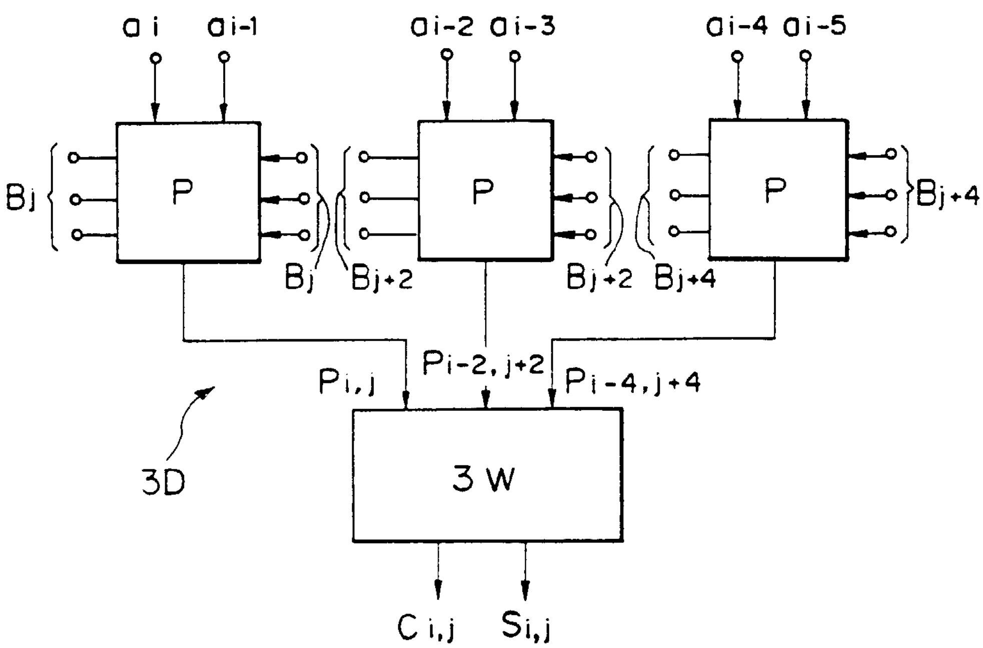
ai
ai-1
ai-2
ai-3
ai-4
ai-5
Bj
Bj+2
Bj+4
P
Pi,j
Pi-2,j+2
Pi-4,j+4
3D
3W
Ci,j
Si,j

Fig. 10

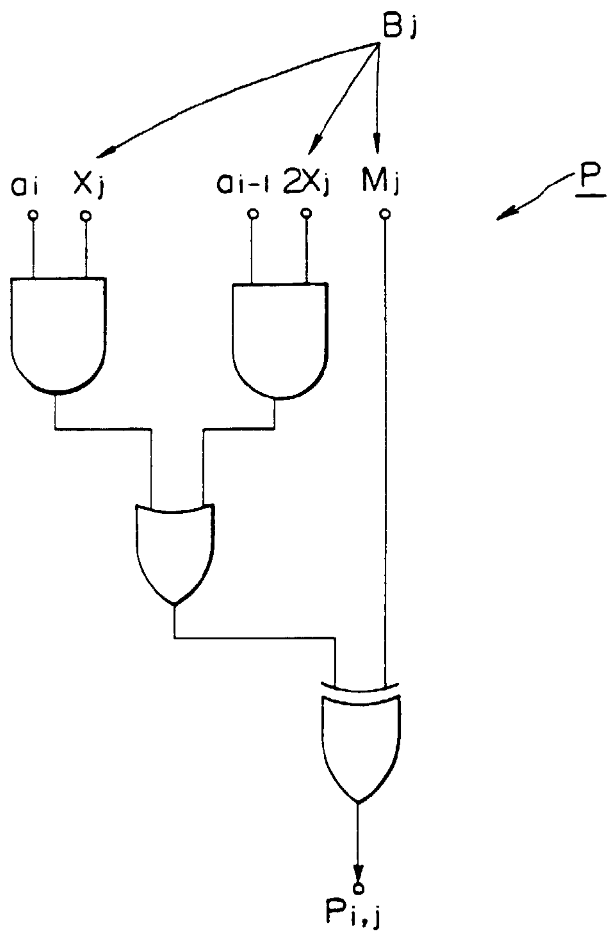

Fig. 11A

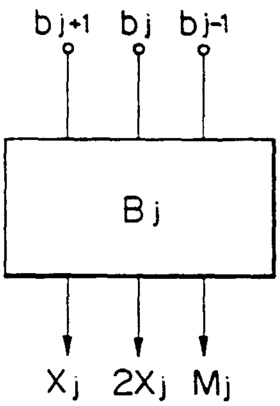


Fig. 11B

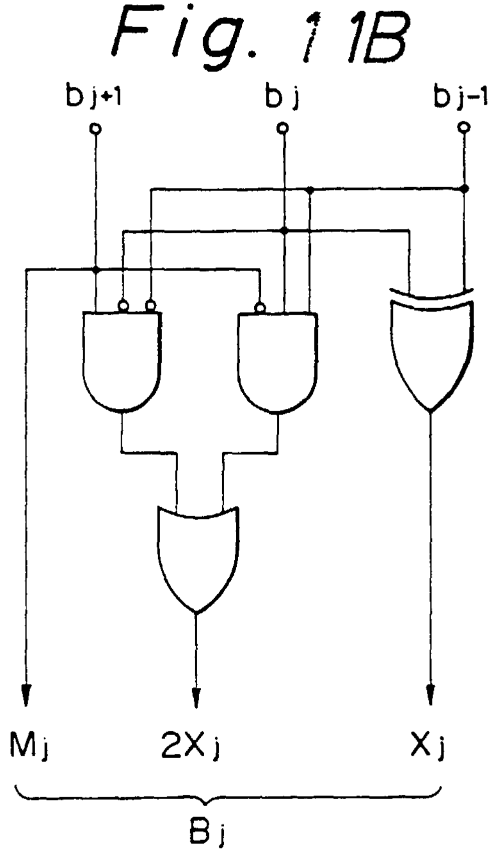

Fig. 12A

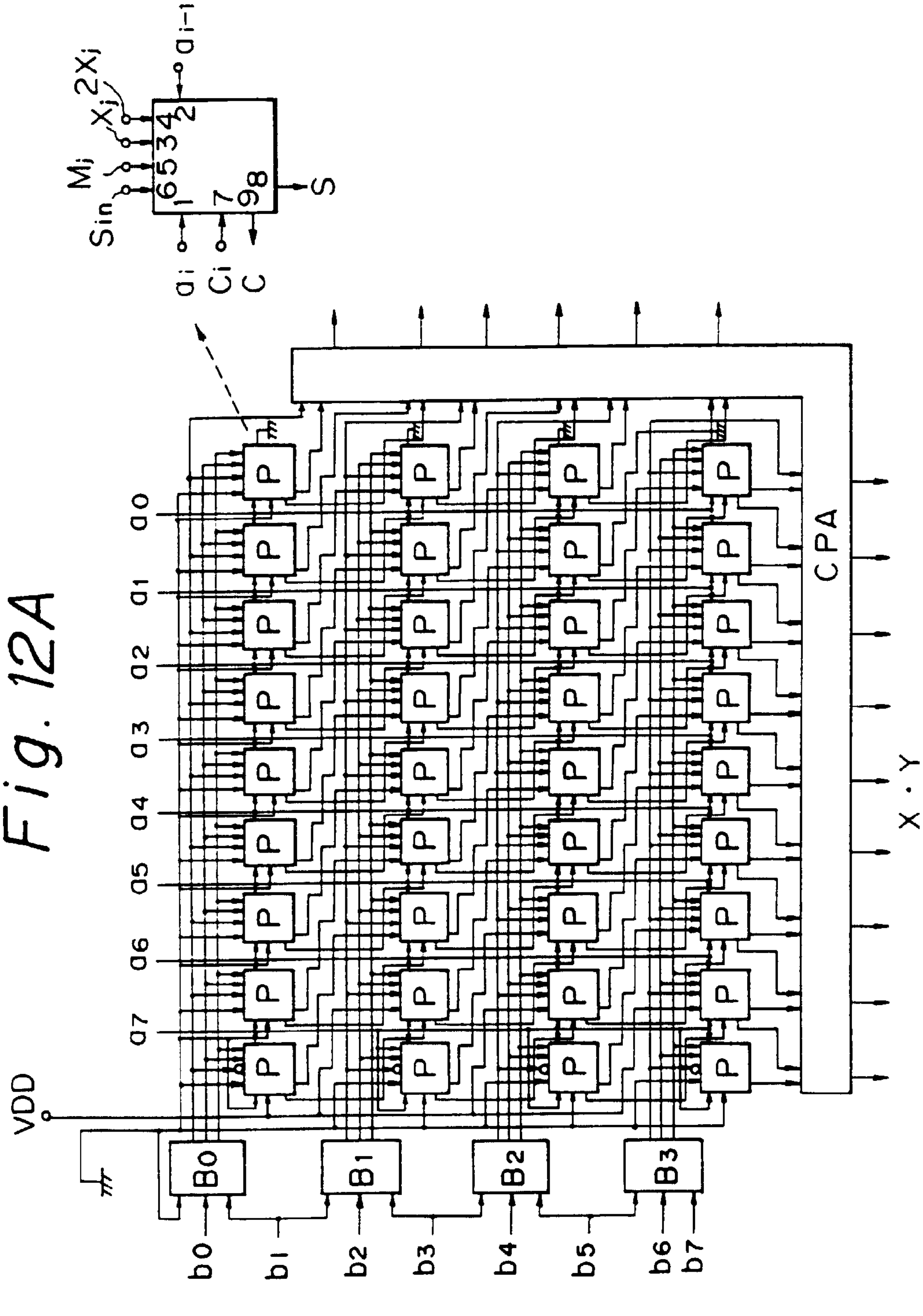
VDD
a0
a1
a2
a3
a4
a5
a6
a7
b0
b1
b2
b3
b4
b5
b6
b7
B0
B1
B2
B3
P
CPA
X · Y
Sin
Mi
Xj
2Xj
ai-1
ai
Ci
C
S

Fig. 12B

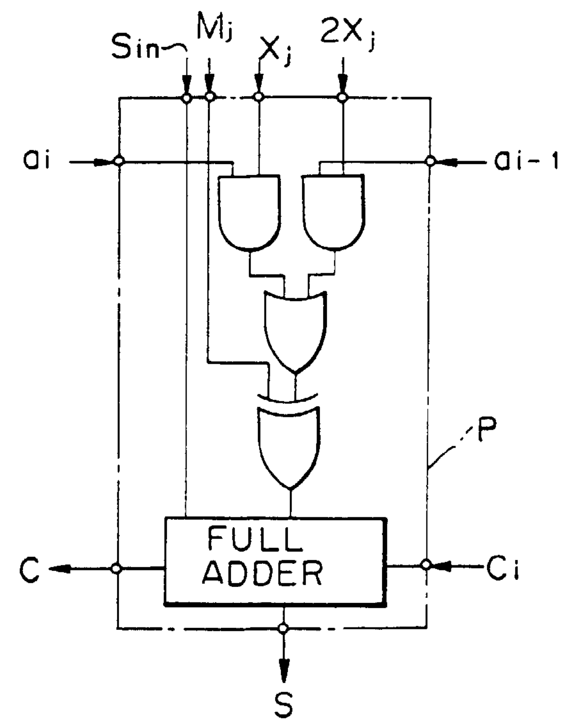

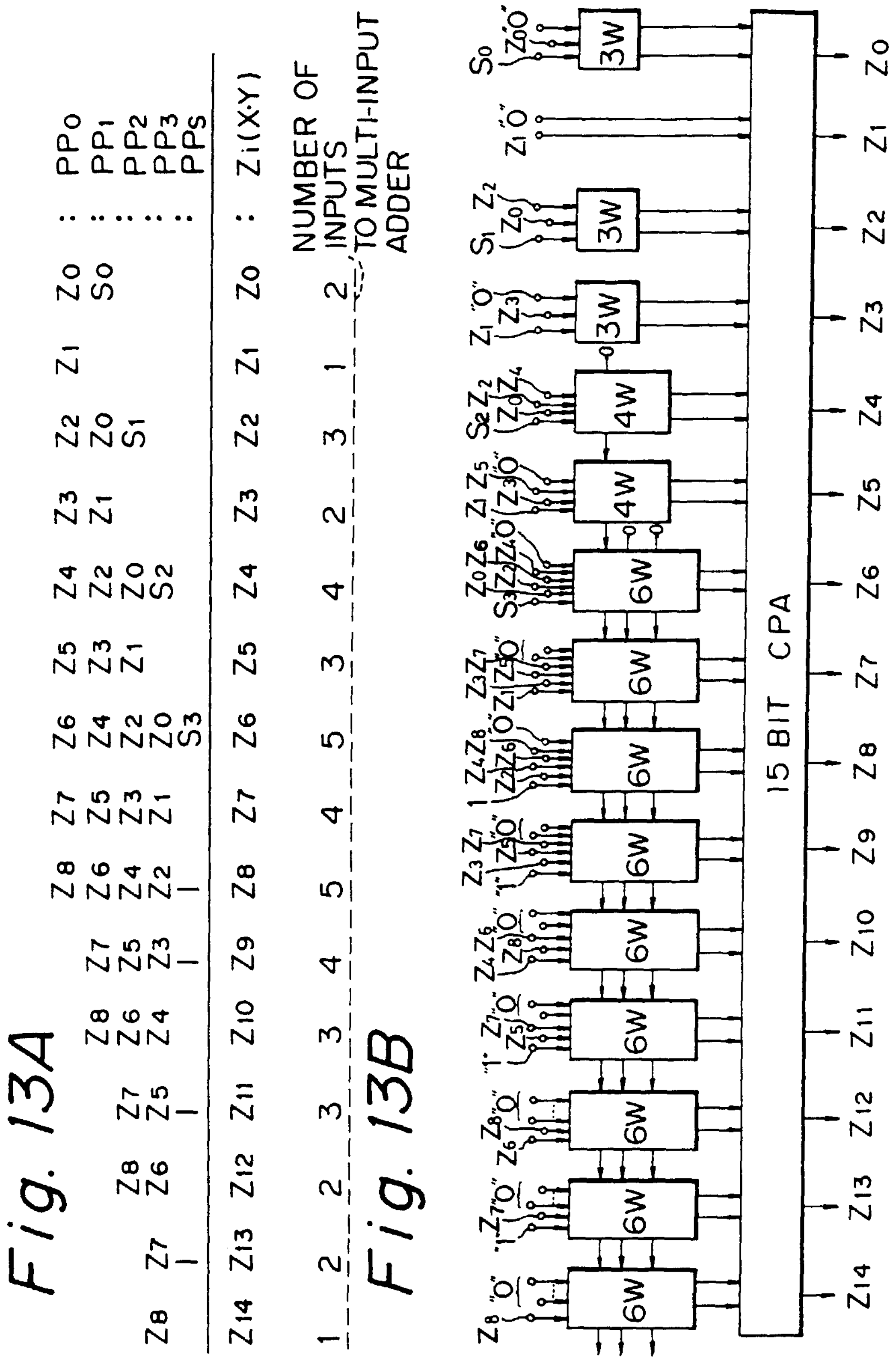


Fig. 13A

Fig. 13B

Fig. 14

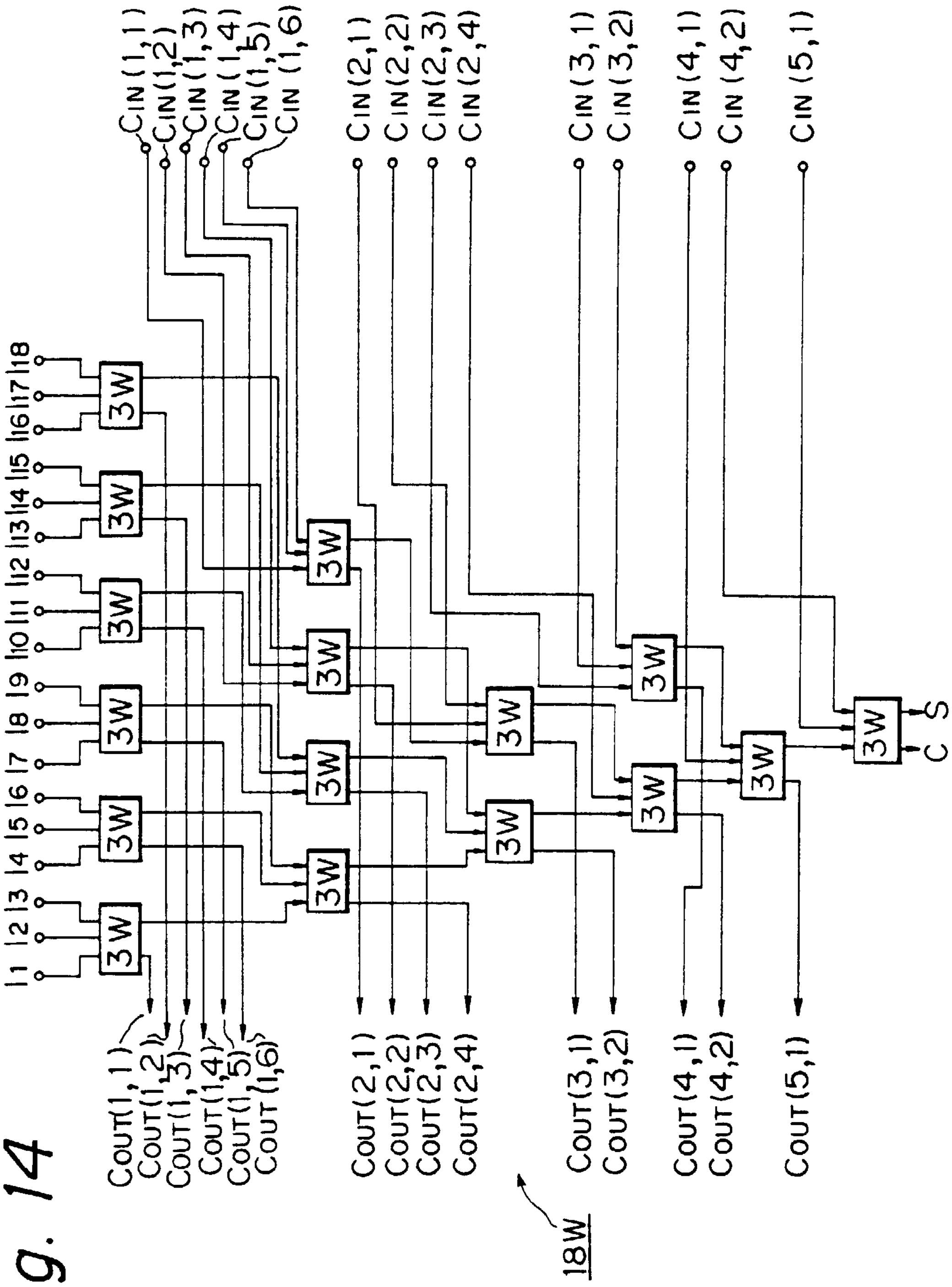

I1 I2 I3 I4 I5 I6 I7 I8 I9 I10 I11 I12 I13 I14 I15 I16 I17 I18
3W
CIN(1,1)
CIN(1,2)
CIN(1,3)
CIN(1,4)
CIN(1,5)
CIN(1,6)
CIN(2,1)
CIN(2,2)
CIN(2,3)
CIN(2,4)
CIN(3,1)
CIN(3,2)
CIN(4,1)
CIN(4,2)
CIN(5,1)
COUT(1,1)
COUT(1,2)
COUT(1,3)
COUT(1,4)
COUT(1,5)
COUT(1,6)
COUT(2,1)
COUT(2,2)
COUT(2,3)
COUT(2,4)
COUT(3,1)
COUT(3,2)
COUT(4,1)
COUT(4,2)
COUT(5,1)
C
S
18W

*Fig. 15A*

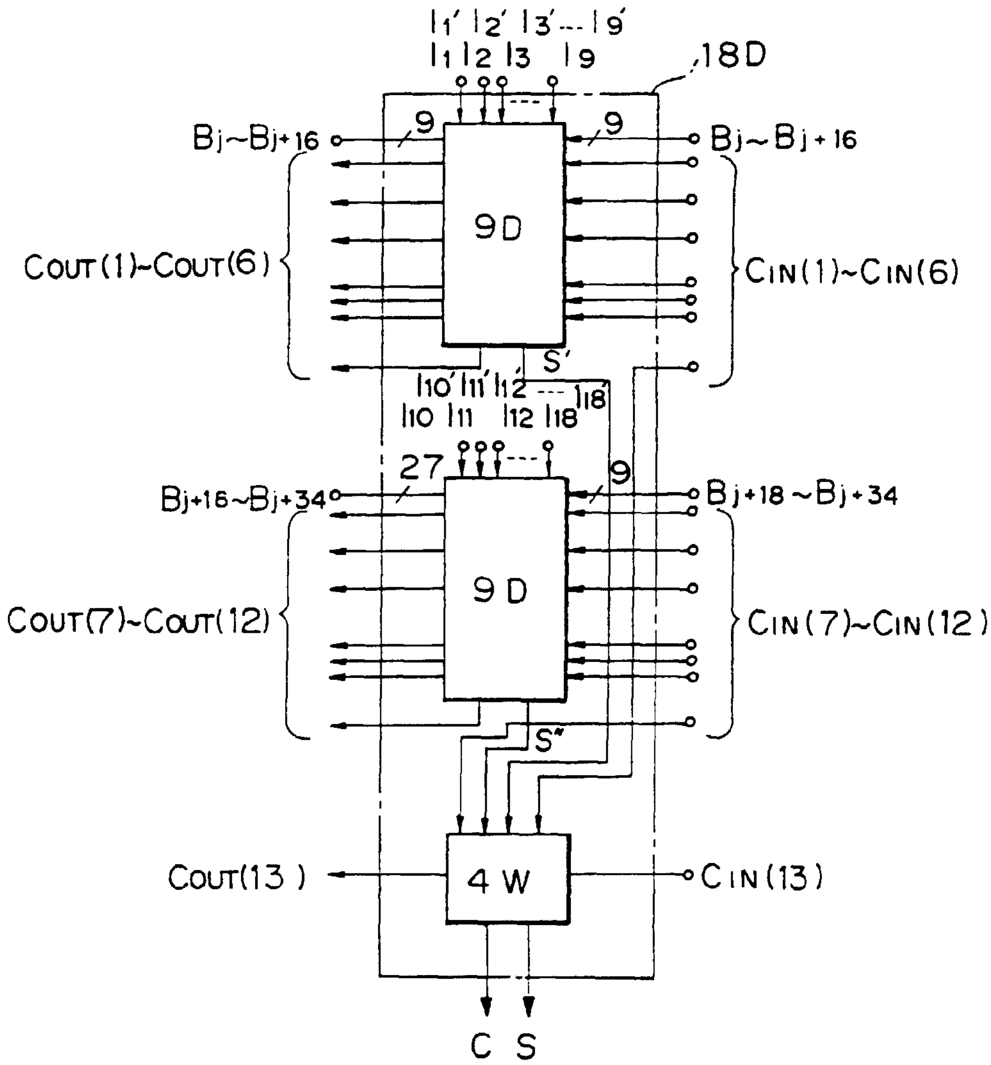
I1' I2' I3' --- I9'
I1 I2 I3 I9
18D
Bj~Bj+16
9
9
Bj~Bj+16
9D
COUT(1)~COUT(6)
CIN(1)~CIN(6)
S'
I10' I11' I12' --- I18'
I10 I11 I12 I18
27
9
Bj+16~Bj+34
Bj+18~Bj+34
9 D
COUT(7)~COUT(12)
CIN(7)~CIN(12)
S''
COUT(13)
4 W
CIN(13)
C S

Fig. 15B

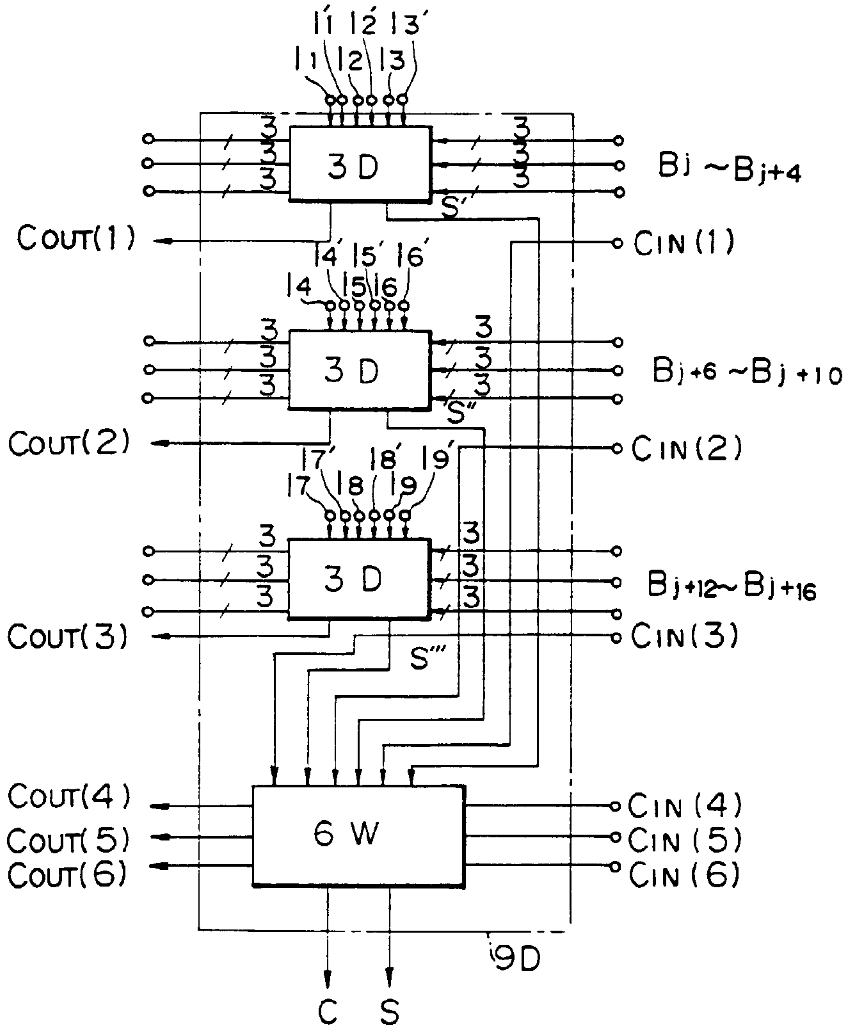
11'
12'
13'
11
12
13
3
3D
Bj ~Bj+4
S'
COUT(1)
CIN(1)
14'
15'
16'
14
15
16
3D
Bj+6 ~Bj+10
S"
COUT(2)
CIN(2)
17'
18'
19'
17
18
19
3D
Bj+12~Bj+16
COUT(3)
CIN(3)
S'''
COUT(4)
COUT(5)
COUT(6)
6W
CIN(4)
CIN(5)
CIN(6)
9D
C
S

Fig. 16

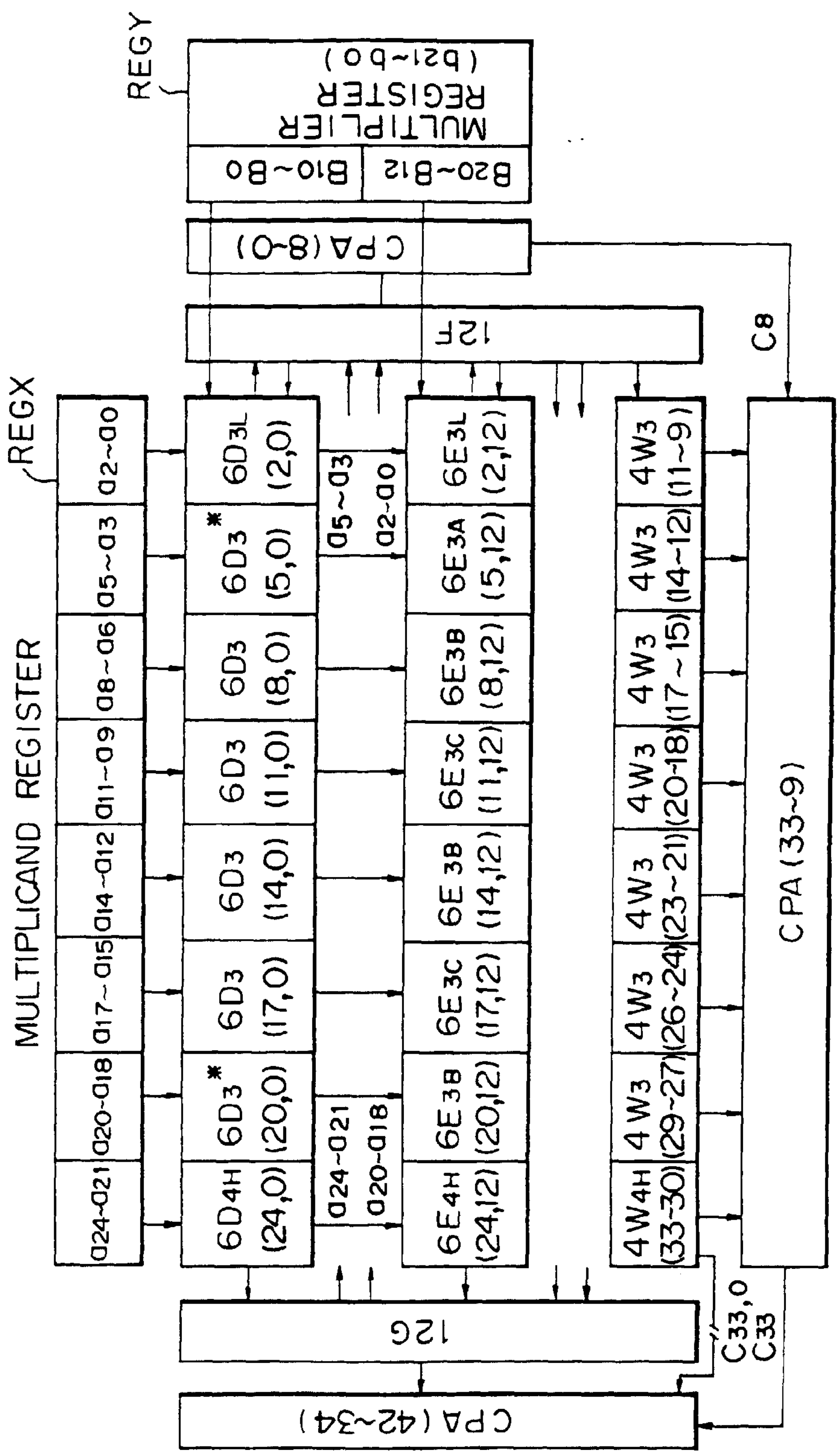
REGY
MULTIPLIER REGISTER (b21~b0)
B20~B12
B10~B0
CPA (8~0)
12F
C8
REGX
MULTIPLICAND REGISTER
a24~a21
a20~a18
a17~a15
a14~a12
a11~a9
a8~a6
a5~a3
a2~a0
6D4H (24,0)
6D3* (20,0)
6D3 (17,0)
6D3 (14,0)
6D3 (11,0)
6D3 (8,0)
6D3* (5,0)
6D3L (2,0)
a24~a21
a20~a18
a5~a3
a2~a0
6E4H (24,12)
6E3B (20,12)
6E3C (17,12)
6E3B (14,12)
6E3C (11,12)
6E3B (8,12)
6E3A (5,12)
6E3L (2,12)
4W4H (33-30)
4W3 (29~27)
4W3 (26~24)
4W3 (23~21)
4W3 (20-18)
4W3 (17~15)
4W3 (14~12)
4W3 (11~9)
CPA (33~9)
12G
C33,0
C33
CPA (42~34)

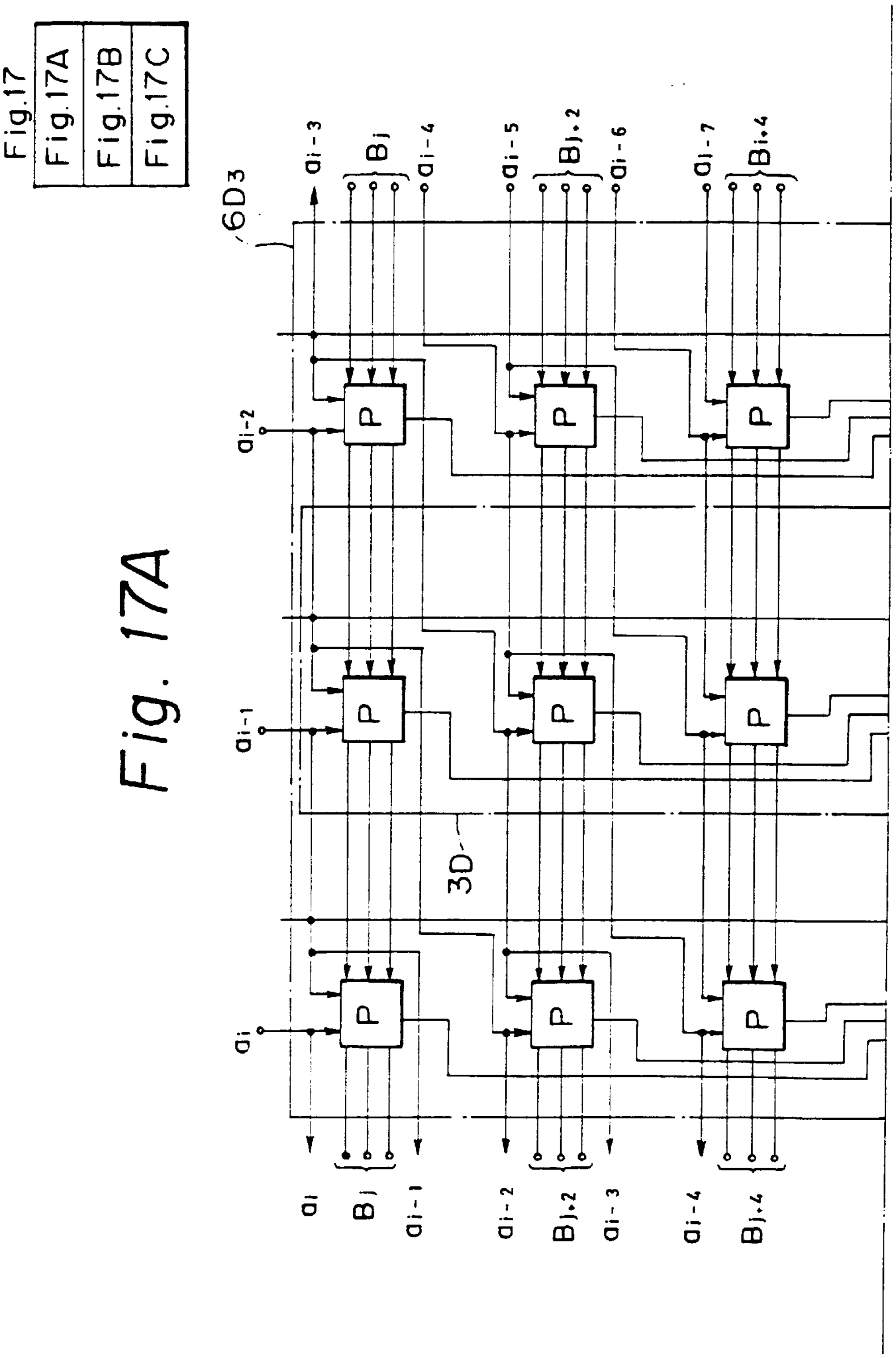
Fig.17
Fig.17A
Fig.17B
Fig.17C
6D3
3D
P
ai
ai-1
ai-2
ai-3
ai-4
ai-5
ai-6
ai-7
Bj
Bj+2
Bj+4

Fig. 17A

Fig. 17B

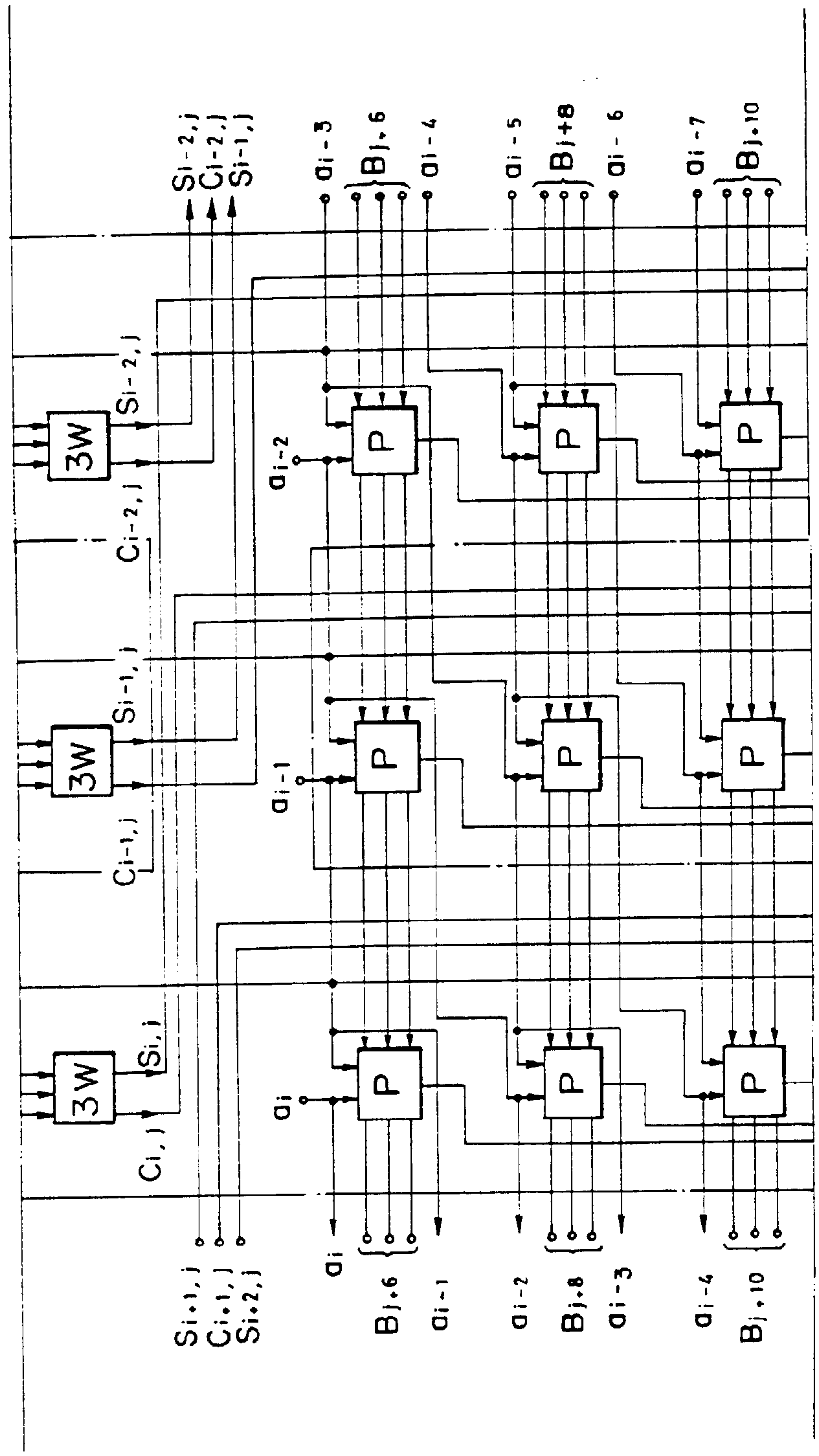
3W
3W
3W
P
Si-2,j
Ci-2,j
Si-1,j
Ci-1,j
Si,j
Ci,j
Si+1,j
Ci+1,j
Si+2,j
ai
ai-1
ai-2
ai-3
ai-4
ai-5
ai-6
ai-7
Bj+6
Bj+8
Bj+10

Fig. 17C

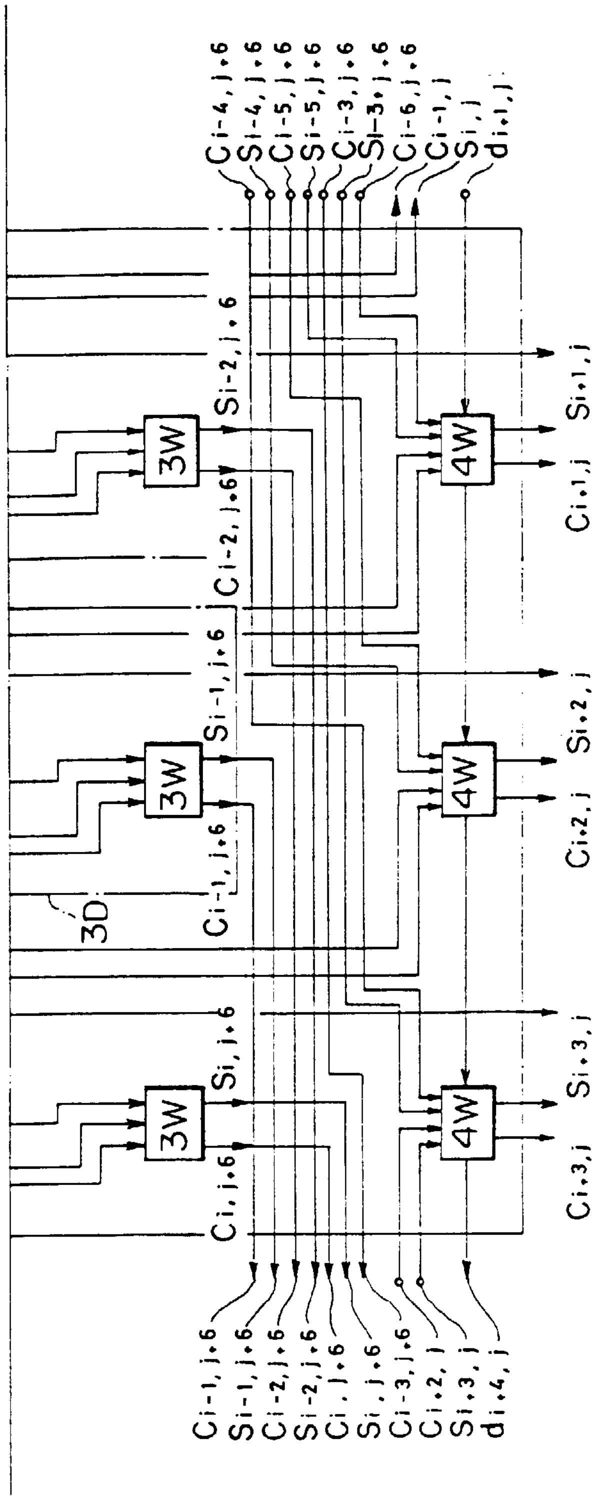
Ci-4,j+6
Si-4,j+6
Ci-5,j+6
Si-5,j+6
Ci-3,j+6
Si-3,j+6
Ci-6,j+6
Ci-1,j
Si,j
di+1,j
3W
3W
3W
4W
4W
4W
Si-2,j+6
Ci-2,j+6
Si-1,j+6
Ci-1,j+6
Si,j+6
Ci,j+6
3D
Si+1,j
Ci+1,j
Si+2,j
Ci+2,j
Si+3,j
Ci+3,j
Ci-1,j+6
Si-1,j+6
Ci-2,j+6
Si-2,j+6
Ci,j+6
Si,j+6
Ci-3,j+6
Ci+2,j
Si+3,j
di+4,j

Fig. 18

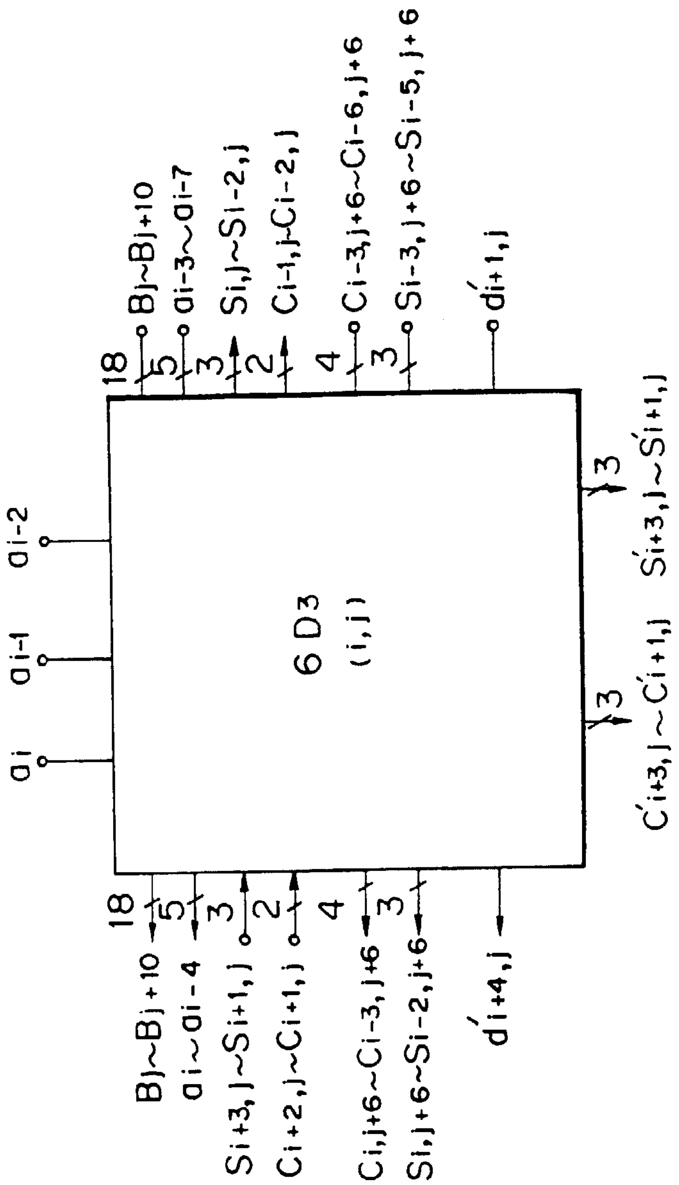
ai
ai-1
ai-2
6 D3
(i, j)
Bj~Bj+10
ai-3~ai-7
Si,j~Si-2,j
Ci-1,j~Ci-2,j
Ci-3,j+6~Ci-6,j+6
Si-3,j+6~Si-5,j+6
d′i+1,j
18
5
3
2
4
3
3
3
S′i+3,j~S′i+1,j
C′i+3,j~C′i+1,j
Bj~Bj+10
ai~ai-4
Si+3,j~Si+1,j
Ci+2,j~Ci+1,j
Ci,j+6~Ci-3,j+6
Si,j+6~Si-2,j+6
d′i+4,j

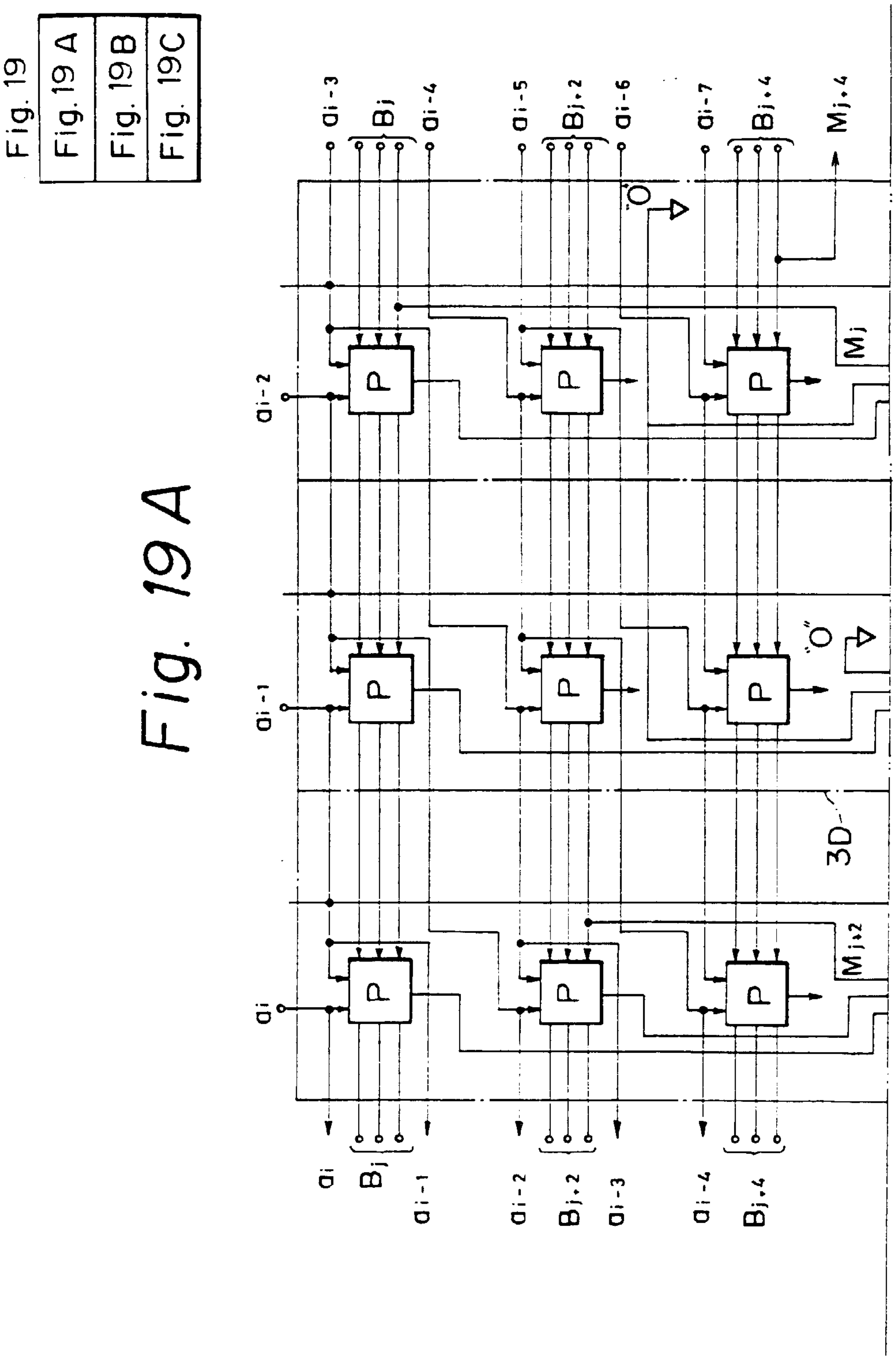
Fig. 19
Fig. 19 A
Fig. 19 B
Fig. 19 C
P
ai
ai-1
ai-2
ai-3
ai-4
ai-5
ai-6
ai-7
Bj
Bj+2
Bj+4
Mj
Mj+2
Mj+4
"0"
3D

Fig. 19A

Fig. 19B

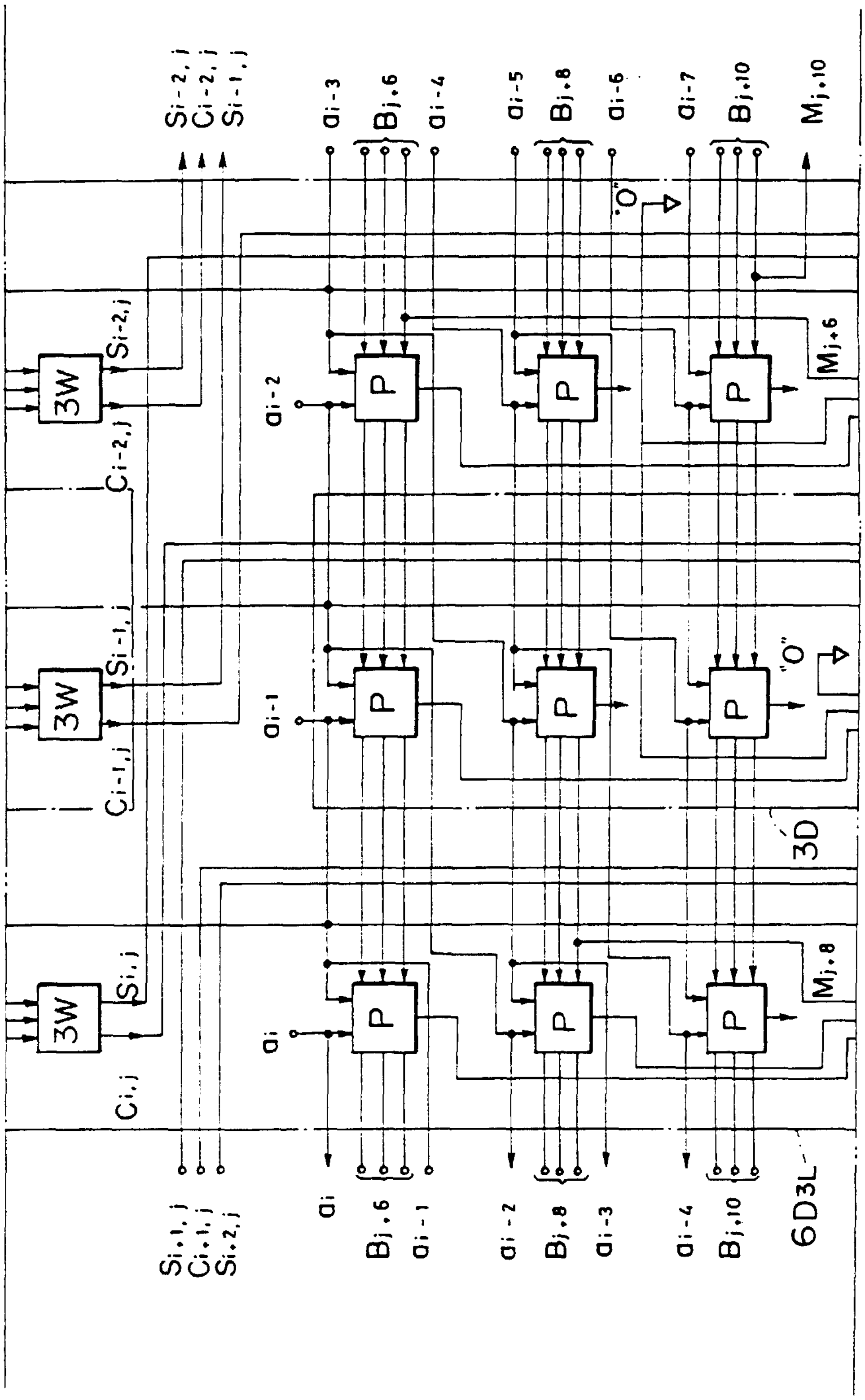
3W
3W
3W
P
Si-2,j
Ci-2,j
Si-1,j
Ci-1,j
Si,j
Ci,j
Si+1,j
Ci+1,j
Si+2,j
ai
ai-1
ai-2
ai-3
ai-4
ai-5
ai-6
ai-7
Bj+6
Bj+8
Bj+10
Mj+6
Mj+8
Mj+10
"0"
3D
6D3L

Fig. 19C

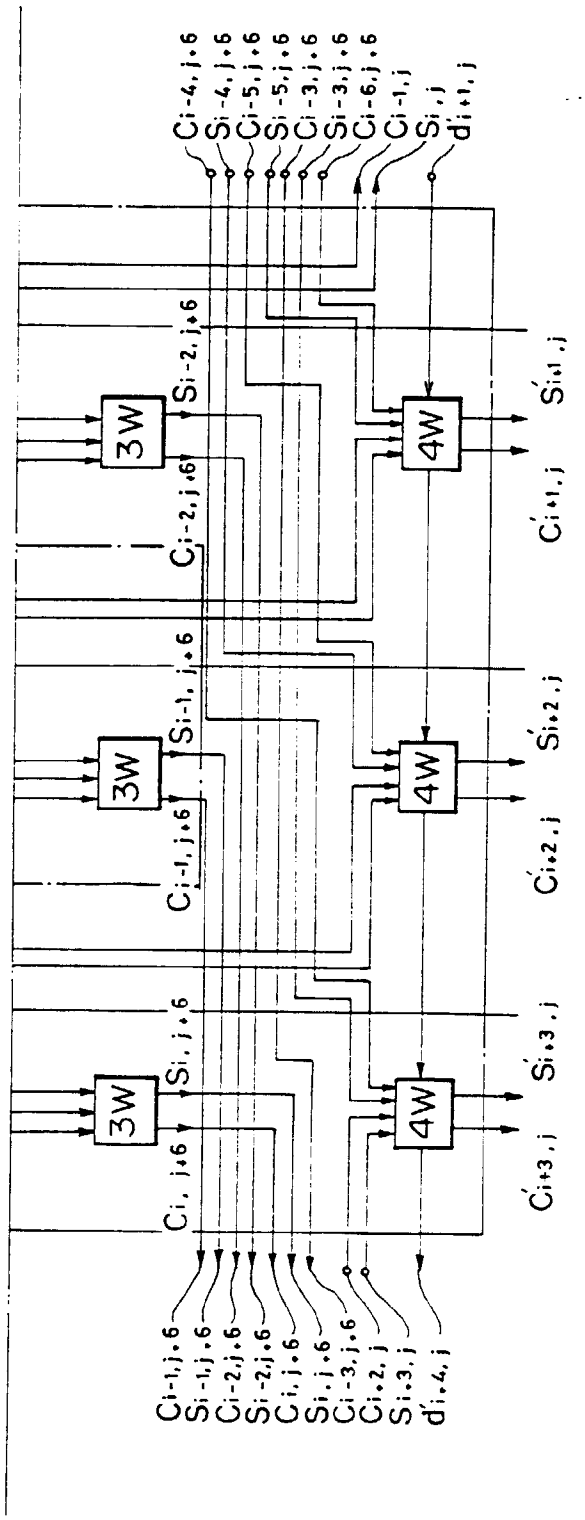

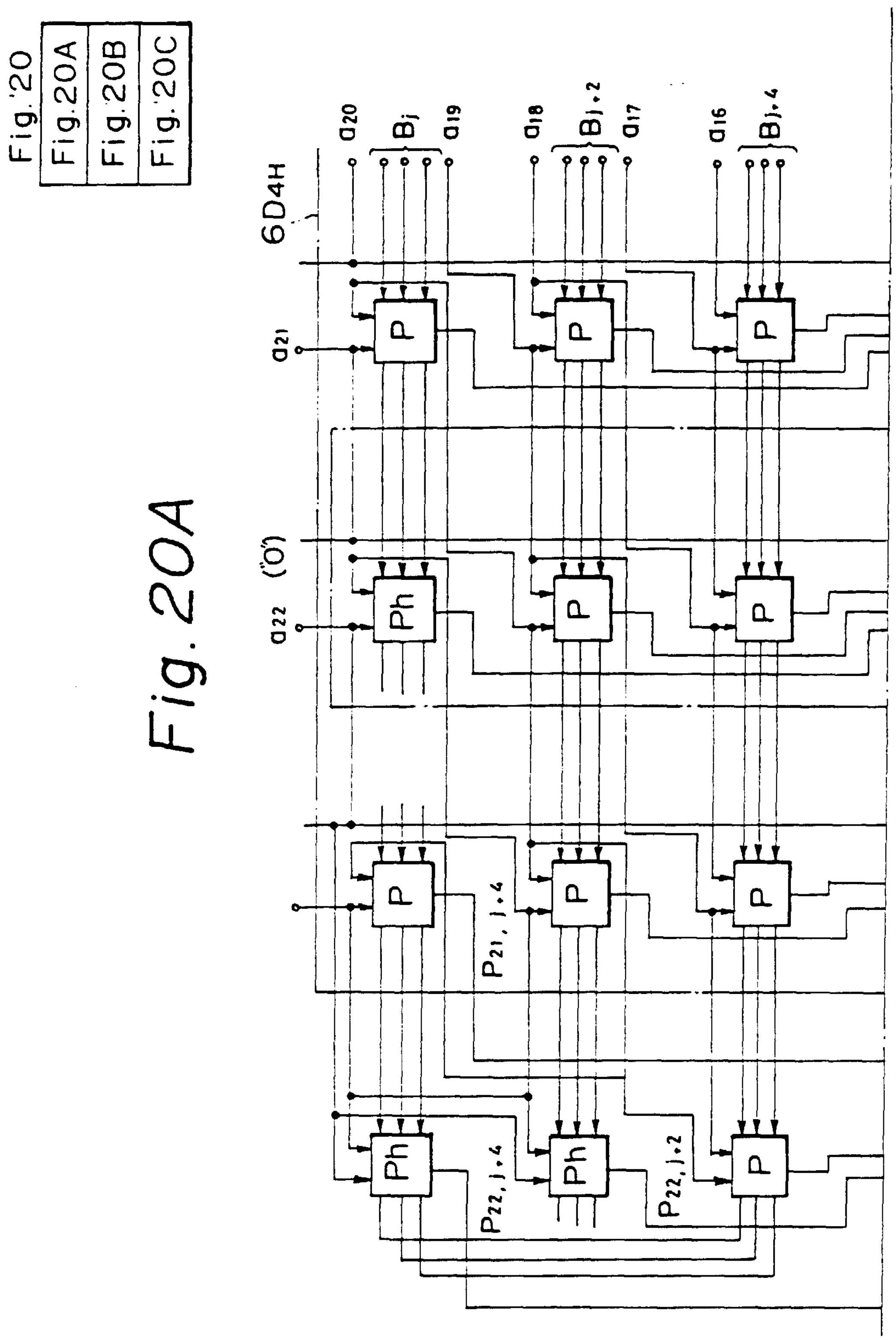
Fig. 20
Fig. 20A
Fig. 20B
Fig. 20C
6D4H
a20
Bj
a19
a18
Bj+2
a17
a16
Bj+4
a21
a22
("0")
P
Ph
P21, j+4
P22, j+4
P22, j+2

Fig. 20A

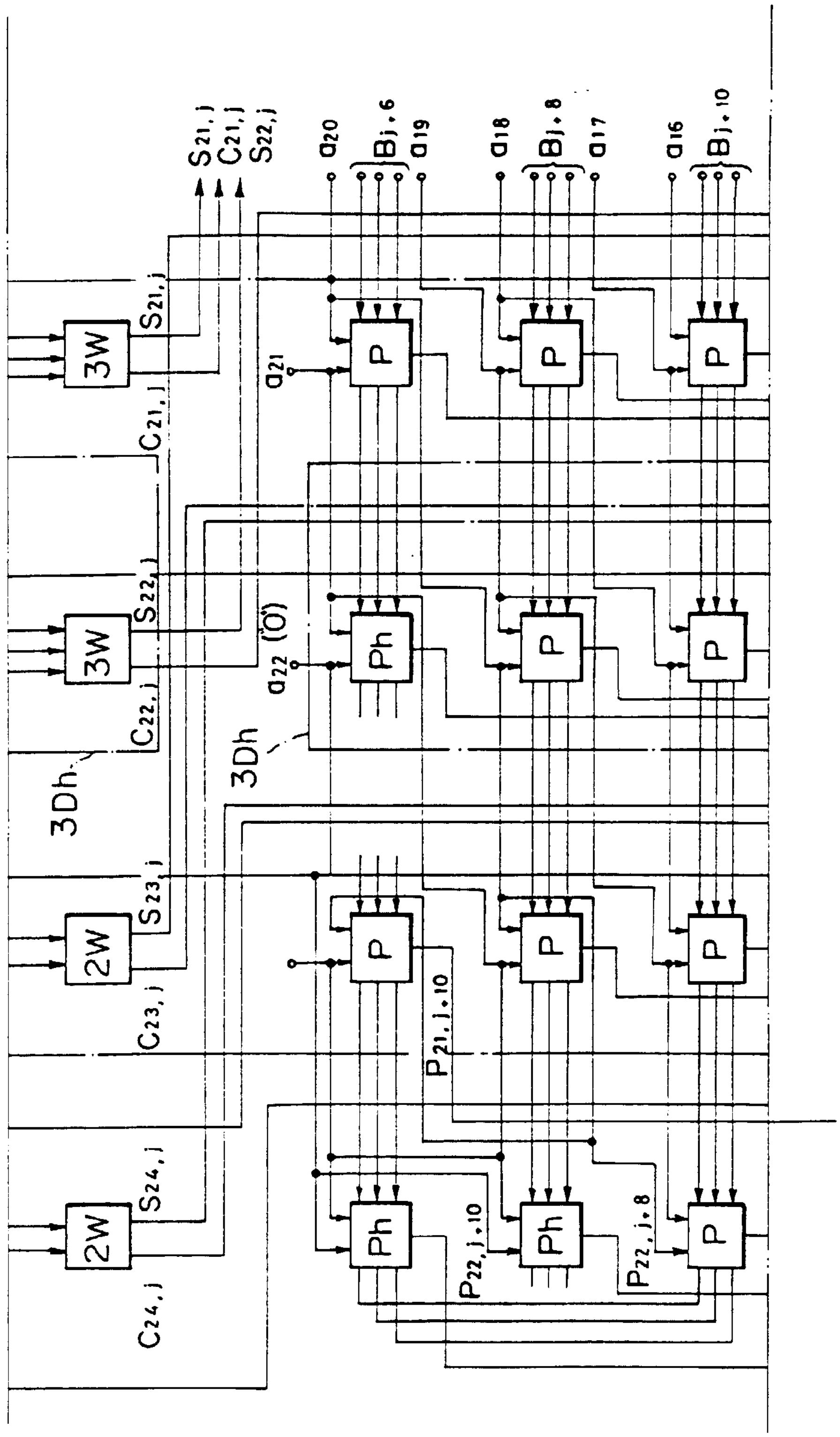
3W
3W
2W
2W
S21,j
C21,j
S22,j
C22,j
S23,j
C23,j
S24,j
C24,j
3Dh
3Dh
a20
Bj,6
a19
a18
Bj,8
a17
a16
Bj,10
a21
a22
('0')
P
Ph
P21,j,10
P22,j,10
P22,j,8

Fig. 20B

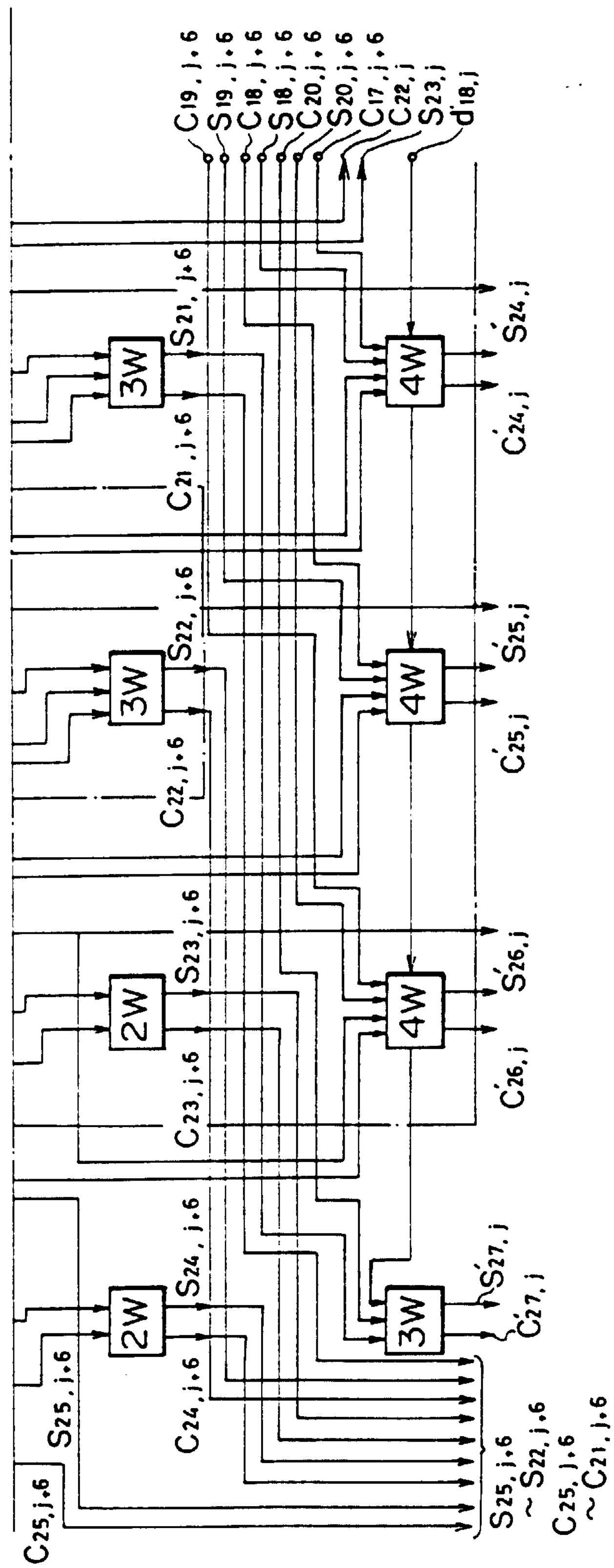


Fig. 20C

Fig. 21A

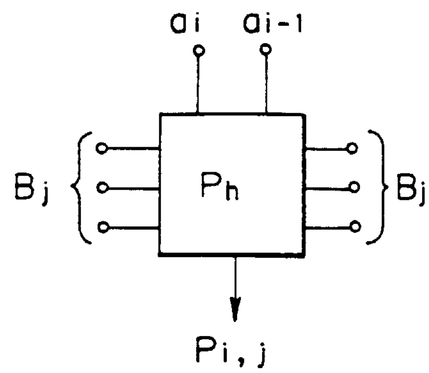


Fig. 21B

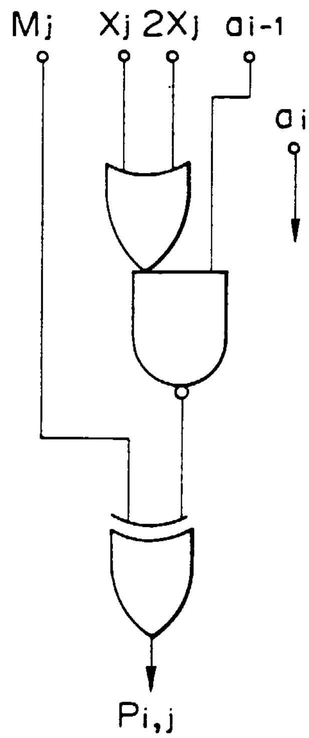

Fig. 22A

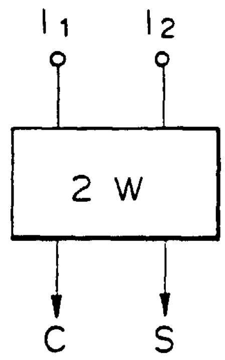


Fig. 22B

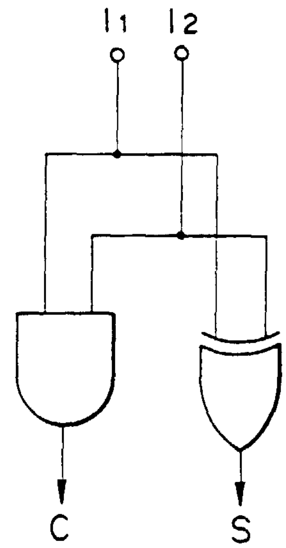

Fig.23

| Fig.23A |
|---|
| Fig.23B |
| Fig.23C |

# Fig. 23A

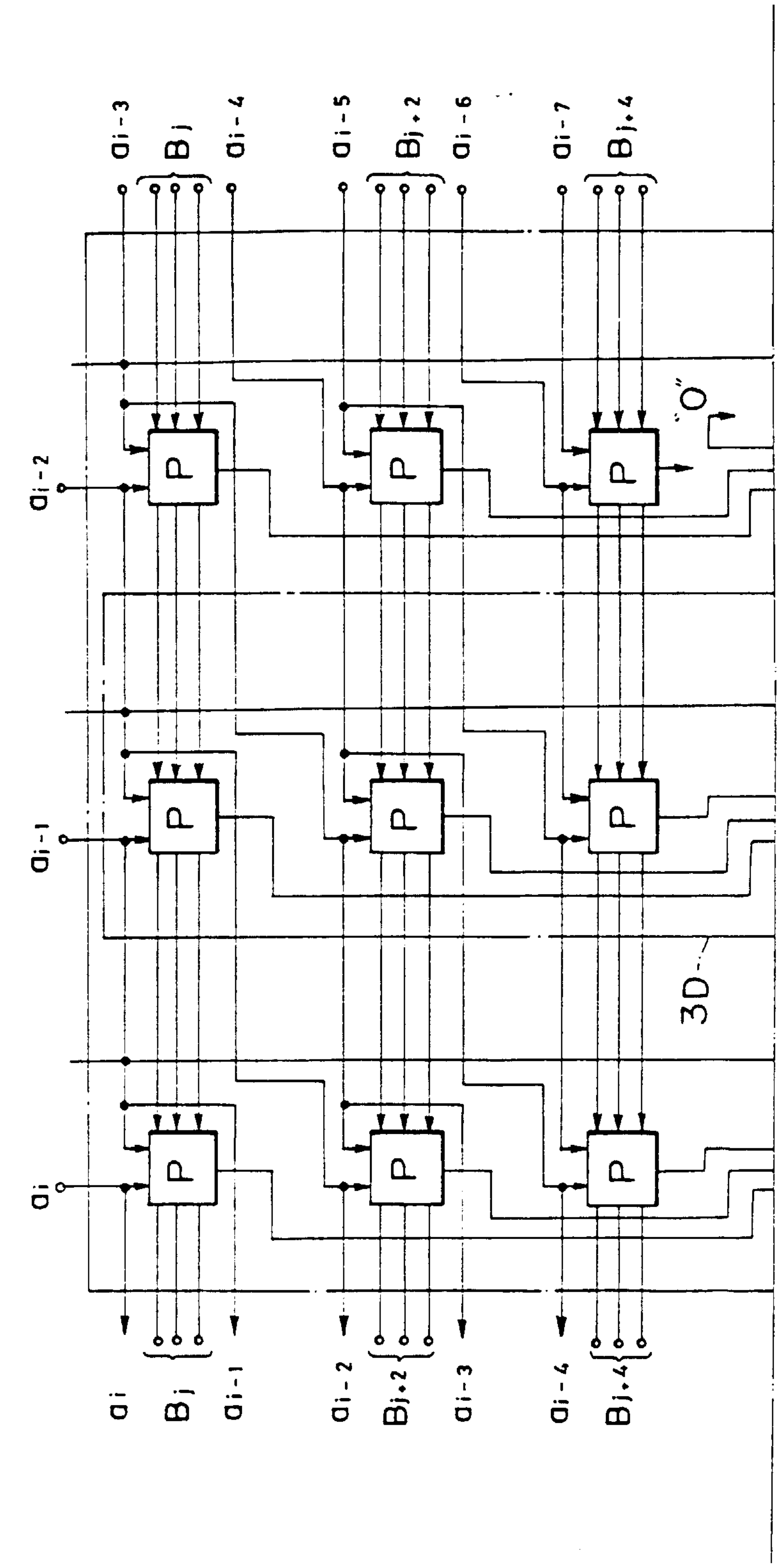

Fig. 23B

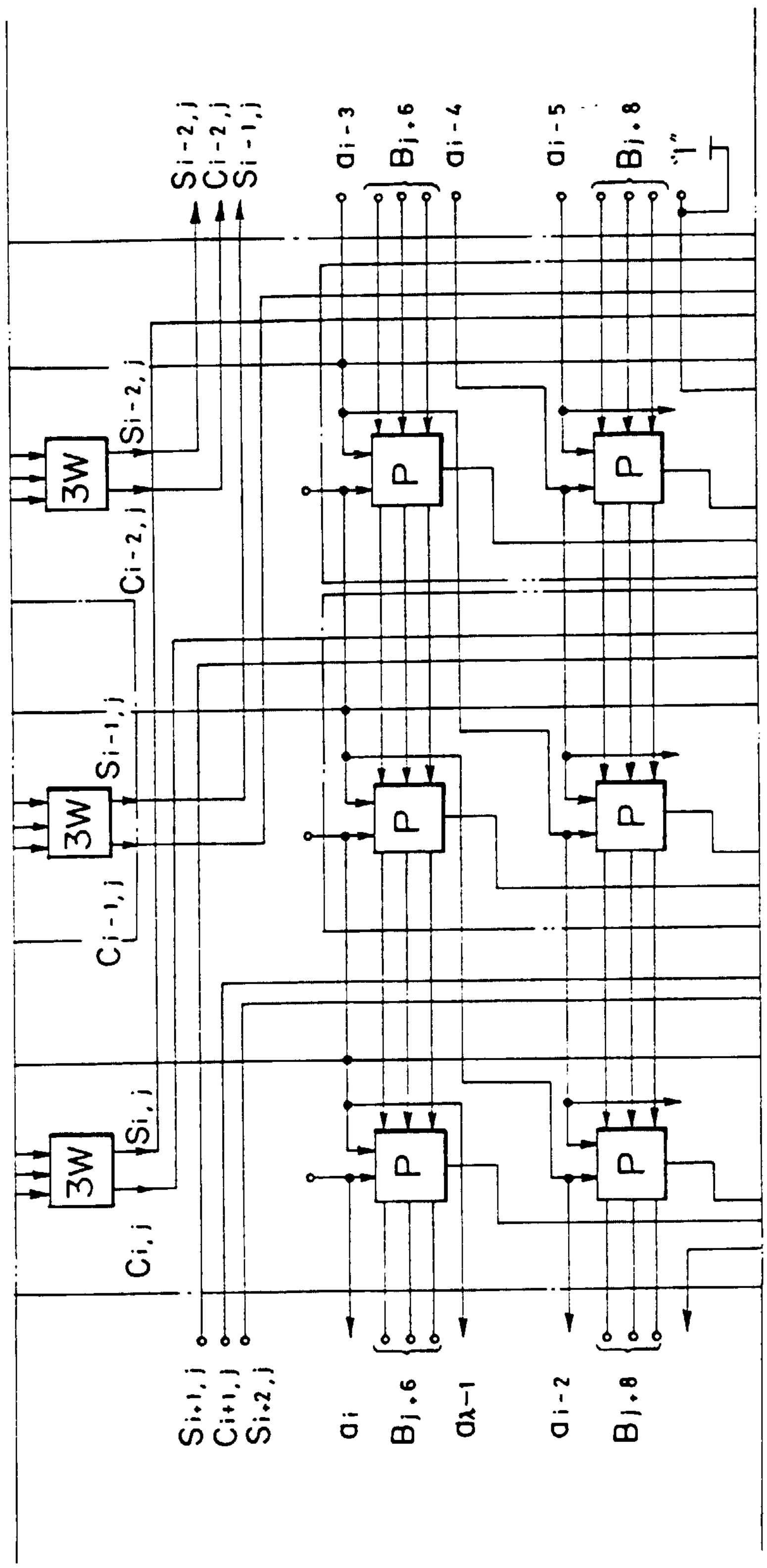
3W
P
Si-2,j
Ci-2,j
Si-1,j
Ci-1,j
Si,j
Ci,j
Si+1,j
Ci+1,j
Si+2,j
ai-3
Bj+6
ai-4
ai-5
Bj+8
"1"
ai
aλ-1
ai-2

Fig. 23C

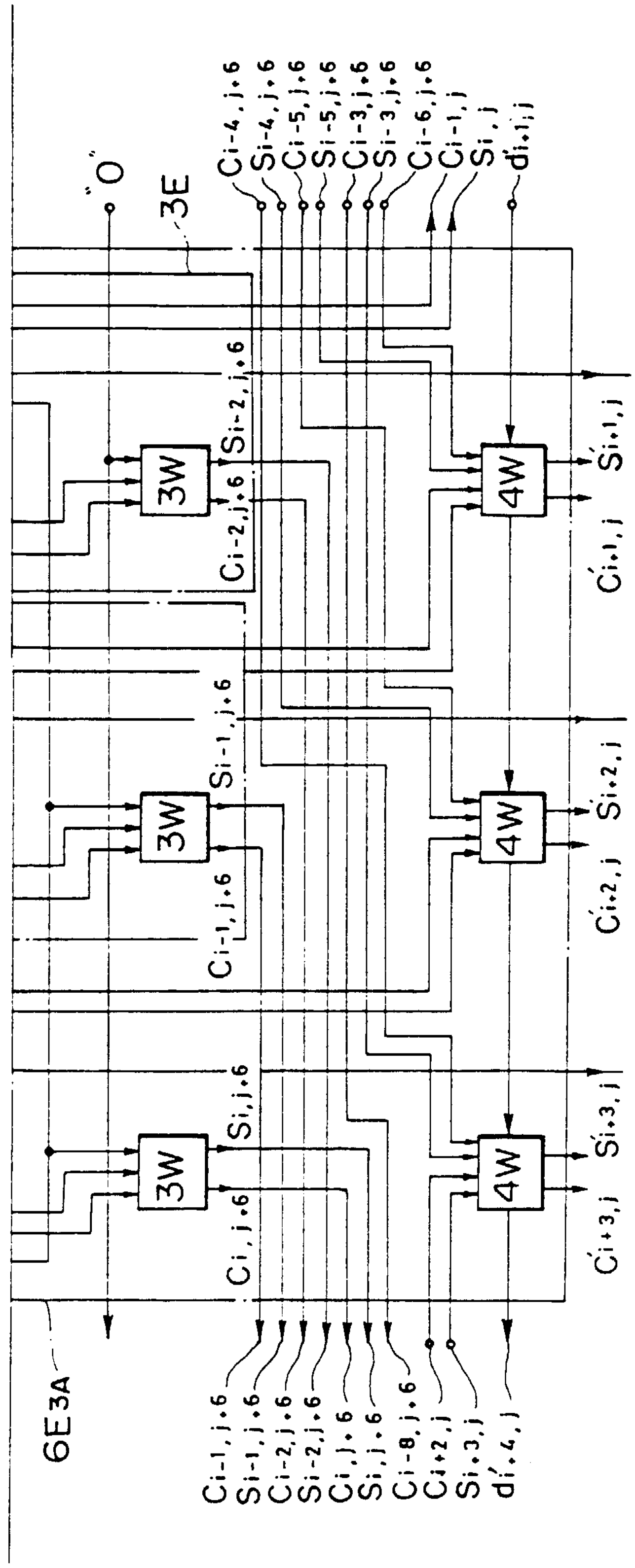
"0"
3E
6E
3A
3W
4W
Ci-4, j+6
Si-4, j+6
Ci-5, j+6
Si-5, j+6
Ci-3, j+6
Si-3, j+6
Ci-6, j+6
Ci-1, j
Si, j
di+1, j
Si-2, j+6
Ci-2, j+6
Si-1, j+6
Ci-1, j+6
Si, j+6
Ci, j+6
S'i+1, j
C'i+1, j
S'i+2, j
C'i+2, j
S'i+3, j
C'i+3, j
Ci-1, j+6
Si-1, j+6
Ci-2, j+6
Si-2, j+6
Ci, j+6
Si, j+6
Ci-8, j+6
Ci+2, j
Si+3, j
d'i+4, j

Fig. 24

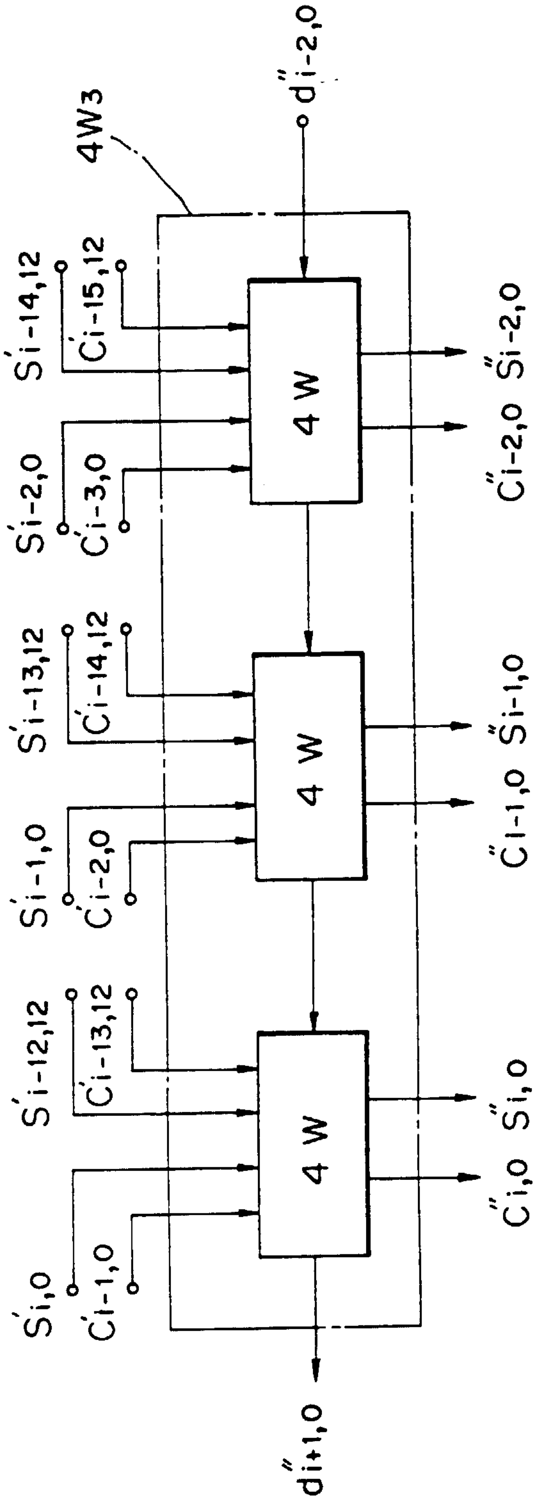
4W3
d''i-2,0
S'i-14,12
C'i-15,12
S'i-2,0
C'i-3,0
4 W
S''i-2,0
C''i-2,0
S'i-13,12
C'i-14,12
S'i-1,0
C'i-2,0
4 W
S''i-1,0
C''i-1,0
S'i-12,12
C'i-13,12
S'i,0
C'i-1,0
4 W
S''i,0
C''i,0
d''i+1,0

Fig. 25

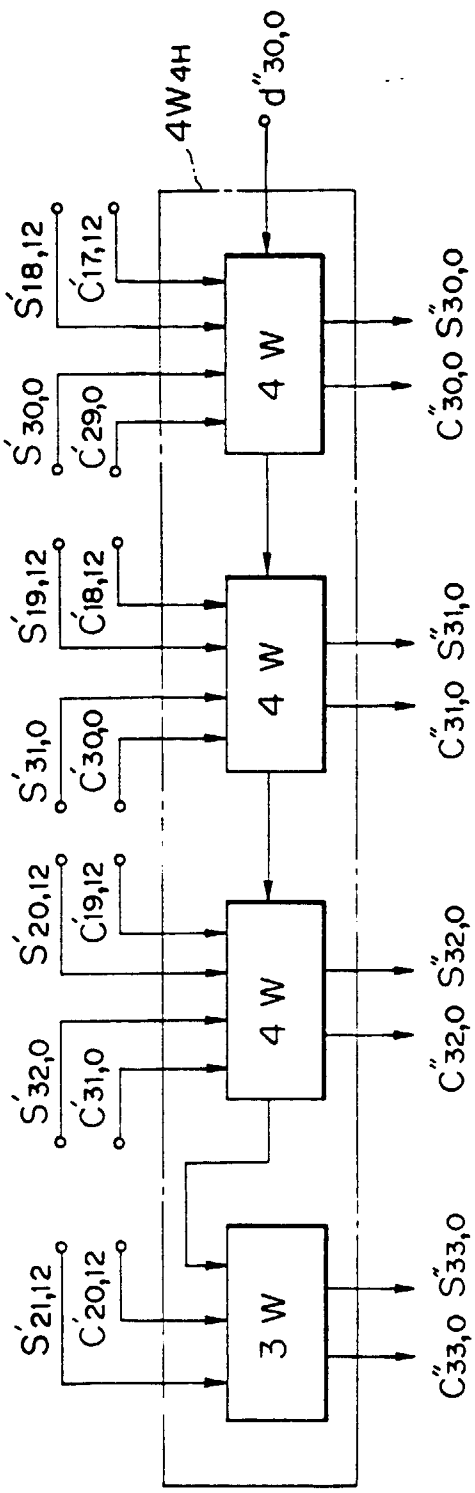
4W4H
d"30,0
S'18,12
C'17,12
S'30,0
C'29,0
4 W
C"30,0
S"30,0
S'19,12
C'18,12
S'31,0
C'30,0
4 W
C"31,0
S"31,0
S'20,12
C'19,12
S'32,0
C'31,0
4 W
C"32,0
S"32,0
S'21,12
C'20,12
3 W
C"33,0
S"33,0

Fig. 26

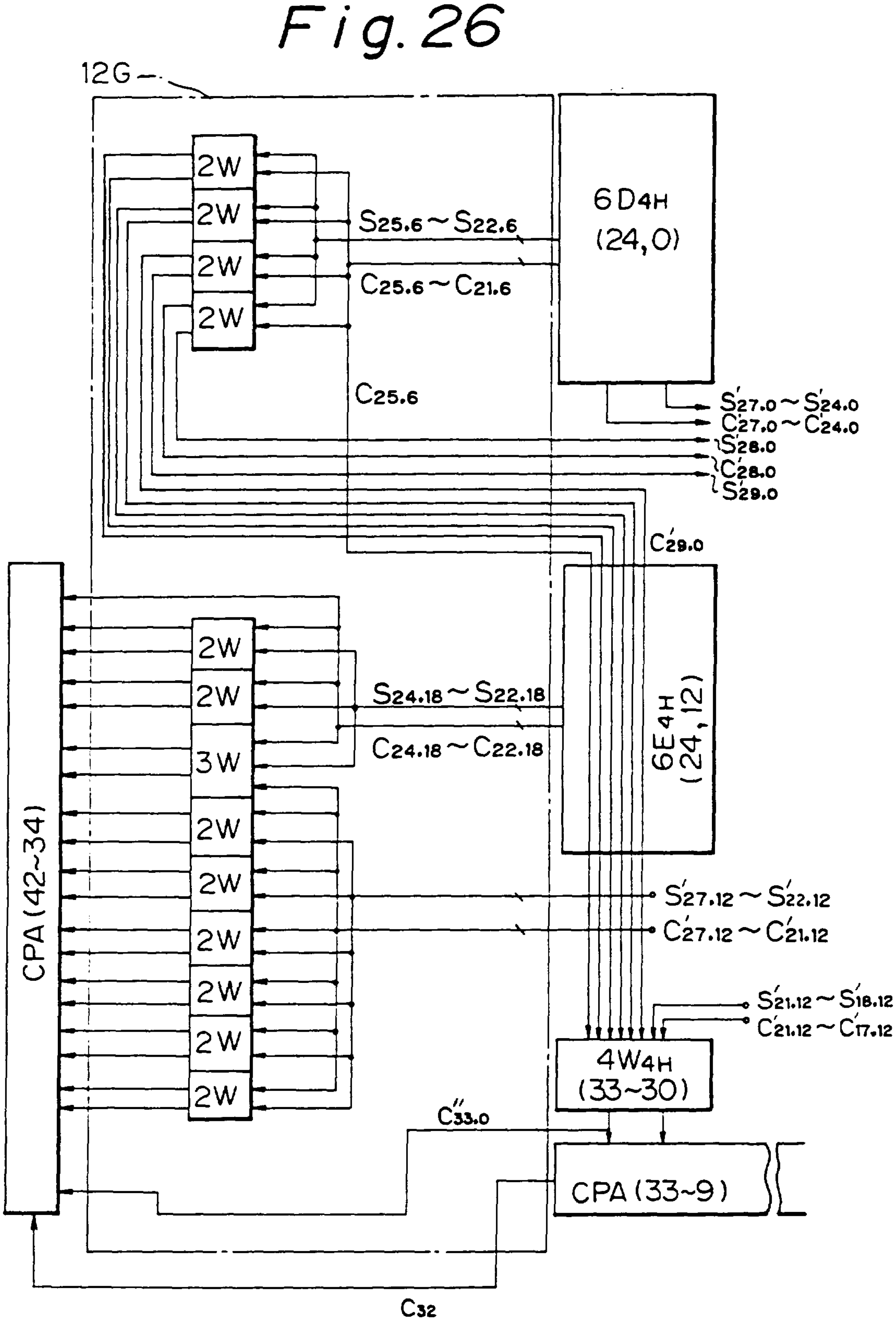
12G
2W
2W
2W
2W
6D4H
(24,0)
S25.6 ~ S22.6
C25.6 ~ C21.6
C25.6
S'27.0 ~ S'24.0
C'27.0 ~ C'24.0
S'28.0
C'28.0
S'29.0
C'29.0
CPA (42~34)
2W
2W
3W
2W
2W
2W
2W
2W
2W
S24.18 ~ S22.18
C24.18 ~ C22.18
6E4H
(24,12)
S'27.12 ~ S'22.12
C'27.12 ~ C'21.12
S'21.12 ~ S'18.12
C'21.12 ~ C'17.12
4W4H
(33~30)
C''33.0
CPA (33~9)
C32

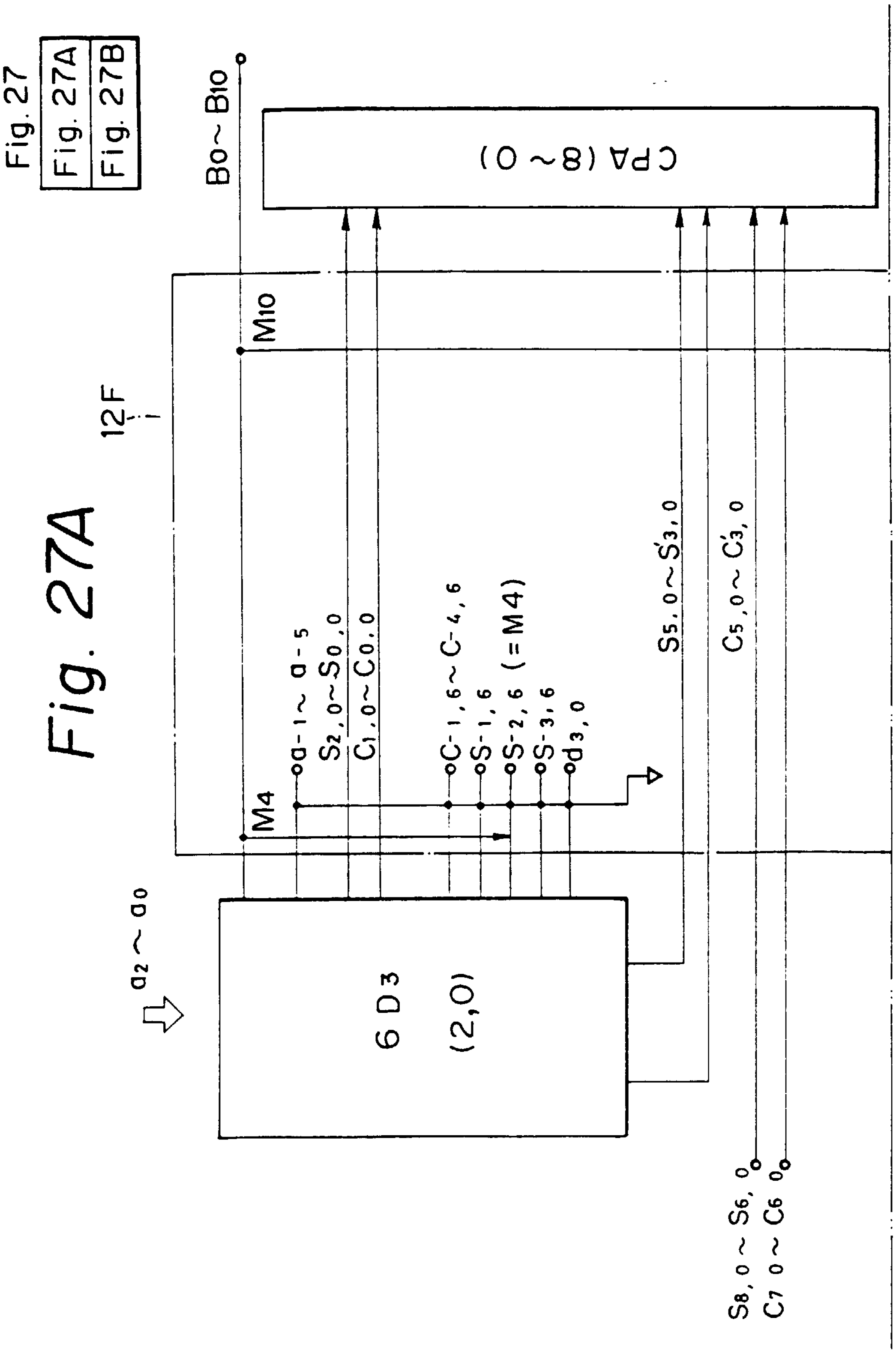
Fig. 27
Fig. 27A
Fig. 27B
B0~B10
CPA (8~0)
M10
12F
M4
a-1~a-5
S2,0~S0,0
C1,0~C0,0
C-1,6~C-4,6
S-1,6
S-2,6 (=M4)
S-3,6
d3,0
S5,0~S'3,0
C5,0~C'3,0
a2~a0
6D3
(2,0)
S8,0~S6,0
C7,0~C6,0

Fig. 27A

Fig. 27B

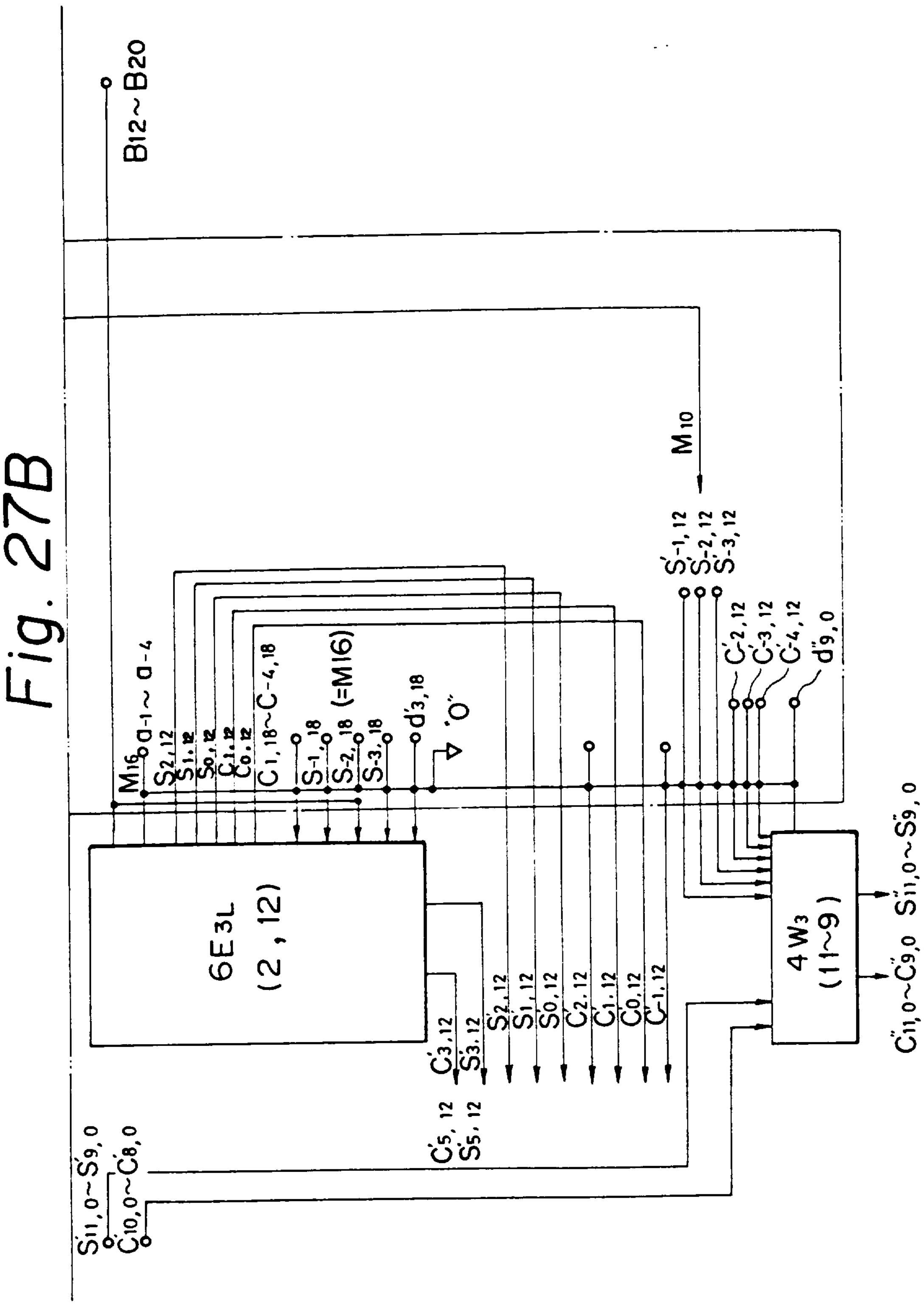
B12~B20
M10
M16
6E3L
(2, 12)
4W3
(11~9)
"0"
(=M16)
C″11,0~C″9,0
S″11,0~S″9,0
S′11,0~S′9,0
C′10,0~C′8,0
C′5,12
S5,12

Fig.28

| |
|---|
| Fig.28A |
| Fig.28B |
| Fig.28C |

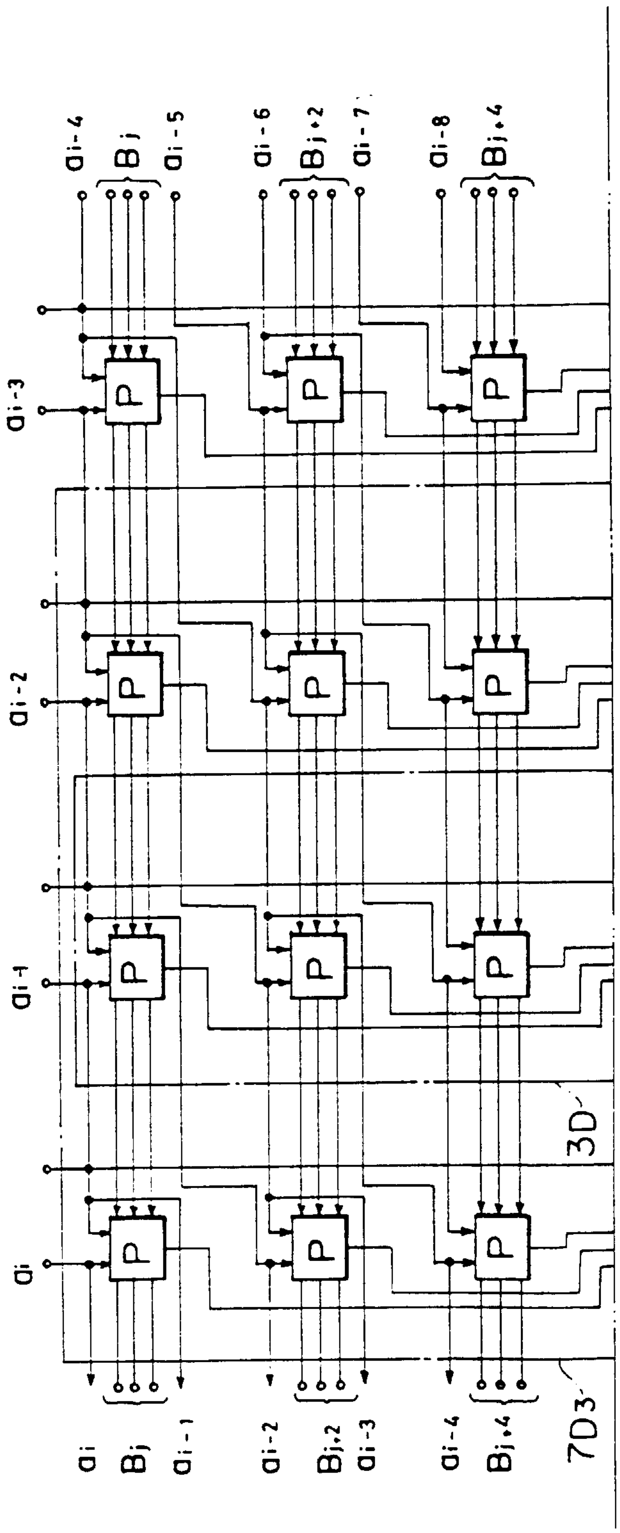


Fig. 28A

*Fig. 28B*

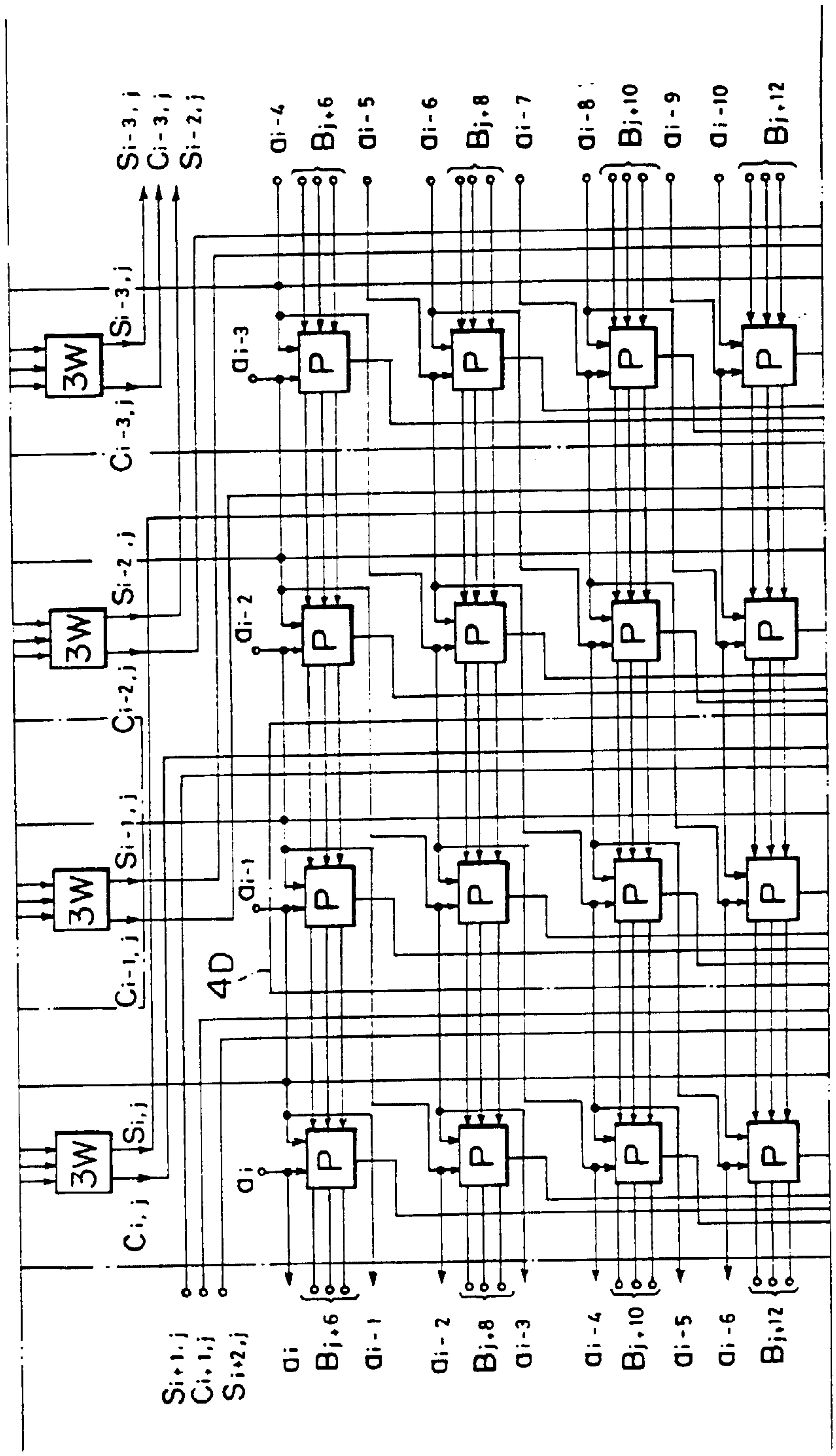

Fig. 28C

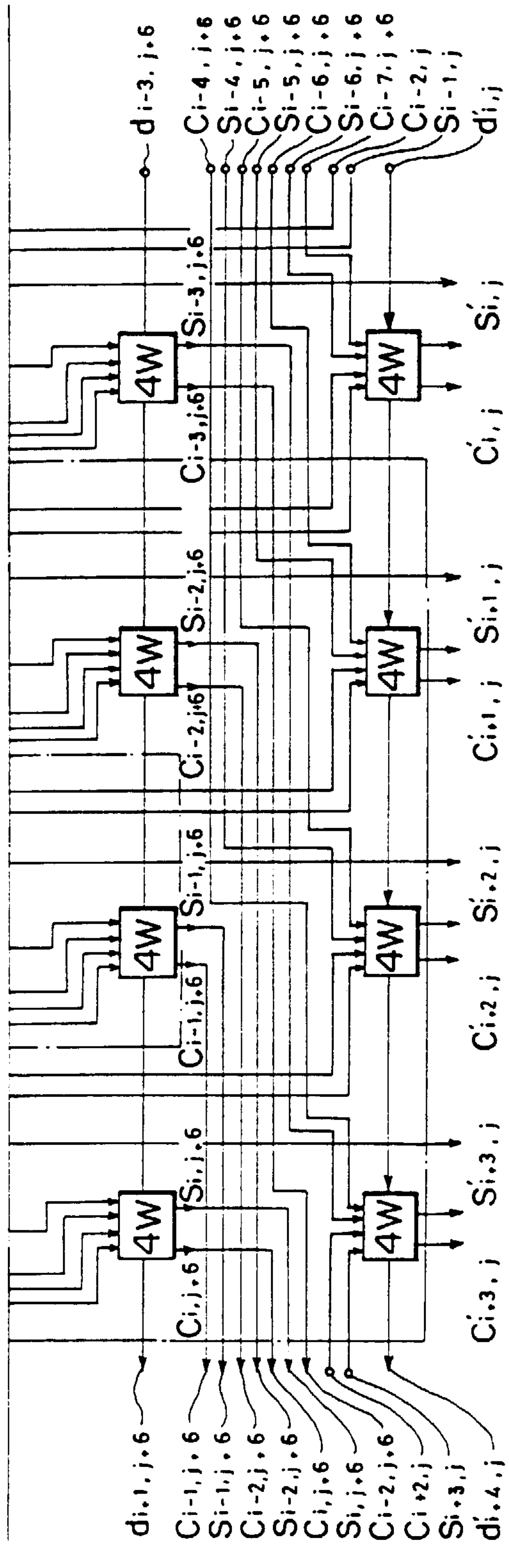
4W
4W
4W
4W
4W
4W
4W
4W
di-3, j+6
Ci-4, j+6
Si-4, j+6
Ci-5, j+6
Si-5, j+6
Ci-6, j+6
Si-6, j+6
Ci-7, j+6
Ci-2, j
Si-1, j
di, j
Si-3, j+6
Ci-3, j+6
Si-2, j+6
Ci-2, j+6
Si-1, j+6
Ci-1, j+6
Si, j+6
Ci, j+6
S'i, j
C'i, j
Si+1, j
Ci+1, j
Si+2, j
Ci+2, j
Si+3, j
Ci+3, j
di+1, j+6
Ci-1, j+6
Si-1, j+6
Ci-2, j+6
Si-2, j+6
Ci, j+6
Si, j+6
Ci-2, j+6
Ci+2, j
Si+3, j
di+4, j

Fig. 29

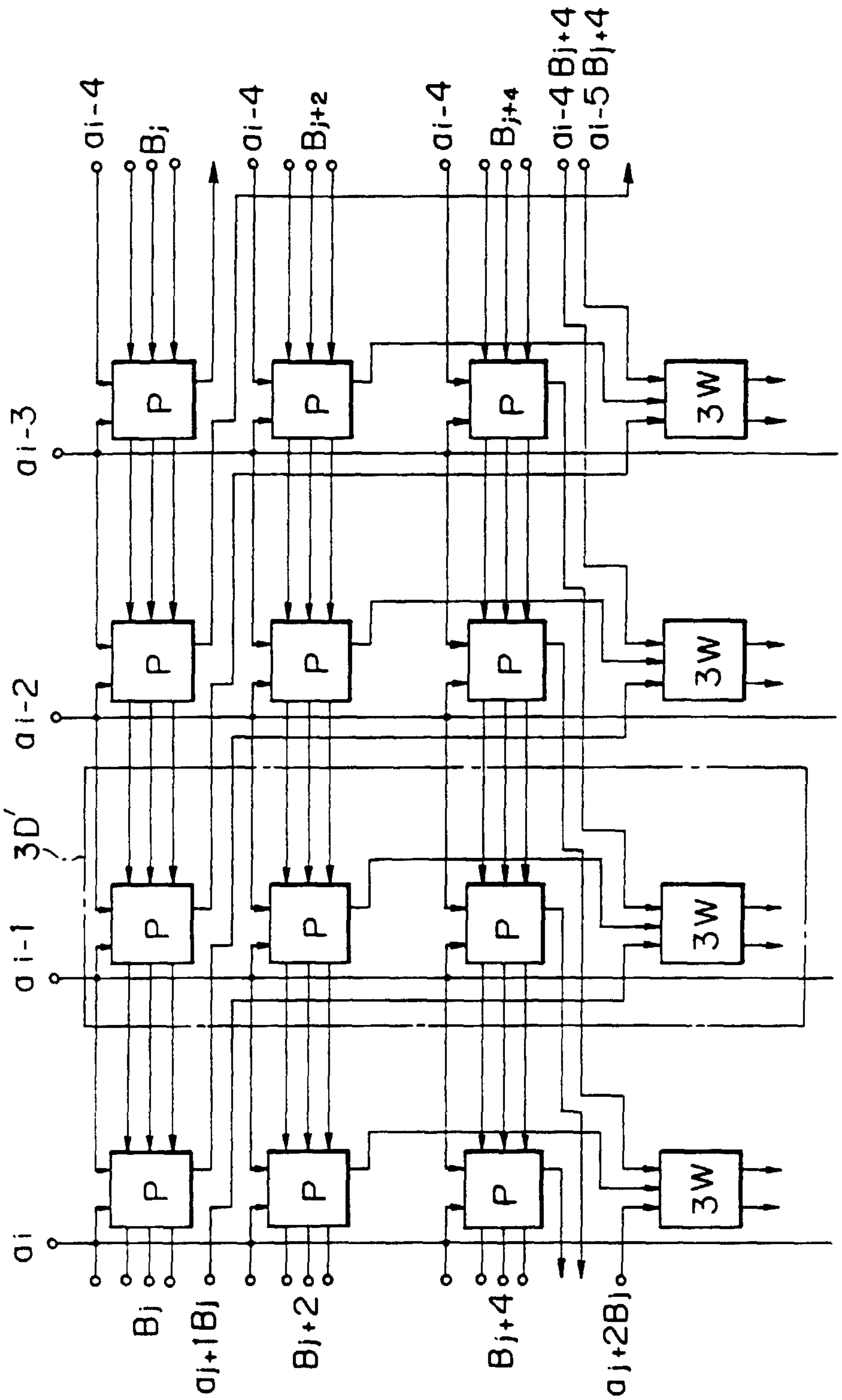
ai-4
Bj
ai-4
Bj+2
ai-4
Bj+4
ai-4 Bj+4
ai-5 Bj+4
ai-3
ai-2
3D'
ai-1
ai
P
3W
Bj
aj+1Bj
Bj+2
Bj+4
aj+2Bj

Fig. 30

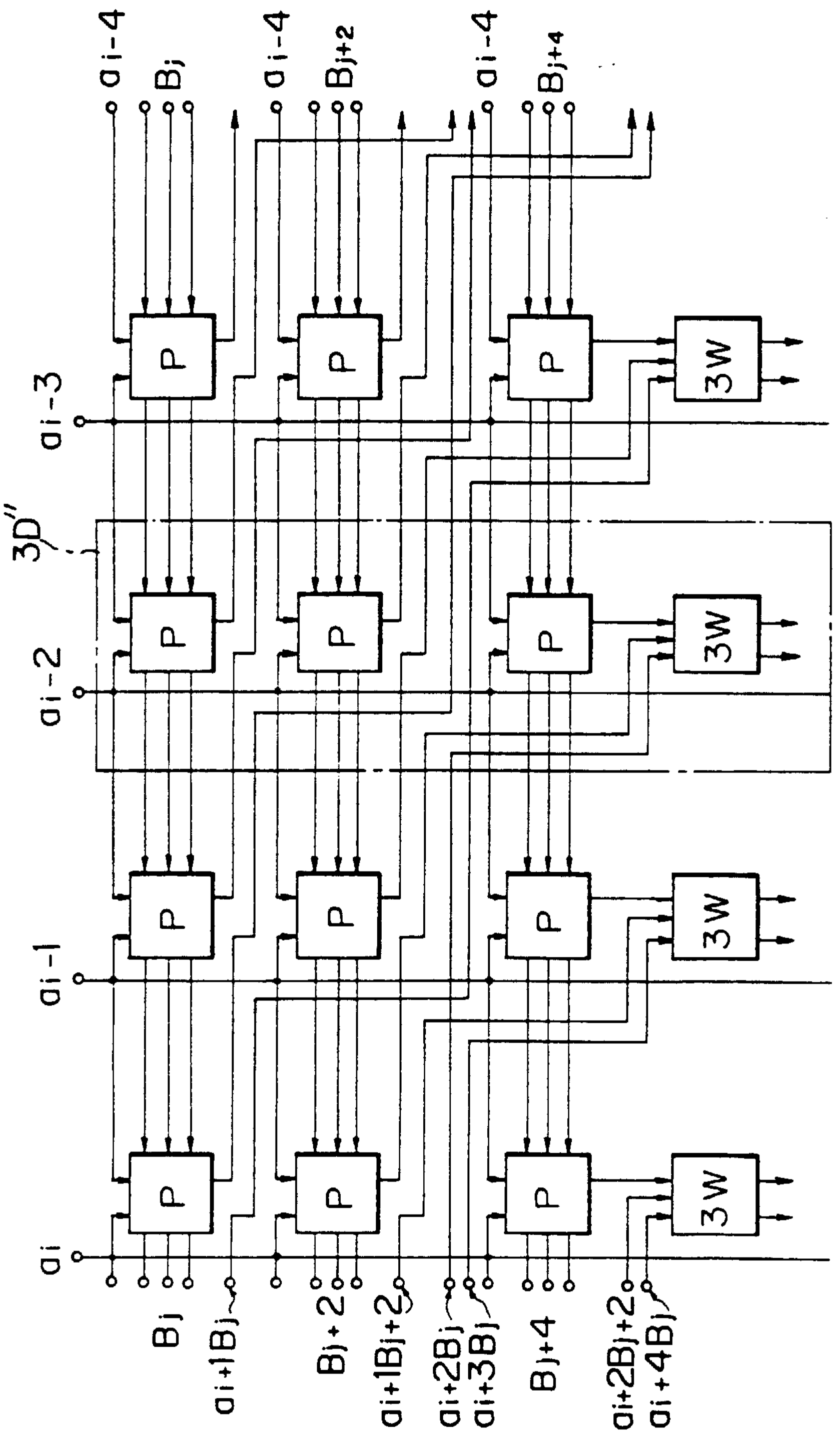

ai
ai-1
ai-2
ai-3
ai-4
Bj
Bj+2
Bj+4
3D''
P
3W
Bj + 2
Bj+4
ai+1Bj
ai+1Bj+2
ai+2Bj
ai+3Bj
ai+2Bj+2
ai+4Bj

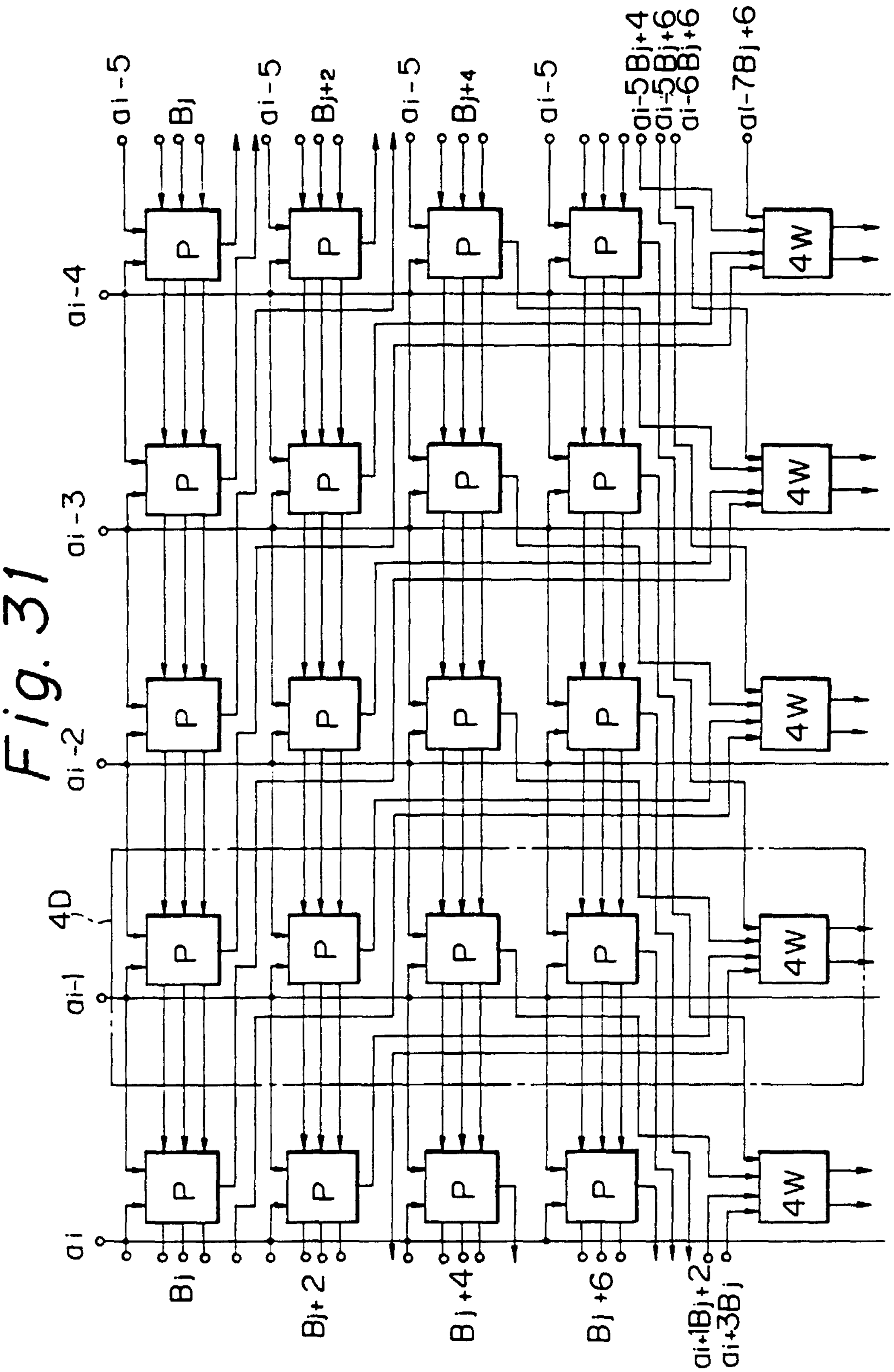
ai
ai-1
4D
ai-2
ai-3
ai-4
ai-5
Bj
Bj+2
Bj+4
Bj+6
ai-5Bj+4
ai-5Bj+6
ai-6Bj+6
ai-7Bj+6
ai+1Bj+2
ai+3Bj
P
4W

Fig. 31

Fig. 32

| Fig. 32A |
| --- |
| Fig. 32B |

Fig. 32A

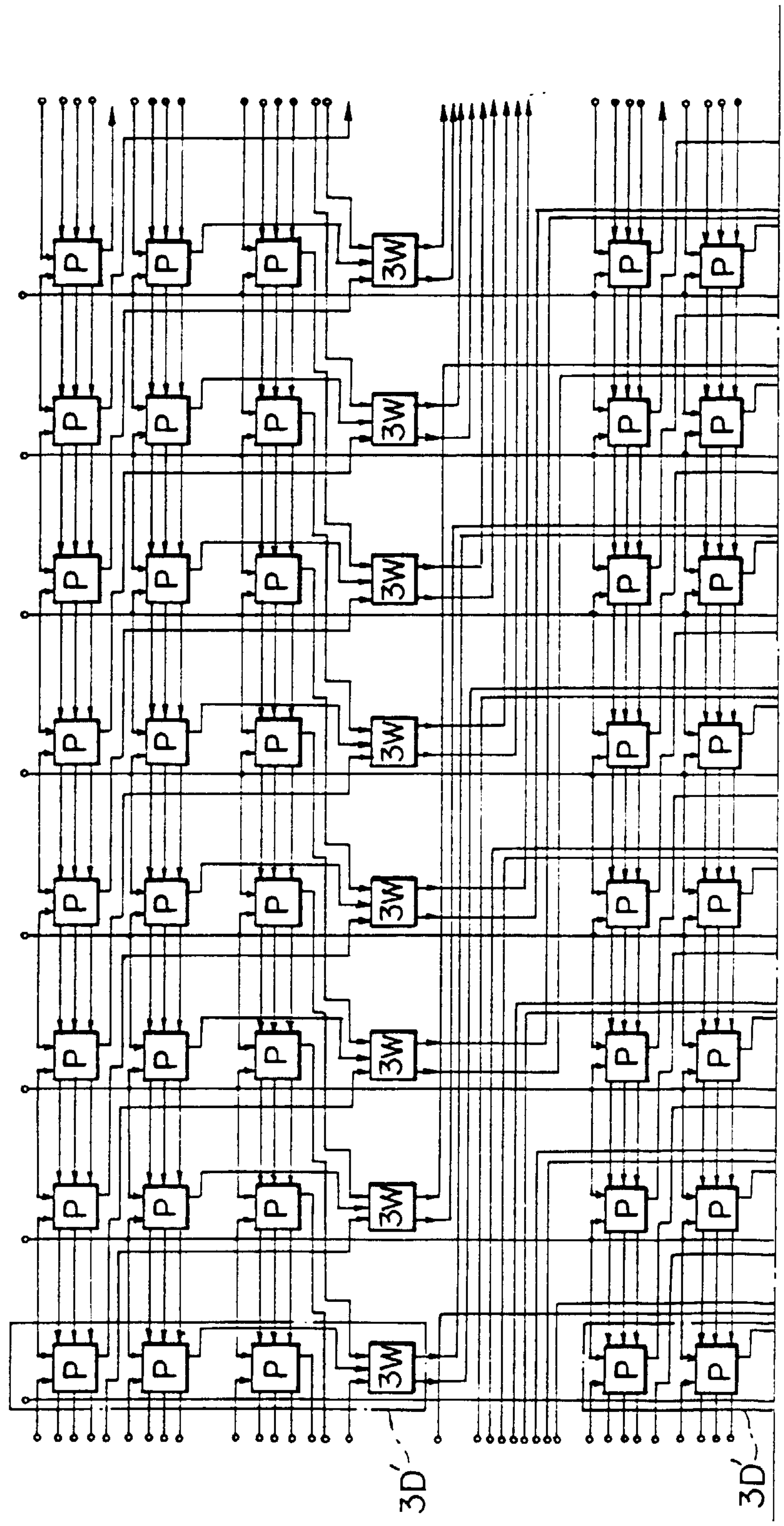

Fig. 32B

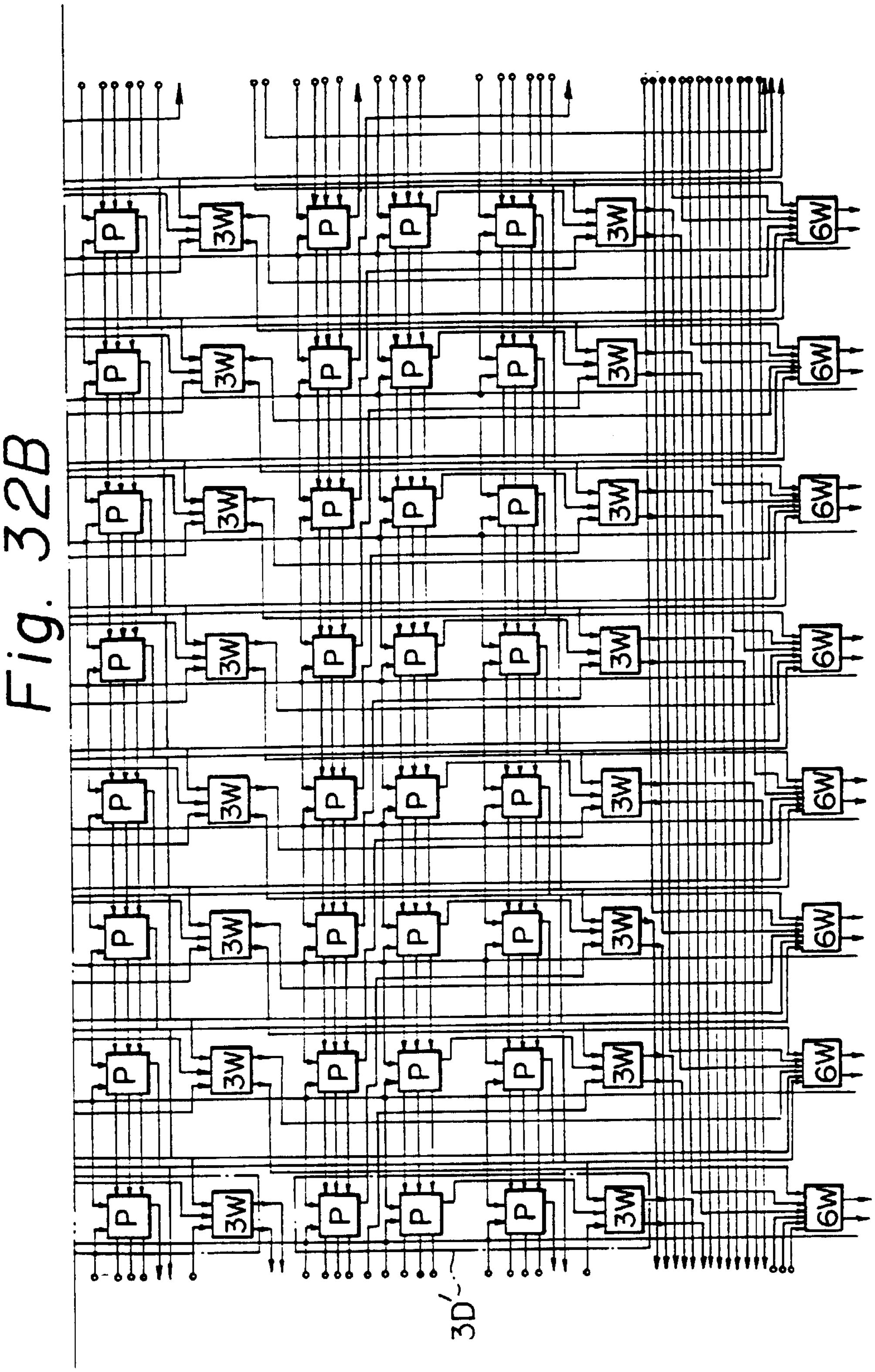

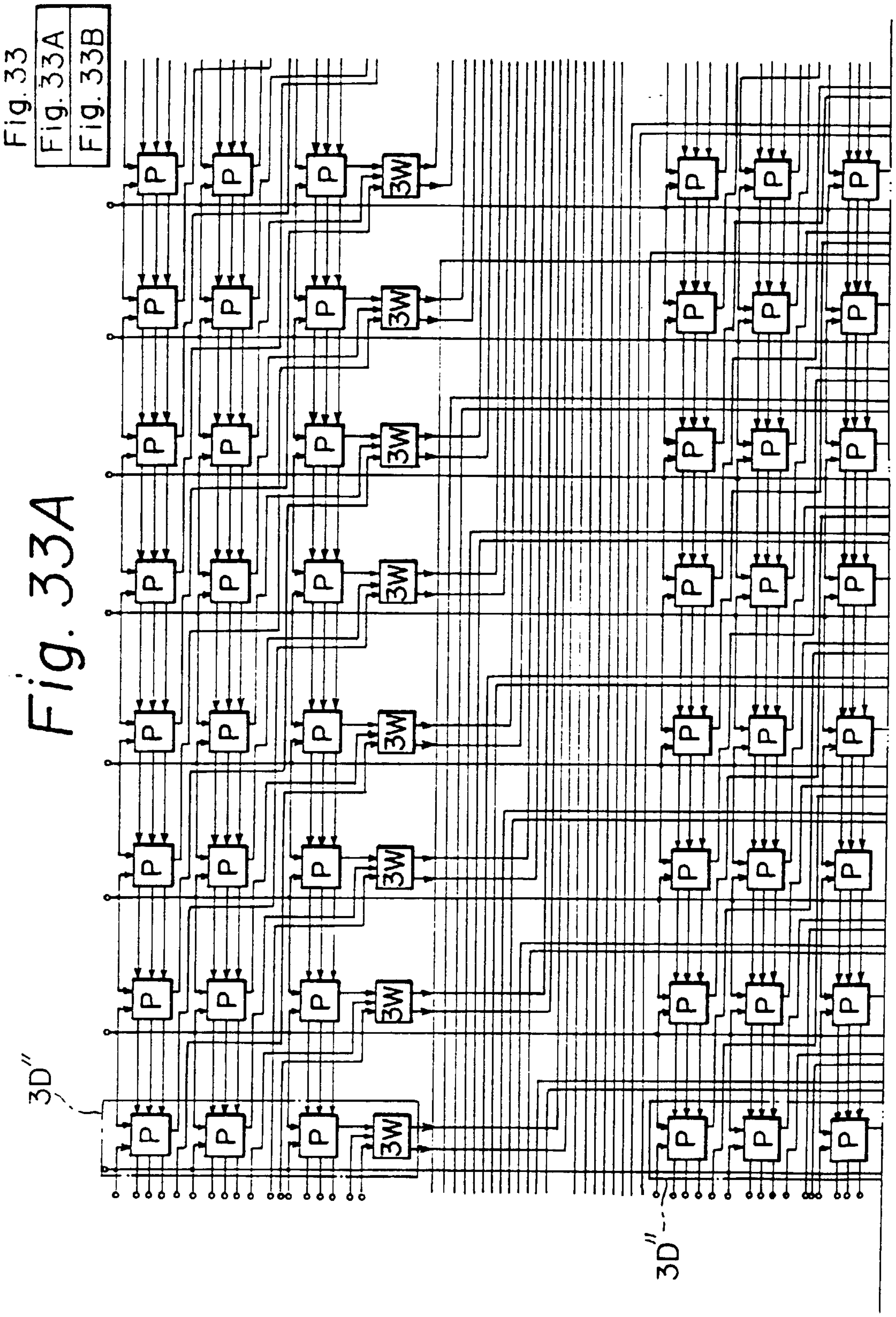


Fig. 33A

Fig. 33B

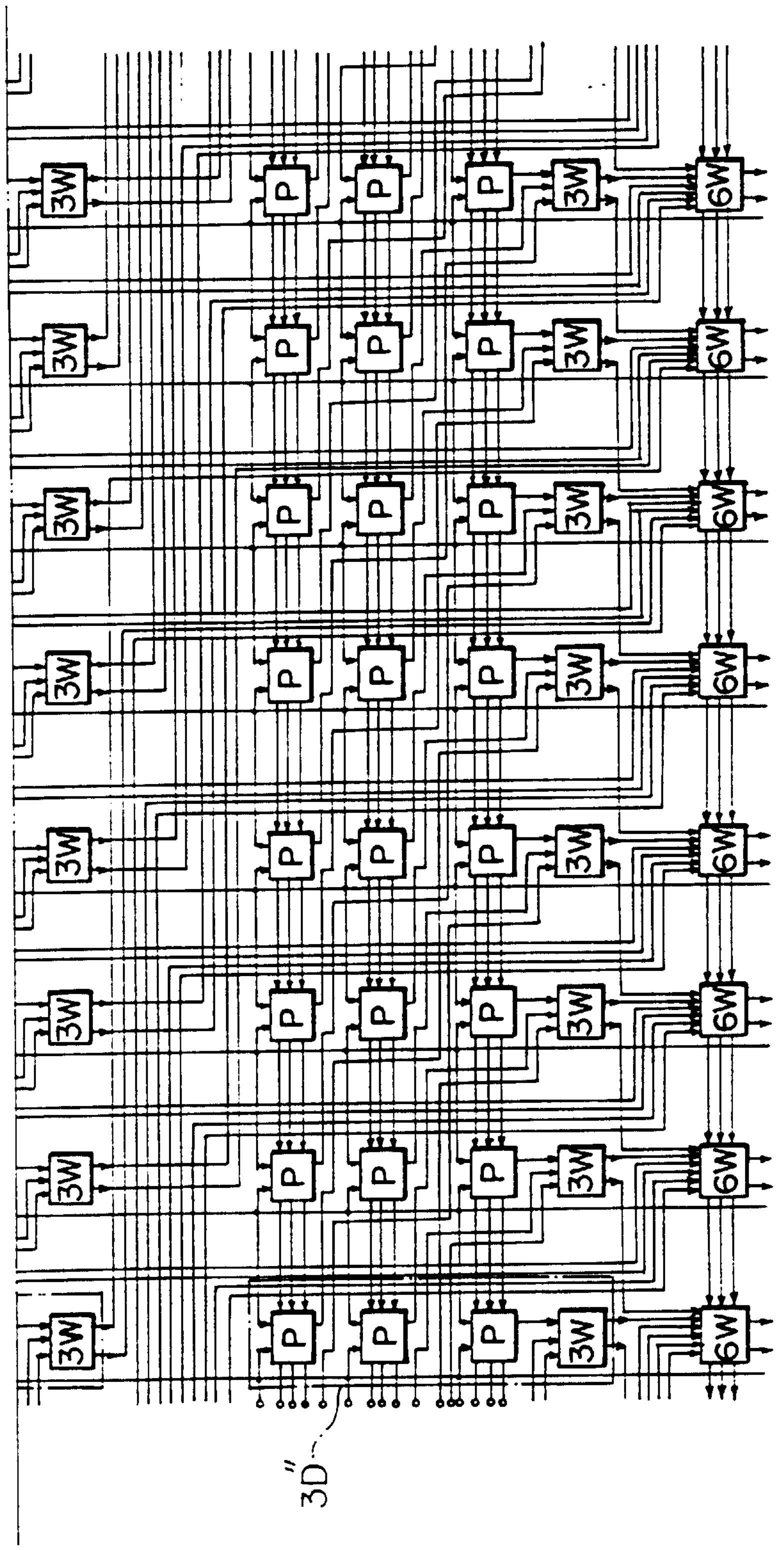

Fig. 34

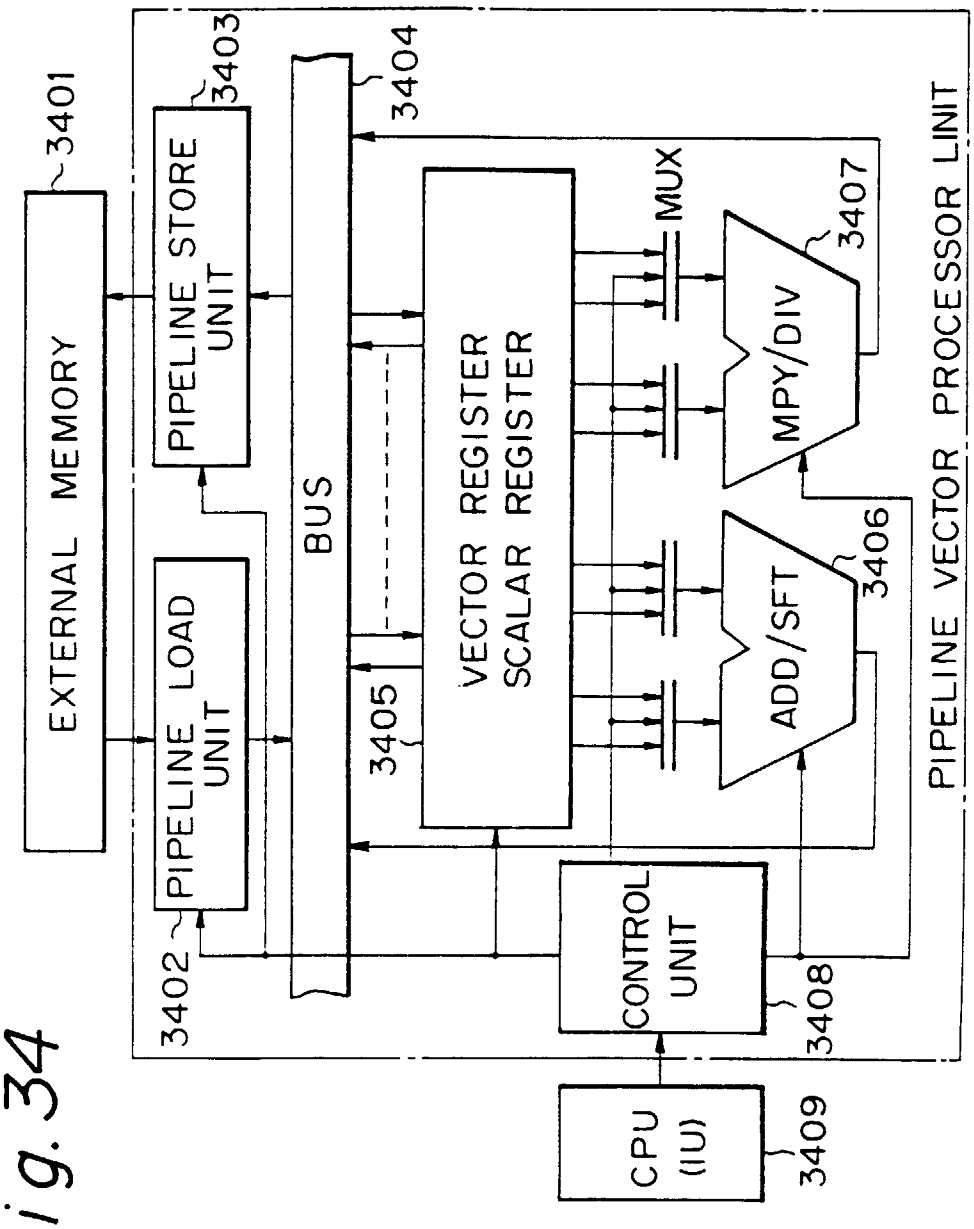
EXTERNAL MEMORY
3401
PIPELINE STORE UNIT
3403
PIPELINE LOAD UNIT
3402
BUS
3404
VECTOR REGISTER
SCALAR REGISTER
3405
MUX
MPY/DIV
3407
ADD/SFT
3406
CONTROL UNIT
3408
CPU (IU)
3409
PIPELINE VECTOR PROCESSOR LINIT

Fig. 35

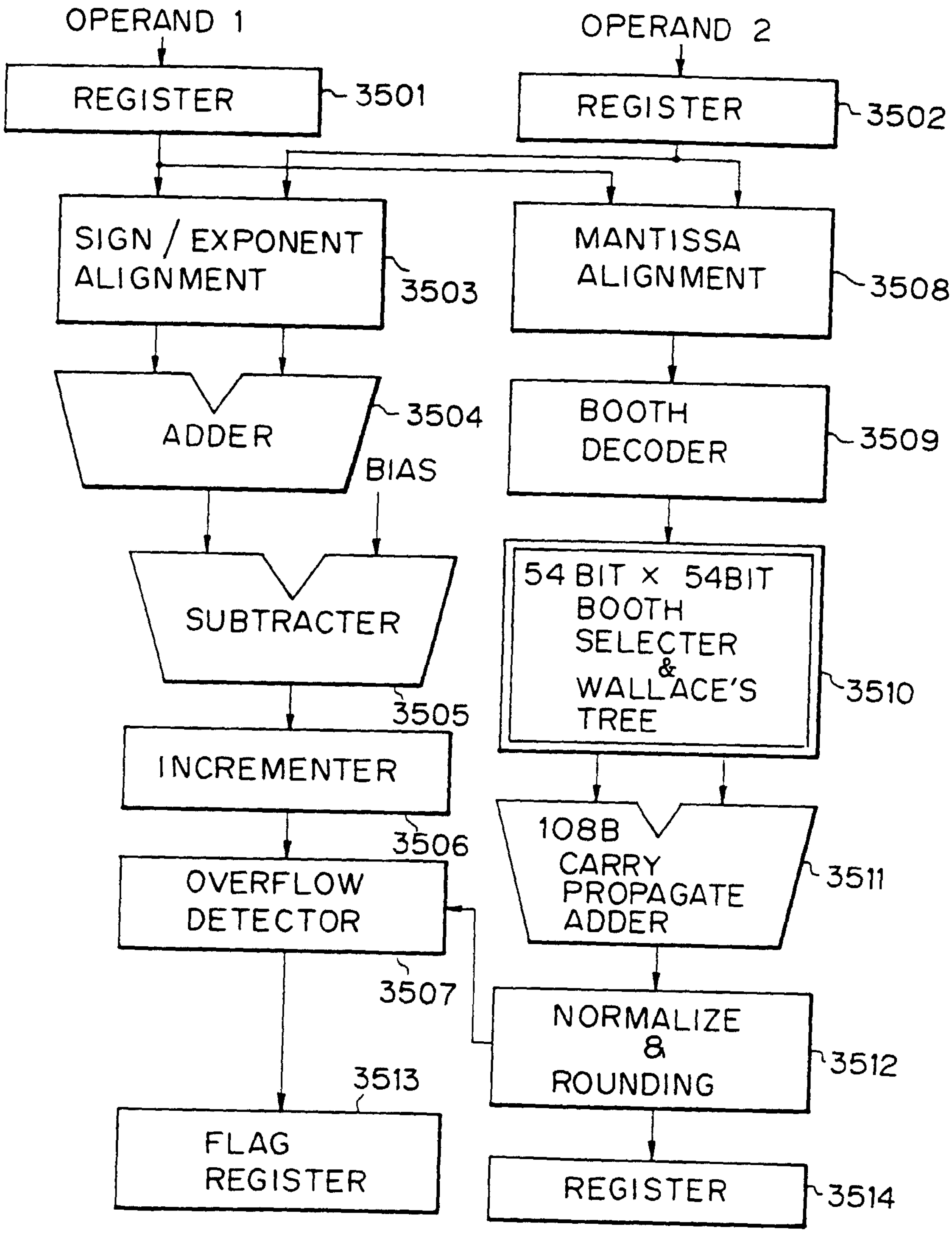
OPERAND 1
OPERAND 2
REGISTER
3501
REGISTER
3502
SIGN / EXPONENT ALIGNMENT
3503
MANTISSA ALIGNMENT
3508
ADDER
3504
BIAS
BOOTH DECODER
3509
SUBTRACTER
3505
54 BIT × 54BIT BOOTH SELECTER & WALLACE'S TREE
3510
INCREMENTER
3506
108B CARRY PROPAGATE ADDER
3511
OVERFLOW DETECTOR
3507
NORMALIZE & ROUNDING
3512
3513
FLAG REGISTER
REGISTER
3514